# EUROPEAN PATENT SPECIFICATION

(11) **EP 0 877 967 B1**
(45) Date of publication and mention of the grant of the patent: **13.04.2005**
(21) Application number: 97902987.3
(22) Date of filing: 21.01.1997
(51) Int. Cl.: G02B 27/26, G02B 27/22, G03B 21/00, H04N 9/47, H04N 13/04, H04N 15/00

(54) **SYSTEMS FOR THREE-DIMENSIONAL VIEWING AND PROJECTION**
STEREOSKOPISCHE BETRACHTUNGS- UND PROJEKTIONSSYSTEME
SYSTEMES DE VISUALISATION ET DE PROJECTION TRIDIMENSIONNELLES

(30) Priority: 22.01.1996 US 589510; 03.06.1996 US 657227; 16.10.1996 IL 11943796
(43) Date of publication of application: 18.11.1998
(73) Proprietor: 3ALITY, INC., New York, New York 10017 (US)
(72) Inventor: Kleinberger, Paul, Jerusalem 92545 (IL); Kleinberger, Ilan, Jerusalem 92545 (IL)
(74) Representative: Ablewhite, Alan James
(86) International application number: PCT/US1997/000778
(87) International publication number: WO 1997/026577

(56) References cited:
- EP-A- 0 595 023
- DE-A- 4 123 895
- US-A- 2 218 875
- US-A- 2 631 496
- US-A- 2 820 395
- US-A- 2 974 562
- US-A- 4 111 695
- US-A- 4 719 482
- US-A- 4 829 365
- US-A- 5 113 285
- US-A- 5 264 964
- US-A- 5 537 144

## Description

### FIELD AND BACKGROUND OF THE INVENTION

The present invention relates in general to systems for three-dimensional viewing and projection. More particularly, the present invention relates to systems for three-dimensional viewing and projection which can be used by one or more viewers to obtain a perception of depth while viewing still or motion pictures needless of use of eyeglasses.

Various attempts have been made over the years to develop and implement methods and apparatuses to represent scenes and objects in a manner which produces a sense of depth perception, known in the art as three-dimensionality.

Aside from methods involving rotating objects, rotating mirrors, and the like (usually classified as 'depth illusion' in the American patent classification scheme), and methods involving holographic techniques or using coherent light sources, the methods used involve a variety of schemes for transporting two different images to a viewer's left and right eyes. The two different images are typically produced by two cameras placed side by side in a manner which in turn simulates the vision of two human eyes.

The mammalian vision system, as well known, employs the differences between a given scene as perceived by the right eye and the same scene as perceived by the left eye, to extract information regarding the distance of objects within the scene relative to the viewer. Since objects close to the viewer appear displaced to the right in the view seen by the left eye, and the very same objects appear displaced to the left in the view seen by the right eye, while more distant objects show less such displacement and most distant objects show no such displacement at all, it is possible to calculate the distance of objects within the scene as a function of the amount of lateral displacement observed, and this, apparently, is what the human visual system does in our normal binocular (i.e., three-dimensional) vision of the world.

When a pair of images containing an appropriate parallax information is presented, one image to the left eye and the other to the right eye, a similar experience of apparent depth perception results. In the following, an image intended for the left eye is referred to as a 'left image', and an image intended for the right as a 'right image'.

The prior art of three-dimensional viewing may be broken into categories as follows. The first category includes hand-held viewing apparatuses (known in the art as 'viewers') of various sorts, based on lenses, prisms, mirrors, or combinations thereof, which viewers are held close to the eyes and deliver an appropriate image to each of the eyes. The second category includes methods aimed at viewing images without optical apparatus held next to the eye (i.e. without eyeglasses and/or viewers), which methods are based on interposing a plurality of lenticular elements in the display. The third category includes systems involving eyeglasses worn by the viewer, which eyeglasses filter light according to its polarization. The fourth category includes systems involving eyeglasses worn by the viewer, which eyeglasses filter light according to wavelength (i.e., color). The fifth category includes systems involving eyeglasses worn by the viewer and employing switching mechanisms capable of rapid on/off switching (i.e., shutter systems) of optical elements. The sixth category includes side-by-side implementations such as random-dot stereograms. And finally, the seventh category includes methods employing flat screens for viewing images without a need for optical apparatus to be held next to the eye (i.e. without eyeglasses and/or viewers) and not involving lenticular surfaces. These methods are based primarily on interposing physical impediments arranged in a flat screen placed between the viewer and the image to be viewed, which impediments hide part of an image from one eye while allowing it to be seen by the other eye.

Each of the above listed categories has its associated inherent disadvantages as follows.

As far as the first category is of concern, viewing apparatuses of the sort which require lenses, prisms, or mirrors held in proximity with the viewer's eyes, are generally less convenient than alternatives which do not require special eyeware and do not require the viewer using them to hold the apparatus or to approach his eyes to special eyepieces. As the invention here disclosed involves no necessary use of lenses, prisms, or mirrors, and does nor require the viewer to look through a viewing apparatus placed or held near the eyes, it is basically dissimilar and advantageous over apparatuses thus categorized.

As far as the second category is of concern, lenticular systems are relatively difficult and expensive to manufacture for high quality image presentation due to the amount of precision associated with their production, if high-resolution images are desired Moreover lenticular systems will always present images having a lower resolution than the resolution of which the display device to which the lenticular array is attached to is inherently capable. Evidently, lenticular systems are not well adapted for viewing systems such as computer displays and television and are therefore not in wide use. U.S. Pat. No. 4,957,351 to Shioji discloses an example of the second category, describing the use of a lenticular system, in which alternating lines representing parts of left and right images are refracted, each line through an associated lens, which directs it selectively to the right or left eyes.

As far as the third through fifth categories are of concern, they all require the use of eyeglasses or an equivalent by the viewer. The term 'eyeglasses' is referred to herein in a general sense of an optical apparatus having left and right eyepieces held close to the eyes of the viewer in such a way that substantially all the light entering the left eye is subject to an influence imposed by the left eyepiece, and all the light entering the right eye is subject to an influence imposed by the right eyepiece. As mentioned, three-dimensional systems thus categorized all require the use of eyeglasses, which select, whether by color (wavelength), timing (shutter), or polarization, the images reaching each of the eyes. These categories include apparatuses having a form of conventional eyeglasses (e.g., ones used for reading), but also include devices such as, but not limited to, pilot helmets having head-up displays (HUD), virtual-reality headgears and similar designs. As mentioned, systems falling into these categories share a common disadvantage, they all require an inherent use of special eyeglasses or a headgear. The necessity for optical apparatus held near the eyes subtracts from the pleasure, comfort and naturalness of the experience of viewing the display, and may, depending on the system used, add significantly to the expense.

As far as the third category is of concern, polarizing eyeglasses deal with arrangements in which a display system polarizes light derived from the left image in a given particular orientation and polarizes light derived from the right image in another particular orientation. Accordingly, the viewer wears a set of polarizing filters one for each eye. The filter of the left eye passes light polarized in the particular orientation in which the left image was polarized, whereas the filter of the right eye passes only light polarized in the particular other orientation in which the right image was polarized. Consequently each eye sees only the image appropriate to it and does not see the image which is inappropriate to it, thus a three-dimensional image is viewed by the viewer. U.S. Pat. No. 5,113,285 to Franklin discloses a system using polarizing eyeglasses to provide the left and right images to the appropriate eyes. U.S. Pat. No. 4,719,507 to Bos discloses a system employing polarizing eyeglasses to distinguish between the left and right images, and also uses switchable rotating means to determine, in a temporal sequence, which image receives which polarization. These and similar systems have the disadvantage of requiring use of polarizing eyeglasses. Certain further disadvantages characterize systems which use polarizing glasses yet do not use switching means (c.f., fifth category). U.S. Pat. No. 5,050,961 to Venolia, provides an example, and is representative of various others. According to the invention of Venolia, the display area is divided into subregions with left image and right image segments. Further according to Venolia, small polarizing subunits process the light emanating from each subregion of the display, and the division of the image into left and right image areas coincides with the orientation of the polarizing means employed in a first layer, such that all the light emanating from the right image is polarized in a first orientation, while light emanating from the left image is polarized in a second orientation perpendicular to the first orientation. The user wears polarizing eyeglasses, so that each eye sees the appropriate image segments and only those. An inherent disadvantage associated with such schemes is that part of the display surface is blocked from the view of each eye. In better cases where the image segments are small the blockage is experienced not as holes in the picture but as a graininess or low resolution of the three-dimensional image viewed. On the other hand, systems aimed at ensuring that all areas of the display space will be used in representing each of the left and right images (sequentially if not simultaneously) tend to be somewhat complex and are potentially relatively expensive to manufacture. U.S. Pat. No. 5,083,851 to MacDonald provides an example of a system with undoubted qualities but which might be expensive to implement Yet, a system which could provide similar services in a comparatively simple and inexpensive manner would be of service in many applications.

For sake of completeness it is worthy to mention the artificial three-dimensional experience best known to the public. This is the traditional three-dimensional movie (i.e., 3D-movie), in which a projection system projects full images of the right and left images simultaneously onto a common display (typically a reflective movie screen). Such traditional 3D-movies are presently displayed in for example Disneyland. This projection system has the advantage that each eye sees a continuous and uninterrupted image. Yet, this projection system has the disadvantages of (i) requiring the viewer to wear eyeglasses, and (ii) requiring special projection devices which involve two projectors (or a specially designed single projector having the effect of two projectors) simultaneously projecting related pairs of images onto the screen. Thus, this method calls for special projection equipment and, since it requires two separate light sources, it is not adaptable to standard computer displays nor to television displays.

As far as the fourth category is of concern, optical filters result in a right image made up of and substantially limited to particular wavelengths passed by a filter covering the right eye, and in a left image made up of and substantially limited to particular different wavelengths passed by the filter covering the left eye. Thus, in addition to the disadvantage of requiring the use of eye glasses, these systems prevent the use of natural color images.

As far as the fifth category is of concern, shutter systems are mechanisms consisting of elements capable of either blocking light or passing light, or of elements capable of rotating the orientation of polarized light (collectively referred to herein as switchable means). In both cases the mechanisms are capable of being switched on/off rapidly. In use, the switching of the mechanisms is coordinated with changes in the images being displayed, usually in such manner that the left image is displayed when the left eye's vision of the screen is enabled and the right eye's vision is blocked, and at a later time the right image is displayed when the right eye's vision is enabled and the left eye is blocked, wherein switching is intentionally rapid enough so that the persistence of human vision leaves the viewer with an impression of a continuous image. It should be noted that if switching would have been slower, an impression of flickering would have resulted. Accordingly, U.S. Pat. Nos. 5,002,387 to Baljet; 5,083,851 to MacDonald; and 5,245,319 to Kilian, provide examples of systems characterized by alternating eye 3D-glasses, alternating between left and right lens transmissiveness and synchronizing the left lens transmissiveness to left images and right lens transmissiveness to right images. Yet, these methods involve eyeglasses obligatorily worn by the viewer. This inherent obligation however is a primary disadvantage. Additional disadvantages of these systems include the complexity and thus expense of the shutter eyeglasses which must be connected to the display apparatus and simultaneously controlled, or alternatively (e.g. MacDonald) the increased complexity and expense of the display hardware itself. To avoid the use of complex eyeglasses U.S. Pat. No. 4,719,507 to Bos discloses an arrangement which allows use of passive polarizing filters in the eyeglasses, putting the more complex and high-voltage apparatus into the display device. U.S. Pat. No. 4,792,850 to Liptoh discloses a similar arrangement using circular light polarization. Nevertheless, these solutions have the disadvantage of making the entire screen appear and disappear to each eye during each cycle, which tends to increase the impression of flickering of the screen. As before, the principle disadvantage of the systems described by Bos and Liptoh is their dependence on eyeglasses worn by the viewer.

As far as the sixth category is of concern, side-by-side implementations such as for example random dot stereograms are essentially methods for utilizing parallax information, are difficult to see for many viewers, convey only simplified images, and cannot convey color. According to these methods a simple colorless image is combined with a complex background pattern, the background pattern substantially repeating itself at in interval less than the interpupillary distance of human observers, and the pattern being modified by the simplified image in such a way that elements of the simple image intended to be seen as being closer to the viewer cause corresponding areas of the repeating pattern of the complex background to be displaced towards each other. That is, if for example the background pattern would in large part repeat itself every inch, then an area representing a close object repeats itself at a distance of 19/20 inch, and an area intended to appear further away repeats itself at a distance of 21/20 inch. The viewer, often with some difficulty, views the stereogram by directing his right eye to some given area of the repeating pattern, and his left eye to an adjacent area of the repeating pattern, to the left of the point seen by the right eye. Since the patterns substantially repeat themselves, the viewer is (usually) able to coalesce the images. Thus the left eye is provided with a left image which is different (since it originates e.g. an inch away on the stereogram) from the right image. The eyes then have the ability to extract the information based on the consistent differences between the two images, and understand it in terms of the simplified scene which is in fact included in the stereogram only as modifications in the position of elements of the background pattern. Normal images have also been included in published stereograms, for example in the "Magic Eye" series of books published by Michael Joseph Ltd., London. In this case sets of normal full-color images with differing parallax information are included in the published image in such a way that they can be viewed by the viewer's directing his eyes in the same manner as he directs them for viewing a stereogram, namely by directing his right eye to a given image, and directing his left eye to a similar neighboring image which is physically next to the first, and differs from it in that it contains a different parallax view of the same scene.

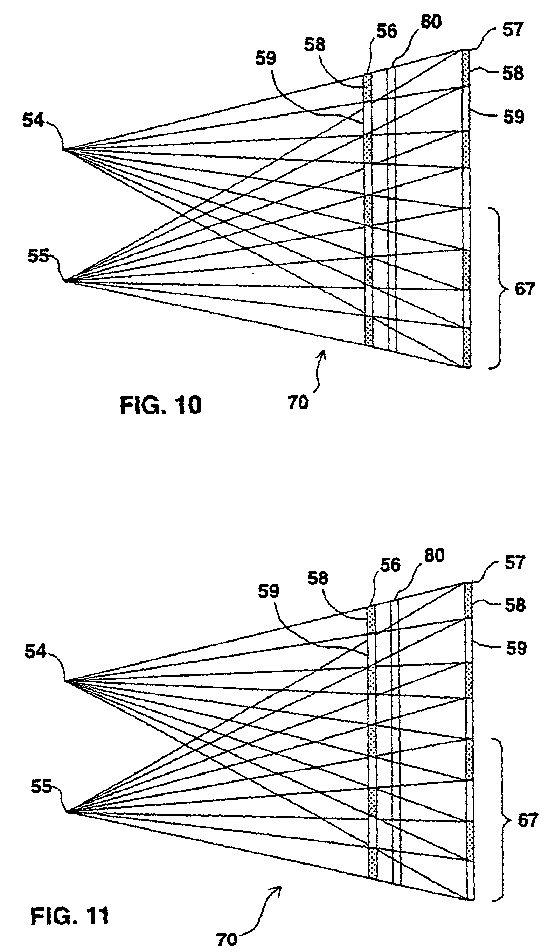

As far as the seventh category is of concern, flat screens for three-dimensional viewing are disclosed in several recent patents. These patents disclose systems in which grids consisting of transparent sections interspersed with opaque sections are placed in various relationships to the image being seen or projected, the image is an interspersed composition of regions taken from the left image (i.e., to be eventually seen only by the left eye of the viewer) and regions taken from the right image (i.e., to be eventually seen only by the right eye of the viewer), the grid or grids being placed in positions which hide regions of the right image from the left eye and hide regions of the left image from the right eye, while allowing each eye to see sections of the display which are showing regions originating from its appropriate image. For example, U.S. Pat. 4,671,632 to August, discloses a system for using a "line screen", August's system includes vertical blocking portions alternating with vertical transparent portions, and a second blocking screen parallel to the first line screen, also composed of blocking portions and transparent portions. However, August's embodiments (as described in Figures 11, 12, and 13 therein) suffer from a major drawback that large percentages of the field of view of each eye (well more than half, according to August's drawings) are hidden from the eye at any given time, yielding a grainy low-resolution image. U.S. Pat. No. 5,264,964 to Faris, discloses a method for creating a parallax barrier by placing pairs of small polarizing regions one immediately above the other and of opposite polarization orientation, thus creating opaque regions, and also describes an embodiment in which simple opaque regions are used in place of the pairs of polarizing regions. In both cases a barrier is created with transparent regions alternating with opaque regions, with size and spacing adjusted such that the left and right eyes looking through the transparent regions of the barrier each sees a different pixel on the display layer, thus creating the possibility for supplying each eye with elements of the left and right image which are appropriate to it. However, Faris' invention is limited to a fixed position of the viewer with respect to the display during the whole time of viewing. The images viewed in an eyeglassesless mode in accordance with Faris' invention are inevitably grainy, since they always include at least 50% of areas which have no image, corresponding to the areas in which each eye's vision is blocked by the opaque parts of the barrier. U.S. Pat 5,146,246 to Marks, discloses a method in which a raster grid is used to block narrow strips of image from one eye and show them to the other eye, while distributing the images in such a way that portions of the right image are visible to the right eye and portions of the left image are visible to the left eye. This is basically a projection system using a diffusion screen between two raster structures alternating opaque and transparent sections, and as such, is similar to some of the embodiments described by Faris. It, however, shares the limitations noted above, i.e., a significant percentage of the field of view is occupied by opaque regions which do not transmit either image, thereby limiting the resolution of the visible image and producing graininess.

There is thus a widely recognized need for, and it would be highly advantageous to have, systems for three-dimensional viewing and projection which can be used by a viewer to obtain a perception of depth while viewing still or motion pictures needless of use of eyeglasses, which systems devoid the above mentioned limitations.

### DEFINITIONS OF TERMS

For the sake of clarity terms to be used herein in this document are defined as follows.

"Frame": a display or a part of a display to be three-dimensionally viewed.

"Left image": the image to be seen by the left eye of the viewer. In embodiments of the present invention used for producing the illusion of depth, this would correspond to the image seen by the left eye, captured for example by a camera playing the role of the left eye and placed near (typically to the left of) a second camera playing the role of the right eye, or to an image created by drawing, computer graphics, or other non-photographic means, which image contains parallax information appropriate to the left-hand position of a pair of images which, when viewed together and combined by the human perceptual system into a single image, give the illusion of depth. Note that this description is given for clarity only, and is not intended to limit the scope of the invention to the display of left and right images of any particular origin. The left image may be a still image, or one of a sequence of images displayed one after another to constitute a motion picture.

"Right image": the image intended to be seen by the right eye. The right image may be a still image, or one of a sequence of images displayed one after another to constitute a motion picture.

"3D-image": a three-dimensional image as viewed by a viewer according to any of the embodiments of the present invention.

"Display": a medium by which an image as defined hereinabove is initially presented. Suitable displays include but are not limited to display screens such as light reflecting means, a translucent screen, or light-emitting means, such as a CRT screen or an LCD screen. The nature of the "display" as used herein is not limited to these examples, nor is the invention described herein limited to the use of any particular technology of display. In particular, the meaning of "display" is not limited to means traditionally used for displaying three-dimensional images and motion pictures. Thus, for example, outdoor advertising displays and pictures such as those printed on cards or in books or magazines, are all additional examples of "display" relevant to certain embodiments of the invention described hereinbelow.

"Polarizing means": this term includes any linear polarizing means which block light whose angle of vibration is in one direction (i.e., orientation) while passing light whose angle of vibration is in another direction. The term also includes means which convert linearly polarized light into circularly polarized light, means which convert circularly polarized light into linearly polarized light, and means which pass light which is circularly polarized in one sense but do not pass light which is circularly polarized in the other sense.

"Light rotating means" are also known in the art as "light retarding means" and as "phase retarding means". As used herein, these terms refer in particular to means which change by 90 degrees the orientation of linearly polarized light, or which change the sense of circularly polarized light, converting right-handed polarized light into left-handed polarized light or left-handed polarized light into right-handed polarized light. When the concept 'active or inactive in light rotation' is used herein in this document and especially in the claims section below it also refers to a situation where in the inactive state the light is rotated m degrees and in the active state it is rotated m + 90 degrees.

"Switchable light rotating means" are light rotating means whose light rotating effect can be turned on/off under electronic control, as under the Kerr effect. Thus light rotating means is defined 'on' when it rotates light and 'off' when it does not rotate light. Thus, 'on' and 'off' as used herein refers to the presence or absence of the optical phenomenon of light rotating effect, not to the presence or absence of an electrical field which controls the effect. When the phrases 'active/inactive in light rotation' are used herein in this document and especially in the claims section below it also refers to a situation where in the inactive state the light is rotated m degrees and in the active state it is rotated m + 90 degrees.

"Shutter means": this term is taken to include any means by which particular portions of a screen or layer of material can be made to be substantially transparent, and at other times can be made to be substantially opaque, under the control of switchable means. This might, for example, be accomplished by a unit of switchable light rotating means (as defined above) sandwiched between two layers of linear polarizing means, both layers oriented in a given same direction. Such an arrangement is opaque or transparent depending on whether the light rotating means is on or off. This example, however, is given for the sake of clarity, yet the nature of the "shutter means" as used herein is not limited to this example nor to any particular technology of shutter means. Thus a solid material having transparent holes which is translated relative to the image as defined hereinabove can also be used as suitable shutter means in some of the embodiments of the present invention.

"Eyeglasses" : the term is used throughout in this document as a shorthand way of referring to any arrangement which provides for optical means which are physically close to the viewer's eyes, and particularly those which are such that most or all of the light emanating or reflected from the display and directed towards the left eye, enters optical means located in front of the left eye, before reaching it, whereas most or all of the light emanating or reflected from the display and directed towards the right eye enters optical means located in-front of the right eye before reaching it. Thus, eyeglasses as used herein includes the polarizing glasses and color-filter glasses traditional employed in the field of stereoscopy, yet the term also includes headsets, arrangements which place mirrors or lenses or prisms in close proximity with the eyes, and so forth.

"Viewer" is an individual facing and viewing the display.

An "appropriate image" for the viewer's left eye is the left image as defined above, whereas an "appropriate image" for the viewer's right eye is the right image as defined above. "Inappropriate images" are the right image with respect to the left eye and the left image with respect to the right eye. "Appropriate eye" and "inappropriate eye" are terms derived from the above description.

"Viewing stereoscopically" means in particular the viewing of pairs of left and right images containing appropriate parallax information, such that when the viewer views the images simultaneously or nearly simultaneously, and in the process of his viewing coalesces the two images into a single image gestalt in the manner well known in the art of stereoscopy, the result is a single perceived image giving the illusion of depth, as defined hereinabove a 3D-image. However, the term viewing stereoscopically as used herein is not limited to pairs of images containing such parallax information, it is intended to apply to any pair of images which can be so coalesced and give the viewer the impression of a single image containing information from two sources.

"Color Filters": Some embodiments of the invention utilize elements which are transparent to light within a certain range of wavelengths, but block light within other range(s) of wavelengths. The term "color filter" refers to any such element.

The present invention is couched in terms of linear light polarization. However, it is clear to one ordinarily skilled in the art that various aspects of the embodiments of the invention described hereinbelow can be effected using circular light polarization. Thus, for example, referring to embodiments of the invention wherein a light polarizing layer is placed close to a display, the layer may in fact include a linear polarizing layer coupled with a suitably aligned quarter-wave light retarding means, converting the linear polarized light into circular polarized light. Reference to light linearly polarized in a particular orientation can then be taken to refer to light circularly polarized in a particular sense (i.e., left-handedness or right-handedness). Referring to embodiments wherein an analyzing filter is positioned nearest to the eyes of a viewer, which analyzing filter is a linear light polarizing filter, the filter may in fact further include a suitably aligned quarter-wave light retarding means which converts circularly polarized light into linearly polarized light. Alternatively, the linear light polarizing filter might be replaced by circular polarizing means which pass light with circular polarization in one particular sense (i.e., left-handedness or right-handedness) while absorbing, diffusing or reflecting light circularly polarized in the other sense. For embodiments in which on/off switchable light rotating means are employed for rotating the orientation of linearly polarized light, reference to those means also refers to on/off switchable light rotating means for changing the sense of circularly polarized light.

Thus, considering the uses of light polarization and polarization based filtering which are hereinafter described, the essential characteristics of the invention are unaffected by substitutions of the kind described above. Consequently, and for sake of simplicity, the embodiments of the present invention are hereinafter described in terms of linear light polarization, yet this description by no means is to be taken as limiting the scope of the invention to any particular method of light polarization. Thus when the term 'orientation' is used to describe the direction of light polarization herein in this document and especially in the claims below, it refers both to linear and circular light polarization.

### SUMMARY OF THE INVENTION

The invention is as set out in the claims.

### BRIEF DESCRIPTION OF THE DRAWINGS

The invention herein described, by way of example only, with reference to the accompanying drawings, wherein:
FIG. 1 depicts a manner of displaying left and right images on a display according to a first embodiment of the present invention;
FIG. 2 depicts a manner in which a viewer directs his eyes towards the left and right images, according to the first embodiment of the present invention;
FIG. 3 depicts the manner in which the images are perceived, according to the first embodiment of the present invention;
FIG. 4 is a simplified perspective view of a system for three-dimensional viewing according to a second embodiment of the present invention, using polarizing eyeglasses and images placed on the display as in the first embodiment, as depicted in Figures 1-3;
FIG. 5 is a simplified perspective view of a system for three-dimensional viewing according to a third embodiment of the present invention, using polarizing eyeglasses, in which left and right images are distributed throughout the display;
FIG. 6 is a simplified cross-section view of a system for three-dimensional viewing according to a fourth embodiment of the present invention, wherein left and right images are placed as in the first embodiment, and stereoscopic vision is achieved without the use of eyeglasses;
FIG. 7 is a simplified cross-section view of a system for three-dimensional viewing according to a fifth embodiment of the present invention, the system including a switching mechanism for rapid alternation of parts of the display which are visible to each eye at any given time;
FIG. 8 depicts the operation of the system according to the fifth embodiment of the present invention during a phase in which the left eye sees the left side of the display and the right eye sees the right side of the display;
FIG. 9 depicts the operation of the system according to the fifth embodiment of the present invention during a phase in which the left eye sees the right side of the screen and the right eye sees the left side of the screen;
FIG. 10 repeats some of the information of Figure 6, in a manner convenient for comparison with Figure 11;
FIG. 11 depicts an example of an alternative arrangement of elements of the system according to the fifth embodiment of the present invention, such that the entire left image or the entire right image may be made visible at any given time to a selected right or left eye;
FIG. 12 depicts another example of alternative arrangement of elements of the system according to the fifth embodiment of the present invention;
FIG. 13 depicts part of the information of Figure 6, demonstrating the use of an opaque subarea;
FIG. 14 is a simplified cross-section view of a system for three-dimensional viewing according to a sixth embodiment of the present invention having a switching shutter layer, in a first phase of operation;
FIG. 14a is a first simplified cross-section view of a switching shutter layer optionally employed in the system of Figure 14.
FIG. 14b is a second simplified cross-section view of a switching shutter layer optionally employed in the system of Figure 14.
FIG. 15 is a simplified cross-section view of the system according to the sixth embodiment of the present invention in a second phase of operation;
FIG. 16a is a schematic presentation of how a display is normally viewed by the human vision system;
FIG. 16b is a schematic presentation of how a display is viewed by one of the eyes when a blocking system is employed to block some of light emanating from the display, to obtain a three-dimensional perception, according to the present invention;
FIG. 16c is a schematic presentation of how a display is viewed by one of the eyes when a blocking system is employed to block some of light emanating from the display, to obtain a three-dimensional perception, as combined with an optical system aimed at reducing graininess, according to the seventh embodiment of the present invention;
FIG. 17 is a schematic presentation of how a display is viewed by two viewers simultaneously, when a blocking system is employed to block some of light emanating from the display, to obtain a three-dimensional perception, according to the present invention;
FIG. 18 is a simplified cross-section view of a system for three-dimensional viewing according to an eighth embodiment of the present invention having polarizing layers whose subareas can be modified under electronic control;
FIG. 19 is a simplified cross section view of a section of a polarizing layer according to the eighth embodiment of the present invention presenting details of a switching mechanism for one such layer;
FIG. 20 depicts an array of polarizing layers at varying distances from the display according to the eighth embodiment of the invention;
FIG. 21 is a simplified cross-section view of a subarea of a shutter layer;
FIG. 22 depicts an array of shutter layers at varying distances from the display according to a ninth embodiment of the present invention;
FIG. 23 depicts means to control a system for three-dimensional viewing, according to a tenth embodiment of the present invention, whose internal arrangements of subareas are modified automatically under the control of means for sensing the position of the viewer with respect to the system;
FIG. 24 depicts part of a system for three-dimensional viewing in Cartesian coordinates, as a basis for distance and size calculations.
FIG. 25 is a reproduction of Figure 11, with the switching layer removed;
FIG. 26 is a simplified cross-section view of a system for three-dimensional viewing according to an eleventh embodiment of the present invention, the system enabling three-dimensional viewing by more than one viewer;
FIG. 27 is a cross section view of one of the layers deployed in the system of Figure 26.
FIG. 28 is a cross section view of the system of Figure 26, wherein the polarization orientation of the columns of light has been emphasized in light and dark emphasis;
FIG. 29 depicts features of Figure 28, used for further explanation;
FIG. 30 is a cross section view of the system of Figure 26, wherein the polarization orientation of the columns of light has been emphasized in light and dark emphasis, when used by two viewers;
FIG. 31 depicts components of the system of Figure 11;
FIG. 32 is a simplified cross-section view of a system for three-dimensional viewing according to a twelfth embodiment of the present invention, the system uses a special display pattern in one region of the display for permitting head movements of the viewer;
FIG. 33 depicts the system of Figure 32, wherein three regions of the display are displayed in the special pattern;
FIG. 33a depicts the system of Figure 32, wherein opaque regions in one of the layers is employed to achieve a similar effect as by displaying the special pattern;
FIG. 34 is a top view of a light polarizing layer having first and second subrareas polarizing light in perpendicular orientations and sublayers required for its assembly; and
FIG. 35 is an enlarged cross section view through the first and second subareas of the layer of Figure 34, demonstrating their modes of operation.
FIGs. 36a-c demonstrate ways of obtaining a checkerboard shape of second sublayer of he layer of Figure 34.
FIG. 37 is a simplified cross-section view of a system for three-dimensional viewing according to a thirteenth embodiment of the present invention, the system employs a polarizer, a switchable light rotating layer and a light retarding layer divided into first and second subareas, collectively for obtaining a system wherein subdivided layers are adjacent;
FIG. 38 is a simplified cross-section view of systems for three-dimensional viewing according to the present invention both for three dimensional projection and viewing of the projected display;
FIG. 39 is a simplified cross-section view of a system for three-dimensional viewing according to the present invention for three dimensional projection and viewing of the projected display in a theater.
FIG. 40 is a simplified cross-section view of a system for three-dimensional viewing of a three-color display (e.g., an RGB display) according to the present invention; and
FIG. 41 is a simplified cross-section view of a second system for three-dimensional viewing of a three-color display (e.g., an RGB display), according to the present invention.

### DESCRIPTION OF THE PREFERRED EMBODIMENTS

The present invention is of systems for three-dimensional viewing and projection which can be used by a viewer to obtain a perception of depth while viewing still or motion pictures. Specifically, the present invention can be used to three-dimensionally view still or motion pictures without the use of eyeglasses by more than one viewer at a time.

The principles and operation of systems for three-dimensional viewing according to the present invention may be better understood with reference to the drawings and accompanying descriptions.

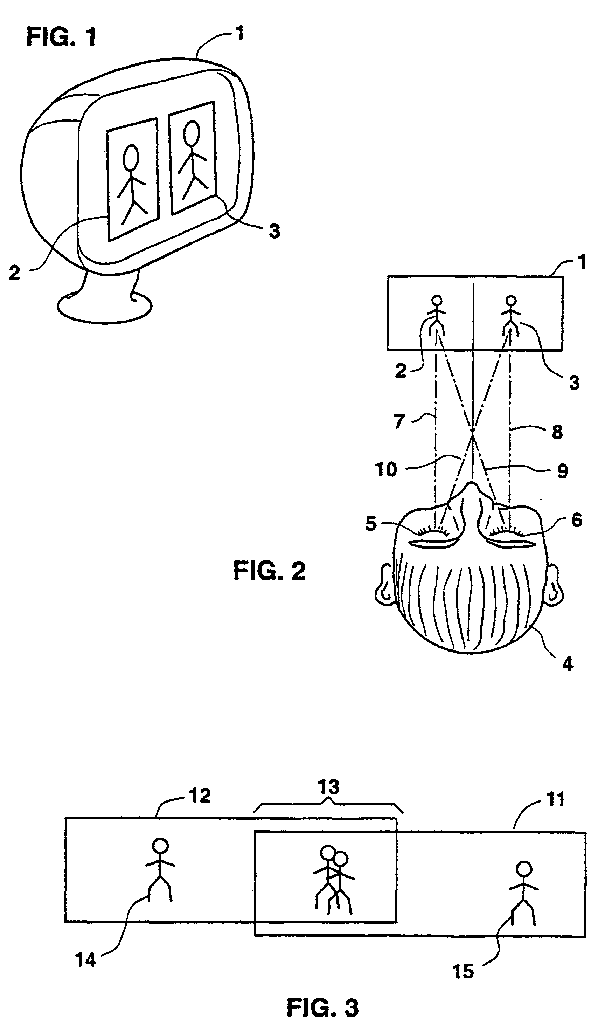

Referring now to the drawings, Figures 1-3 illustrate a first embodiment of the present invention. According to the first embodiment of the invention, displayed (i.e., presented) is a stereoscopic movie made of frames of pairs of left and right images, which pairs of images, together, constitute stereoscopic views, by displaying (i.e., presenting) them side by side on a display, the pair of images size, placement, and surroundings are such that the viewer can view them stereoscopically by diverging the direction of his sight such that the viewer's right eye looks at the right image and the viewer's left eye looks at the left image.

Figure 1 shows a display **1** displayed on a screen, which display **1** includes a displayed frame including a left image **2** to the left of a right image **3** as these terms are defined in the definition of terms section above. Left **2** and right **3** images are typically substantially identical in subject, yet they differ in orientation, as would be the case, for example, if a pair of video cameras separated by approximately the human interpupillary distance (about 6.5 cm) were pointed at a single scene each from it's slightly different perspectives, and the images thus generated were displayed (i.e., presented) as left **2** and right **3** images of Figure 1, with left image **2** displayed on the left side of display **1.** Please note however, as stated in the definitions section above, that this example and forthcoming examples of specific origins of images and/or specific techniques for displaying (i.e., presenting) them, are intended by way of clarification only and are not intended to limit the scope of the present invention to images or displays of any specific type.

The method of viewing a 3D-image according to the first embodiment of the present invention is illustrated in Figure 2.

First, Figure 2 shall be used to review the way a viewer 4 normally looks at an object. Viewer **4**, when looking at an ordinary object, for example left image **2,** in an ordinary manner, directs both his left eye **5** and his right eye **6** to image **2,** resulting in line of sight **7** for left eye **5** and line of sight **9** for right eye **6**. Similarly, when viewer **4** normally looks at image **3** the viewer directs both eyes **5** and **6** to that object, invoking lines of sight **10** for left eye **5** and **8** for right eye **6**.

If image 2 is a left image as defined, and image **3** a right image, then a stereoscopic binocular (i.e., three-dimensional) view can be obtained by viewer **4** who diverges his eyes in such a way that left eye **5** is directed towards left image **2,** resulting in line-of-sight **7,** while at the same time right eye **6** is directed towards right image **3** resulting in line-of-sight **8.**

Left **2** and right **3** images can then be coalesced by viewer **4** into a single image. If left **2** and right **3** images contain parallax information about a scene, a stereoscopic illusion of depth, in other words a 3D-image, results.

An alternative method of viewing is more comfortable for certain viewers. In this case left image **2** is displayed on the right side of display **1**, whereas right image **3** is displayed on the left side. For perception of depth, viewer **4** crosses his eyes rather than diverging them, so that his left eye **5** looks at left image **3** along line of sight **10** and his right eye **6** looks at right image **2** along line of sight **9.**

In both cases, left eye **5** sees the left image and right eye **6** sees the right image. Since the left and right images are substantially similar in many respects, viewer **4**, after suitable training in the practice, can coalesce the images into a single image with a central area in which both the left and the right images are seen together combined into a single image, a single gestalt. Surrounding left **2** and right **3** images by identical surroundings facilitates the process, but is not required. If images **2** and **3** are left and right images of substantially the same subject differing essentially only in the differences introduced by parallax information as defined above, viewer 4 will perceive the illusion of depth (i.e., three-dimensionality) resulting from binary stereo-optic viewing, with no additional optical equipment.

If an appropriate sequence of frames are displayed, each of which combines a left image displayed on one part of a display screen along with a right image displayed beside it on another part of the display screen, then three-dimensional movies can be seen by the viewer who directs his eyes in the manner described above.

Thus, according to the first embodiment of the present invention, perception of depth is obtained while displaying a series of frames each including a right and a left image, each pair of images is viewed in the manner described, the frames succeeding each other over time in a traditional manner of motion pictures, so as to produce a stereoscopic 3D-motion picture requiring no special optical apparatus beyond conventional means for displaying images (e.g., a television or a computer screen).

In certain publications, for example the "Magic Eye" series of books mentioned above, random-dot stereograms have been associated with sets of small normal still images printed across the page in such a manner that the viewer can view them, as he views the random dot stereograms, by directing his right eye to one particular image and his left eye to another particular image, usually the one to the left of the image viewed by the right eye. The images portray a same scene from slightly different perspectives, such that the user, when coalesces the images, perceives a combined image generating the illusion of depth.

So far, to the best of our knowledge, the use of a viewing method as described, applied to a series of frames creating a motion picture has not been previously contemplated nor implemented. It is interesting, however, to note that in U.S. Pat. No. 5,126,878 to Trumbull et al., the idea of displaying left and right images side by side on a display is in fact contemplated. However, Trumbull et al., does not relate to the possibility of such images being displayed in such a manner that they can be coalesced into a single image and viewed stereoscopically without benefit of further optical apparatus. Alternatively, Trumbull's disclosure concerns an apparatus worn in front of the eyes, which moves the images and changes their dimensions. Such an apparatus participates in the general disadvantage of all the solutions requiring special eyeware (i.e., eyeglasses) to be worn, and while it presents certain advantages in terms of the apparent size of the images displayed, it also presents clear disadvantages in terms of expense, simplicity, attractiveness and perhaps also of comfort.

Nevertheless, two disadvantages are inherent to the first embodiment of the present invention as described herein. The first disadvantage is that, if the images are to be viewed without eyeglasses, lenses, mirrors, or other optical equipment, best results are obtained if the eyes are not required to diverge beyond the angle natural for normal unaided viewing of distant objects, in which the lines of sight of the two eyes are essentially parallel to each other. Consequently, the width of images which can be successfully combined into a single gestalt in their entirety has as an approximate upper limit the interpupillary distance of the viewer, typically less than 7 cm for each image.

The second disadvantage of the first embodiment is that each eye, in addition to seeing the image appropriate for it, also has a peripheral view of the image not appropriate to it. Thus, in the usual implementation of the first embodiment, with the left eye looking at the left image placed on the left side of the screen and the right eye looking at the right image placed on the right side of the screen, the left eye, while looking at the left image, also sees on the periphery the right image located to the right of the left image, and the right eye looking at the right image also sees on the periphery the left image located to the left of the right image. Referring again to Figure 2, this means that viewer **4** while looking with his left eye **5** at left image **2** along line of sight **7,** will also see, "out of the comer of his eye" (i.e., peripherally), right image **3** located to the right of left image **2** towards which left eye **5** is directed. Similarly, as viewer's **4** right eye **6** looks at right image **3** along line of sight **8,** viewer **4** will also peripherally perceive left image **2** located to the left of right image **3** which is viewed by right eye **6.**

With reference now to Figure 3, the above described situation is demonstrated. Assuming that the left image is on the left side of the display, box **12** represents the scene as perceived by the left eye, whereas box **11** represents the scene as perceived by the right eye. Central region **13** of Figure 3 is the area on which both eyes are focused, and the images at central region **13** are coalesced into a single gestalt. For clarity, the image from the left eye is displaced slightly to the left and upwards, hence the central region **13** shows a double image. In actual perception, the images are coalesced by the viewer, and the central region **13** appears as a single image (gestalt), and, if the left and right images are suitably chosen, that single image has the illusion of depth.

The disadvantage mentioned above lies in the fact that the entire scene perceived by the viewer resembles the entire drawing of Figure 3, rather than only central region **13** of Figure 3. When the viewer combines the two appropriate images into a single stereoscopic image (gestalt) in central region **13** of the viewer's field of view, two additional flanking images **14** and **15** appear, one to each side of central region **13.** These can be largely ignored by experienced viewers, but they tend to be distracting and make it difficult for some viewers to resolve the two appropriate images into a single stereo-optical image.

Thus, the following embodiments of the invention are directed at systems in which each of the viewer's eyes views only it's appropriate image, that is the left eye views a left image and the right eye views a right image.

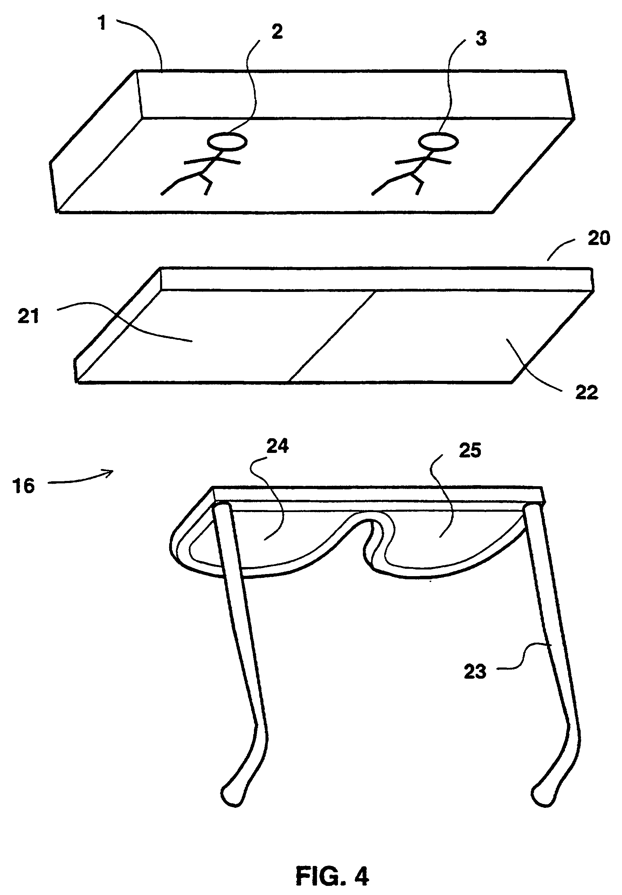

With reference now to Figure 4, presented is a second embodiment of the present invention, aimed at solving the problem of flanking (i.e., peripheral) images as described above. Figure 4 shows a system **16** for three-dimensional viewing. System **16** includes a layer **20**, layer **20** includes light polarizing means and is divided into a first area **21** and a second area **22**, area **21** substantially covering left image **2,** whereas area **22** substantially covering right image **3**, both images displayed on display **1.** It should be noted that in intent, layer **20** is close to display **1,** yet it has been moved disproportionally far away in the drawing for clarity in showing the placement of images on display **1**. Area **21** polarizes light in a first orientation, whereas area **22** polarizes light in a second orientation, which is substantially perpendicular to the first. The viewer then wears polarizing eyeglasses **23** whose left eyepiece **24** allows only light polarized in the first orientation to enter the left eye, and whose right eyepiece **25** allows only light polarized in the second orientation to enter the right eye.

This solution is thus similar to the classical solution well known in the art of stereoscopy, whereby polarizing glasses are used to allow a left image polarized in one orientation to enter the left eye, and a right image polarized in a different orientation to enter the right eye, while preventing both eyes from seeing the inappropriate images. This technology has typically been used with the left and right images both distributed throughout the display, for example projecting two independent images, each polarized in a different orientation, onto a common display screen, e.g., 3D-movies are typically projected in this manner.

Note that is the present second embodiment and in embodiments to follow, a particular modification is called for in a case where the display is an LCD screen, since light emanating from a standard LCD is already polarized. In such a case, as demonstrated for the second embodiment of the invention, layer **20** would include light rotating means rather than light polarizing means such that area **21** would have no optical effect, consequently passing polarized light emanating from the LCD screen and having the first orientation, whereas area 22 would have a light rotating effect, and would thus 90 degrees rotate the polarized light emanating from the LCD screen giving it the second orientation.

The advantage of the present second embodiment, where the left image and the right image are placed as described in Figures 1-4, is found in the fact that very simple and inexpensive means can be used to create a situation where light emanating from the two images is polarized differently, allowing three-dimensional displays using this methodology to be constructed more simply and less expensively than using other methodologies know to the art of stereoscopy. The images are limited in width, but otherwise enjoy the full color and full resolution of the available display. An additional advantage of this embodiment lies in the fact that, if presented as a combination of light polarizing means layer **20** and eyeglasses **23**, together with images provided as described, it can be applied to existing displays (e.g., standard televisions and computer display screens, printed material, etc.) in an extremely inexpensive manner, and requires no addition to nor modification of existing hardware.

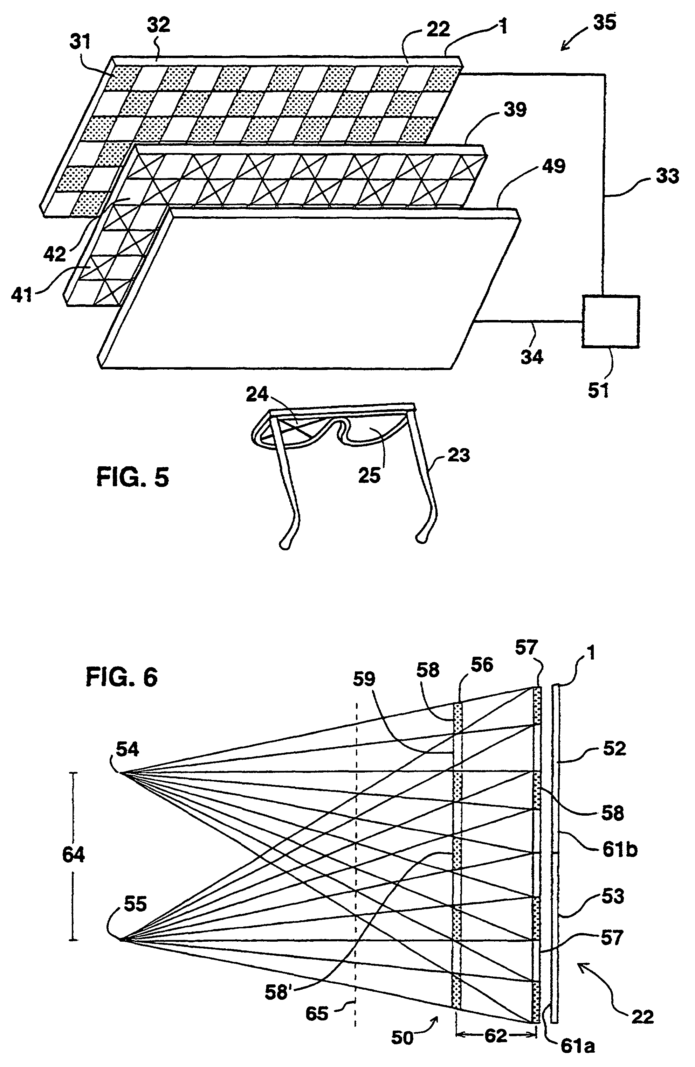

With reference now to Figure 5, presented is a third embodiment of the present invention. According to the third embodiment provided is another system **35** for three-dimensional viewing, system **35** enables to use images which are not limited in width, and which do not require special divergence or convergence of the eyes for them to be three-dimensionally viewed.

As mentioned above, U.S. Pat. No. 5,050,961 to Venolia discloses a system which supplies appropriate subregions of left and right images to the appropriate eyes, yet leaves 50% of the display area unseen by each of the eyes, thus affecting the quality (i.e., resolution) of the perceived 3D-image. On the other extreme, U.S. Pat. No. 5,083,851 to MacDonald provides means for using all image information of the display area for both left and right images, yet MacDonald means is relatively expensive and complex compared to the system **35** presented in Figure 5 and described hereinbelow.

System **35** includes a display **1**, a light polarizing layer **39** similar in function to layer **20** of Figure 4, polarizing eyeglasses **23** which are similar to those described for the previous second embodiment, and a layer **49** which includes an on/off switchable element of light rotating means, providing what is known in the art as the Kerr effect.

The left and right images are distributed in a frame **22** throughout display **1** in arbitrarily small first **31** and second **32** subregions (shown as alternating black **31** and white **32** picture elements in frame **22**). Each of picture elements **31** and **32** can be as small as an individual pixel of a computer-driven raster display, or an alternate scan line of a television display. Utilization system **35** for three-dimensional viewing would typically involve very small subregions, nevertheless, their size has been exaggerated in Figure 5 for sake of clarity. Furthermore, layers **39** and **49** are drawn far from display **1** and from one another for sake of clarity, yet layers **39** and **49** are typically much closer (e.g., adjacent) to one another and to display **1.**

As further shown in Figure 5, layer **39** of system **35** is divided into small first and second subareas **41** and **42** yielding an arrangement, such that light from each of subregions **31** and **32** of frame **22** passes through subareas **41** (marked with **X** in Figure 5) and **42** of polarizing layer **39,** respectively. Subareas **41** of light polarizing layer **39** which are traversed by light emanating from subregions **31** of frame **22** polarize that light in a first orientation, whereas subareas **42** of light polarizing layer **39** which are traversed by light emanating from subregions **32** of frame **22** polarize that light in a second orientation, which is substantially perpendicular to the first orientation. Thus in the example of Figure 5, subareas **41** polarize light from subregions **31** of the left image in the first orientation, whereas subareas **42** polarize light from subregions **32** of the right image in the second orientation.

As in Figure 4, left eyepiece **24** of eyeglasses **23** allows only light polarized in the first orientation to reach the left eye of the viewer, and right eyepiece **25** allows substantially only light polarized in the second orientation to reach the right eye of the viewer. Thus, each eye sees only its appropriate image.

If the light thus treated is to pass directly to eyeglasses **23**, then one would have a system which would allow full-color stereographic viewing with no need for specially divergent or convergent vision, and which could occupy the entire width of the display, but which would be similar in essence to that described by Vanolia, and share with it the grainy image resulting from the fact that part the display is permanently blocked from sight of each of the eyes.

To overcome this problem, additional layer **49** is employed in system **35**. As mentioned above, layer **49** includes an on/off switchable element of light rotating means providing what is known in the art as the Kerr effect. Thus, switching layer **49** on (i.e., activated), according to the Kerr effect, changes by 90 degrees the orientation of polarization of light emanating from all subareas **41** and **42** of polarizing layer **39**. As a result, light from subregions **31** which was previously hidden from the right eye will now become visible to the right eye, whereas light from subregions **32** which was previously hidden from the left eye will become visible to the left eye, and no light will reach an eye for which it was not intended. On the other hand, having layer **49** switched off (i.e., inactivated) has no such effect.

Further according to the third embodiment of the present invention, when light rotating means layer **49** is inactivated, display **1** displays (i.e., presents) the left image in its original set of subregions **31,** whereas the right image is accordingly displayed in its original set of subregions **32**. On the other hand, when light rotating means layer **49** is activated, the left image is displayed in subregions **32** and the right image is accordingly displayed in subregions **31**.

As is apparent to one ordinarily skilled in the art and as mentioned above, the picture elements of frame **22,** or as referred herein as subregions **31** and **32** have no particular necessary structure. Thus, the picture elements may be pixels, scan lines, or any other size or shape which is convenient in terms of production of the equipment and production of the images, and which reduces any sensation of flickering of the image as perceived by the viewer.

Further according to the third embodiment of the present invention and as further shown in Figure 5, a coordinating switching means **51** is employed to ensure that on/off switching of light rotating layer **49** as described above, coincides with the change in the distribution of the left and right image picture elements on the display. It will be appreciated by one ordinarily skilled in the art that switching means **51** may be connected with command lines **33** and **34** both to display **1** and to light rotating layer **49**, yet to the extent that the information required for switching means **51** to appropriately operate is available independently, command line connection **33** to display **1** is not obligatory and not required. This would be the case if, for example, the scanning frequency of display **1** were dependent on the frequency of the mains current, or on a signal available from the display's input data stream and coordinating switching means **51** is similarly dependent. In these cases system **35,** as described in Figure 5, would not require command line **33** and might be manufactured independently of display **1.** The system is thus provided, for example, together with sets of 3D-video tapes, and could then be used together with any standard television.

With reference now to Figure 6, presented is a fourth embodiment of the present invention. The fourth embodiment provides yet another system **50** for three-dimensional viewing, system **50** provides an alternative method for eliminating the peripheral (i.e., flanking) 'extra' images **14** and **15** of Figure 3, as described earlier for the first embodiment of the present invention. A profound advantage of system **50** of the fourth embodiment as compared for example with systems **16** and **35** described above is that system **50** does not require eyeglasses to be worn by the viewer to obtain a perception of depth (i.e., three-dimensionality).

As shown in Figure 6, system **50** includes a display **1** which includes a frame **22** divided into at least one left region **52** where at least a part of a first image (i.e., all the first image or a picture element derived from the first image) is displayed and a at least one right region 53 where at least a part of a second image (i.e., all the second image or a picture element derived from the second image) is displayed.

It should be noted that many of the various embodiment in the specification refer to left and right orientations with respect to regions (or subregions) of the display of the various systems described. In many such embodiments, however, other orientations such as upper and lower, etc., are also permissible. Therefore, when the terms 'left region (or subregion)' and 'right region (or subregion)' are used in the specification, they also refer to the terms 'first region (or subregion)' and 'second region (or subregion)', which relate to all the permissible orientations.

Preferably the first image is a left image and the second image is a right image, yet, as explained in the discussion of Figure 2 above and as will be appreciated from the following description, it is also possible to inverse the placement of the left and right images. Points **54** and **55** represents the position of the viewer's left and right eyes, respectively.

System **50** further includes first and second layers **56** and **57**, respectively, interposed between the viewer and display **1**. Layer **57,** which for sake of clarity appears somewhat distanced from display **1**, can in fact be very close (e.g., adjacent) to display **1.** Each of layers **56** and **57** is divided into subareas (arranged in strips of which a cross section is shown in Figure 6) of two types, marked in Figure 6 as dark **58** and light **59** subareas. Subareas **58** polarize light in a first orientation, whereas subareas **59** polarize light in a second orientation which is substantially perpendicular to the first orientation.

Given a particular position of layer **57** adjacent to display **1** and particular positions and sizes for subareas **58** and **59** of layer **57**, it is possible to choose a position for layer **56**, and positions and sizes for subareas **58** and **59** of layer **56**, such that subareas **58** and **59** of layer **56** will intercept (and transmit) light from display **1** passing through subareas **58** and **59** of layer **57** in the direction of the appropriate eye, and will also intercept (and block) light from subareas **58** and **59,** when that light is aimed at the inappropriate eye.

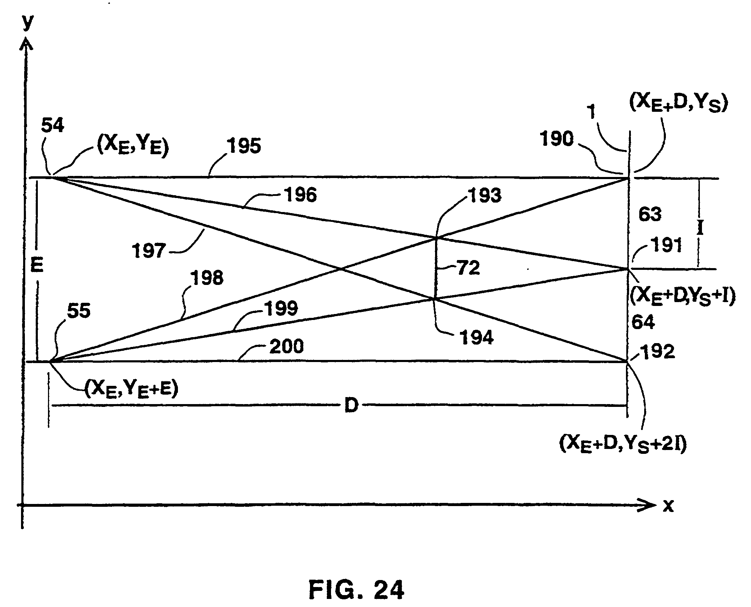

The distance **62** between layer **56** and layer **57**, as well as the size and placement of subareas **58** and **59** of layer **56**, are dictated by the position of the viewer's eyes and the interpupillary distance **64** between them, by the distance between the viewer and layer **57**, and by the size of subareas **58** and **59** into which layer **57** has been divided. Proper placement of layer **56** and of its subareas **58** and **59** ensures that left eye **54** views substantially only the left image and that right eye **55** views substantially only the right image and that a perception of depth (i.e., three-dimensionality) is obtained. Exact determination of the size and placement of these various elements is further discussed in the following, in particular with reference to Figure 24.

Consider for example light emanating from zone **61b** of left region **52** displaying the left image. Due to the arrangement of subareas **58** and **59** across layer **57**, upon passing through layer **57**, the light emanating from zone **61b** is polarized by a subarea **59** of layer **57** in a first orientation. Therefore, and due to the alternate arrangement of subareas **58** and **59** across layer **56,** and the position of layer **56** relative to layer **57** and the viewer as explained above, upon passing through layer **56**, the light emanating from zone **61b** and directed towards right eye **55** encounters a subarea **58** and is blocked because of that subarea's opposite polarization orientation, whereas the light emanating from zone **61b** and directed towards left eye **54** encounters subarea **59**, of the same polarization orientation, and is transmitted to left eye **54.** In a similar manner, light emanating from zone **61a** of right region **53** displaying the right image, is initially polarized by its passage through a subarea **58** of layer **57**. Such light directed towards left eye **54** is blocked when it encounters a subarea **59** of opposite polarization on layer **56**, yet, directed towards the right eye **55** it encounters a subarea **58** of same polarization orientation on layer **57**, and that subarea transmits it to right eye **55**. Thus each of eyes **54** and **55** views only the zone appropriate to it. As shown in Figure 6, this description is valid for all other zones of the left and right images, thus, each of eyes **54** and **55** views only the image appropriate to it and a perception of depth is obtained.

It will be appreciated to one ordinarily skilled in the art that more than one suitable distance **62** exists for layer **56**. For example, layer **56** may be positioned along dashed line **65**, yet it will be further appreciated that changing the distance also requires changing the size of subareas **58** and **59** across layer **56**. Presently it is preferred to position layer **56** as close as possible to layer **57**, thus rendering system **50** as thin as possible.

It will be further appreciated by one ordinarily skilled in the art that the example provided in Figure 6 is by way of explanation only, and that the scope of the fourth embodiment of the present invention described herein is not limited to the specific details provided by way of illustration. In particular, (i) layers **56** and **57** need not necessarily be flat orientations; (ii) the subareas need not necessarily be rectangular strips; the left and right images may be divided into a plurality of subareas of arbitrarily small size, each area being related to one or more regions of first layer **57** in the manner in which regions **52** and **53** relates to it; and (iii) the sizes of the subareas of layers **57** and **56** need not necessarily be equal throughout each layer, more than two polarizing layers subdivided into subareas may be used, and the polarizing capabilities of each subarea need not necessarily fill the subarea. Thus, it may be convenient or even necessary for some applications, to prevent too great limitations on head movement, either to leave opaque zones around polarizing subareas **58** and **59** of layers **56** and/or **57**, or to leave 'free' non-polarizing zones there and then compensate for this by using more than two layers (e.g., three layers).

It should further be noted that whereas Figure 6 as a whole describes a situation in which the display area **1,** or a portion thereof, is divided between a left region **52** displaying a left image or a portion thereof and a right region. **53** displaying a right image, or a portion thereof, the interaction of polarizing subareas, as described in Figure 6 and in the description above, is equally effective should one wish to devote, say, an entire display area to one of the two images, say the left image. In this case the apparatus would be constructed as pictured in the upper half of Figure 6, in the area facing region **52**. Similarly an apparatus could be constructed as pictured in the lower half of Figure 6, in the area facing region **53**, in which the entire display would constitute a right region displaying the right image. As a practical example of such an application, one might construct an apparatus for which horizontal regions of the display (e.g., the region of one scan line of a television display) would be constructed as described by the upper half of Figure 6, and these horizontal areas might alternate with other horizontal areas of the display, of similar shape and dimensions, constructed as described by the lower half of Figure 6. The result would be a television display unit which shows even-numbered scan lines to one eye, and odd numbered scan lines to the other eye. It is interesting to note in this context that one of the display formats generated by some contemporary computer games, intended for e.g., the Cybermaxx virtual reality helmet display hardware, will on a normal VGA CRT display an image with just this characteristic, that horizontal rows of pixels, one or several pixels high and extending all across the screen, intended for the right eye, alternate with horizontal rows of pixels of the same width and height all intended for the left eye. Thus such a display system would display a 3-D image in Cybermaxx format on a standard CRT screen.

The use of the fourth embodiment described hereinabove is now compared with the first embodiment described in Figures 1 and 2. It will be appreciated that in the fourth embodiment, as in the first embodiment, each of the viewer's eyes sees it's appropriate image, and does not see the inappropriate image. The left image is displayed as a whole unified image on the left side of the screen and the right image is displayed as a whole unified image on the right side of the screen, and the user, as in the first embodiment, combines the images by diverging his eyes such that the left eye looks at the left image and the right eye looks at the right image. In the current fourth embodiment, however, as differentiated from the first embodiment, there are no accompanying peripheral images because the right eye is blocked from seeing the left image and the left eye is blocked from seeing the right image. This improvement greatly facilitates the process by which the user fuses the two appropriate images into a single apparent 3D-image, viewed stereoscopically and capable of giving the illusion of depth. This stereoscopic viewing of the images is accomplished without eyeglasses or lenses, and the system required is relatively simple and inexpensive to make, has no necessary electronic components, and can easily be adapted to operate with existing hardware.

Nevertheless, the fourth embodiment hereinabove described shares one of the limitations mentioned in the discussion of the first embodiment, namely that there is a practical maximum to the width of image which can comfortably be displayed in this manner. This is due to the fact that the images are placed side by side on the display, and there are limits to the degree to which the viewer's eyes (in the absence of lenses, mirrors, or other optical aids) can comfortably converge or diverge in order to allow the left eye to point towards the left image and the right eye to point towards the right image.

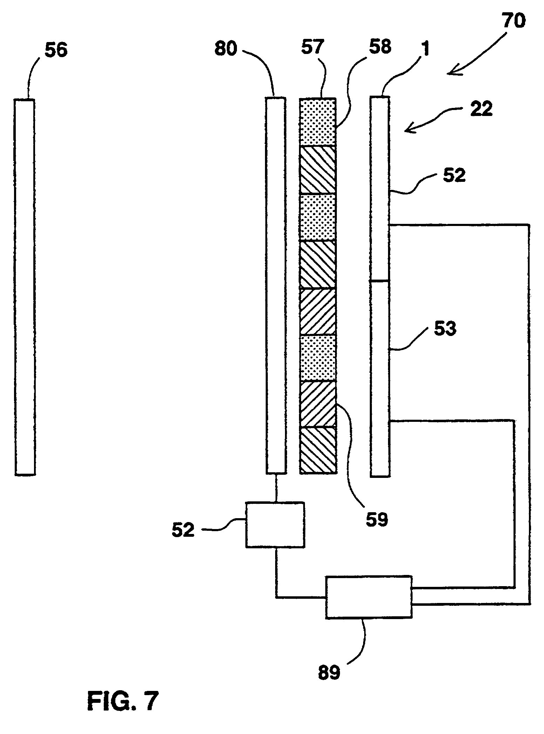

With reference now to Figures 7-12, presented is a fifth embodiment of the present invention. According to the fifth embodiment of the invention provided is still another system **70** for three-dimensional viewing. System **70** does not have the limitation of a practical maximum width as described hereinabove for the first and fourth embodiments.

System **70** is similar to system **50** of the fourth embodiment, with the difference that at least some of the elements of polarization, represented above by layers **56** and **57** of Figure 6, are switchable under electronic control or otherwise, e.g., mechanical control. That is, system **70** is constructed in such a manner that the orientation of polarization of certain elements can be either electronically or mechanically altered rapidly. The following examples of system **70** all concern switching the polarization effect of elements of polarization by electronic control, yet, as will be appreciated by one ordinarily skilled in the art, switching of elements of polarization by mechanical means, although perhaps more complicated than by electronic means, would, as briefly described in the summary of the invention, yield similar results.

Figures 7-9 illustrate a first configuration of system **70**, yet it should be understood that the example of Figures 7-9 is provided by way of illustration, and the scope of the invention is not limited to any particular method of switching polarization. Thus, system **70** includes a display **1** displaying a frame **22**, and first and second light polarizing layers **56** and **57**. The width of layer **57**, and the distance between layer **57** and display **1**, as shown in Figures 7-9, have been exaggerated for sake of clarity.

Between layer **57** and layer **56**, an on/off switchable light rotating means in the form of layer **80** has been added, which layer **80** provides what is known in the art as the Kerr effect. Thus, layer **80** is capable of changing the orientation of polarization of light passing through it by 90 degrees, and can be switched on/off under control of a switching element **82,** in turn controlled by a coordinating element **89.** If the light rotating activity of layer **80** is inactivated, the layer has no effect and system **70** operates similar to system **50** described above, except for a change in the image content of the regions **52** and **53**, to be described shortly. If, on the other hand, the light rotating activity of layer **80** is activated, then the orientation of polarization of light emanating from display **1**, passing through each of the subareas **58** and **59** of layer **57**, and then passing through activated layer **80**, is subsequently perpendicular to what it is when layer **80** is inactivated. Thus, light previously polarized in the first orientation is now polarized in the second orientation, and light previously polarized in the second orientation is now polarized in the first orientation.

As a result, when layer **80** is activated, the effect of layer **56** upon the light reaching it is the exact opposite of that described in the preceding section. Light from left region **52** is prevented from reaching the left eye, but allowed to reach the right eye, and light from right region **53** is prevented from reaching the right eye but allowed to reach the left eye.

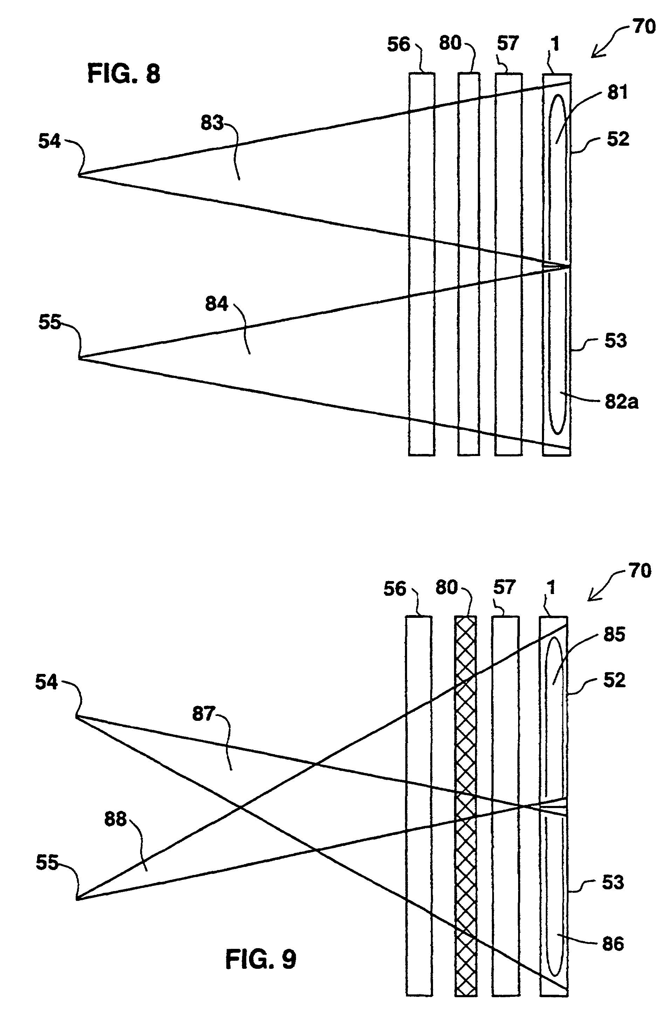

Further according to the fifth embodiment of the present invention, the left and right images are used in the manner depicted in Figures 8 and 9, which describe alternate states of system **70.** In general, each of the images is displayed on the entire width of display **1**, but only part of each image is displayed at any given time. Figure 8 shows the distribution when layer **80** is inactive. In this case left region **52** of display **1** is visible to left eye **54**, and right region **53** of display **1** is visible to right eye **55.** During this phase, and under the control of coordinating element **89** (shown in Figure 7) display **1** displays (i.e., presents), in left region **52,** a first (e.g., left) part of a first (e.g., left) image, marked as **81** in Figure 8, and also displays (i.e., presents), in right region **53,** a second (e.g., right) part of a second (e.g., right) image, marked as **82a** in Figure 8. The left eye **54** sees the left part of its appropriate image on the left part of the screen as indicated by field of view marked **83**, and the right eye sees the right part of its appropriate image on the right part of the screen as indicated by field of view marked **84**.

As shown in Figure 9, during a second phase, which second phase is initiated and controlled by coordinating element **89,** layer **80** is activated, the polarization of the light arriving at layer **56** is changed in 90 degrees, and the fields of view are the opposite of what they were in the previous phase described in Figure 8. Thus, as indicated by field of view marked **87** in Figure 9, left eye **54** now sees right region **53** located on the right-hand side of display **1,** whereas, as indicated by field of view marked **88,** right eye **55** now sees left region **52** located on the left-hand side of display **1**. At the same time, display **1** displays (i.e., presents) the right part of left image 86 in right region **53,** and the left part of the right image **85** in left region **52.**

It will however be appreciated to one ordinarily skilled in the art that display **1** of system **70** may simultaneously present additional sets of right and left regions as these regions are depicted in Figures 7-9.

Thus, the left eye sees the left part of its appropriate image, on the left side of the display, during the first phase, and the right side of its appropriate image, on the right side of the display screen, during the second phase, whereas the right eye sees the right side of its appropriate image on the right side of the screen during the first phase, and the left side of its appropriate image on the left side of the screen during the second phase. Neither eye sees any part of the image not appropriate to it at any given time. When the switching speed is sufficiently fast, e.g., > 20, preferably >30, more preferably > 40, most preferably > 60 switches per second, and the light intensity provided by the display is sufficiently strong, the visual persistence of the human vision system creates the illusion that each eye sees its full image all the time.

Hence, system **70** provides the user with full-screen full color stereoscopic viewing from an apparently flat screen, without need of special diverging or converging of the eyes to coalesce the left image and right image into a single stereoscopic image, and without necessitating the use of eyeglasses of any kind, which right and left images are not limited by a maximal width.

It should again be noted that the details of the example provided are illustrative only, and not intended to limit the scope of the invention herein described. In particular, using combinations of the methods presented in the above embodiments, the objectives described in the preceding paragraph can be obtained under a variety of different schemes for distributing parts of the left and right images over the display during two or more phases.

For example, Figures 10 and 11 illustrate a second configuration of system **70**, which second configuration involves a simple change in the distribution of polarization orientations, with the effect of causing the entire screen of the display to be visible to left eye **54** when light rotating layer **80** is inactivated, and the entire screen to be visible to right eye **55** when light rotating layer **80** is activated. Figure 10 is a reproduction of Figure 6, simplified to facilitate comparisons, to which reproduction switching rotating layer **80** has been added. Figure 10 shows an arrangement of subareas **58** and **59** providing different orientations of polarization. Figure 11 is almost identical to Figure 10, but the arrangement of certain subareas, those under region marked **67,** have been switched. Thus, when layer **80** is inactivated, polarizing subareas **58** and **59** of layers **56** and **57** have the effect of making all of the display visible to left eye **54** and blocked from the vision of right eye **55,** whereas activating layer **80** has the effect of reversing the activity of layer **56,** thereby making the entire display visible to right eye **55** and blocked from the view of left eye **54**. This particular arrangement of polarizing subareas **58** and **59** across layer **57** may be of advantage, for example, for use when display **1** is derived from a television, since it would presumably be simpler to alternate between the left and right images than it would be to create composite frames in which each scan line is partly derived from the left image and partly derived from the right image.

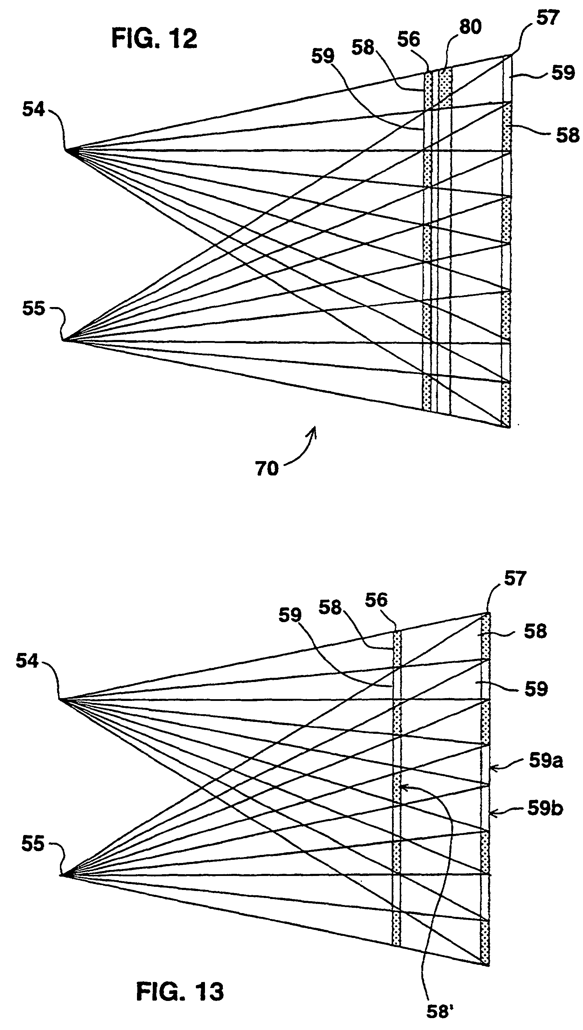

Yet another example of arranging subareas **58** and **59** is shown in Figure 12. It is possible to divide the polarizing strips (subareas **58** and **59**) in the vertical direction as well. One such division might provide for first level of each strip to have polarization orientations as described in Figure 11, a second level to have orientations as depicted in Figure 12, where each of the subareas of layer **57** have orientations opposite to those of Figure 11. The third, fifth, seventh, etc. levels (not shown) are oriented as the first, and the fourth, sixth, eight, etc. levels (not shown) are oriented as the second. The depth of each level could be that of a single scan line or a single pixel, or any multiplicity thereof which is convenient. Depending on the display used, this distribution scheme is likely to make it easier to produce a display which appears free of flickering, as compared to schemes in which the entire image, or large areas of the image, appear and disappear from a given eye simultaneously. Under this scheme, neighboring pixels or scan lines would appear and disappear as system **70** cycles between phases, and each eye would have an image, grainy but showing the complete image gestalt, present to it at all times, with only a very slight shifting of detail distinguishing the phases from each other.

It should be noted that (i) the sizes of the subareas of layers **57** and **56** need not necessarily be equal throughout each layer; (ii) more than two polarizing layers subdivided into subareas may be used; and (iii) the polarizing capabilities of each subarea need not necessarily fill the entire subarea. Thus, it may be convenient, or even necessary for some applications, to prevent too great limitations on head movement, either to leave opaque zones around polarizing subareas **58** and **59** of layers **56** and/or **57,** or to leave 'free' non-polarizing zones there and then compensate for this by using more than two layers (e.g., three layers).

It may be noted that the scheme for distribution of subareas described in the preceding paragraphs is suitable for use in certain contexts even without the presence of switchable light rotating layer **80**. For example, using system **50** as presented in Figure 6, it is possible to distribute the left image and the right image, in a checkerboard pattern of alternating pixels throughout the width and height of the display. Alternatively, slightly larger areas of the images might be grouped, creating a display less sensitive to small movements of the viewer's eyes with respect to the display. The result, in either case, would be a display which is relatively grainy when compared to the relatively smooth and more detailed display made possible, as described, through the use of layer **80**, yet it would nevertheless provide full-screen full-color stereoscopic viewing without eyeglasses, which does not require special diverging or converging of the eyes in order to coalesce the left and right images into a single image, and which has the additional advantages of being relatively inexpensive and requiring no electronic hardware, and of being compatible for use with static images such as printed material (e.g., books and magazines) or for use as a physical add-on to existing hardware devices, making the standard hardware able to use appropriate sources of stereoscopic computer programs, video tapes, television programs, etc.

With reference now to Figures 13-15, presented is a sixth embodiment of the present invention. The sixth embodiment of the invention provides still another system **93** enabling a flatscreen fullcolor stereoscopic vision without eyeglasses, as accomplished in yet a different manner.

Attention is called to a specific subarea **58,** marked in Figure 6 as **58'.** The situation of this particular subarea **58'** is unusual. Its position, to the right of left region **52** of the display as seen by left eye **54**, and to the left of right region **53** of the display as seen by right eye **55**, is such that its function with respect to both eyes is that of blocking the transmission of light. Thus, in the polarization distribution arrangement as defined in Figure 6, subarea **58'** never transmits light to either eye. In other words, this subarea, rather than being polarized at any particular orientation, could in fact simply be opaque.

The situation of subarea **58'**, and its immediate neighborhood, is reproduced in Figure 13. As shown, if subarea **58'** is opaque, light passing through subarea **59a** is visible to left eye **54** and hidden from right eye **55**, while light passing through subarea **59b** is visible to right eye **55** and hidden from left eye **54**.

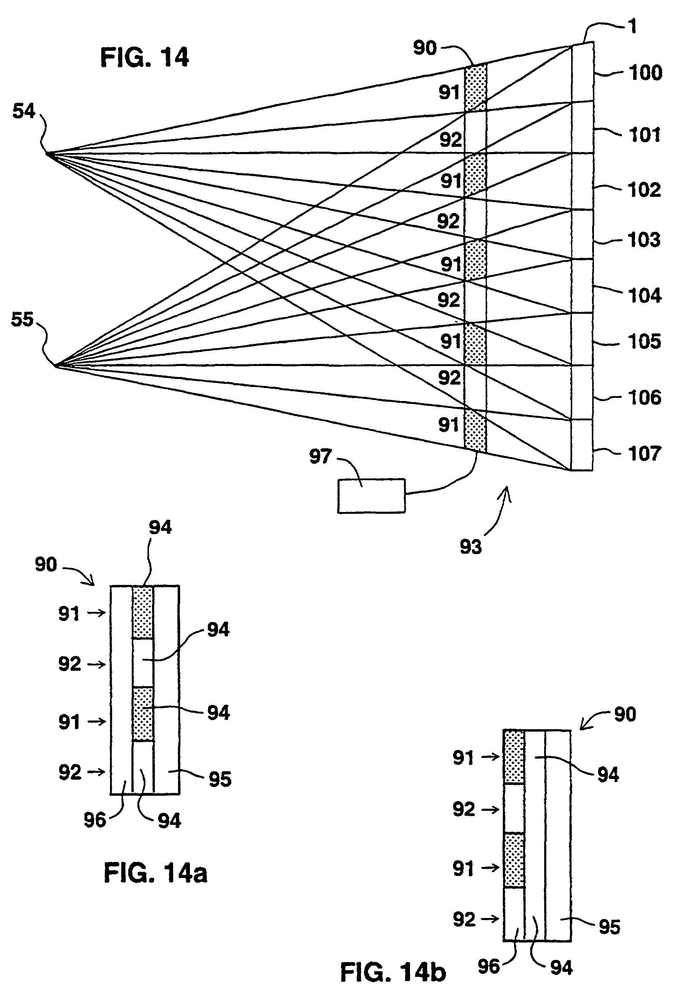

Figure 14 shows a generalization of this situation. Here polarization layers **56** and **57** are replaced by a shutter layer **90** divided into alternating subareas **91** and **92**. Display **1** is divided into multiple subregions **100-107** in the example of Figure 14, displaying various portions (i.e., picture elements) of the left and right images as is described hereafter.

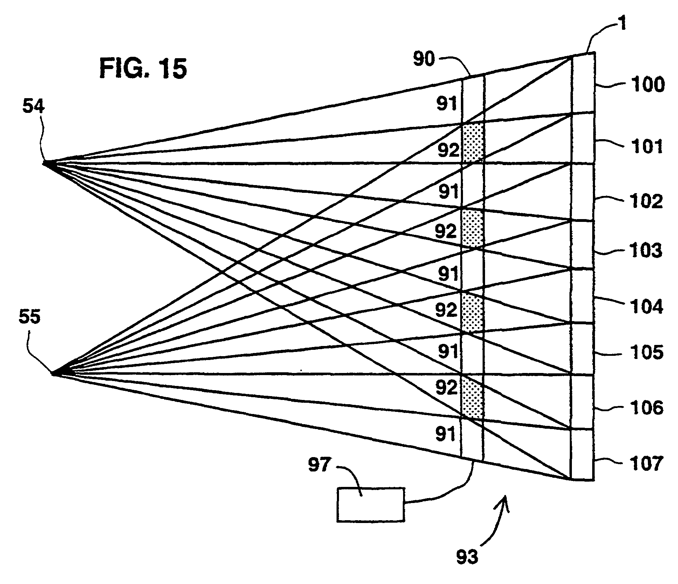

Each subarea **91** and **92** of shutter layer **90** may be made either substantially transparent (as shown in white in Figures 14 and 15) or substantially opaque (shown in black), under electronic control (i.e., via a coordinating element **97**). There are various known techniques for accomplishing this. One example shown in Figure 14a is an arrangement whereby light rotating means **94** are placed between two light polarizing elements **95** and **96** oriented in the same orientation. When any of the light rotating means **94** is inactivated (indicated in white in Figure 14a), light passes through polarizing elements **95** and **96** since they have an identical orientation, and the subarea (**92** in the example of Figure 14a) as a whole is light transparent. When, on the other hand, any of light rotating means **94** is activated (indicated in black in Figure 14a), light polarized by first polarizing element **95** and whose orientation is now 90 degrees changed by light rotating means **94** is unable to pass through second polarizing element **96**, and the subarea (**91** in the example of Figure 14a) as a whole is substantially opaque.

Another example to achieve a similar effect as shown in Figure 14b, is an arrangement whereby a light rotating means layer **94** is placed between two light polarizing elements **95** and **96** wherein one of the light polarizing elements (**96** in the example of Figure 14b) includes alternating subareas **91** and **92** polarizing light in perpendicular orientations, whereas the other light polarizing layer (**95** in the example of Figure 14b) polarizing light in one of the orientations (the orientation of subareas **92** in the example of Figure 14b). As is clearly apparent, activating/deactivating layer **94** results in alternating subareas **91** transparent/opaque and at the same time alternating subareas 92 opaque/transparent, respectively.

Each subareas **91** and **92** of shutter layer **90** in Figure 14, is then a shutter unit of the type described above under Figure 14a or 14b, or of a type in which other technology with the same purpose of creating a unit which is either substantially transparent or substantially opaque under electronic control, and capable of being switched rapidly, is used.

System **93** has two operation phases. In the first phase of operation, depicted in Figure 14, subareas **91** of shutter layer **90** are made opaque, while subareas **92** of shutter layer **90** are left transparent. Thus, light emanating from subregions **101, 103, 105,** and **107** of display **1** is visible to left eye **54,** yet hidden from right eye **55,** whereas light emanating from subregions **100, 102, 104,** and **106** of display **1** is visible to right eye **55,** yet hidden from left eye **54.**

In the second phase of the operation of system **93,** depicted in Figure 15, subareas **92** of shutter layer **90** are made substantially opaque and subareas **91** are made substantially transparent. Thus, light emanating from subregions **100, 102, 104**, and **106** of display **1** is now visible to left eye **54** but is not seen by right eye **55,** whereas light emanating from subregions **101, 103, 105,** and **107** of display **1** is now visible to right eye **55** but is not seen by left eye **54.**

If, then, the left image is displayed on display **1** in such a manner that the areas falling in subregions **101, 103, 105,** and **107** are displayed during the first phase of the operation as described above, and areas falling in subregions **100, 102, 104,** and **106** are displayed during the second phase of the operation as described above, whereas the right image is displayed on display **1** in such a manner that areas falling in subregions **100, 102, 104,** and **106** are displayed during the first phase and areas falling in subregions **101, 103, 105,** and **107** are displayed during the second phase, and if there is a sufficiently rapid alternation back and forth between the first and the second phases, then the persistence of vision in the human visual system will create the impression that the left eye is seeing the left image in its entirety in a continuous manner, and that the right eye is seeing the right image in its entirety in a continuous manner. As in the other embodiments previously described, if the right and left images represent a scene viewed from two slightly different perspectives, the resultant visual experience can be that of full-screen binocular stereo-optic illusion of depth, with no need for eyeglasses to be worn by the viewer.

As can be seen from the Figures describing the preceding embodiments and as will be further described subsequently, the geometry of the various arrangements of layers of polarizing means and/or of shutter means is dependent on such factors as the distance of the viewer from the display and the distance between the viewer's left and right eyes.

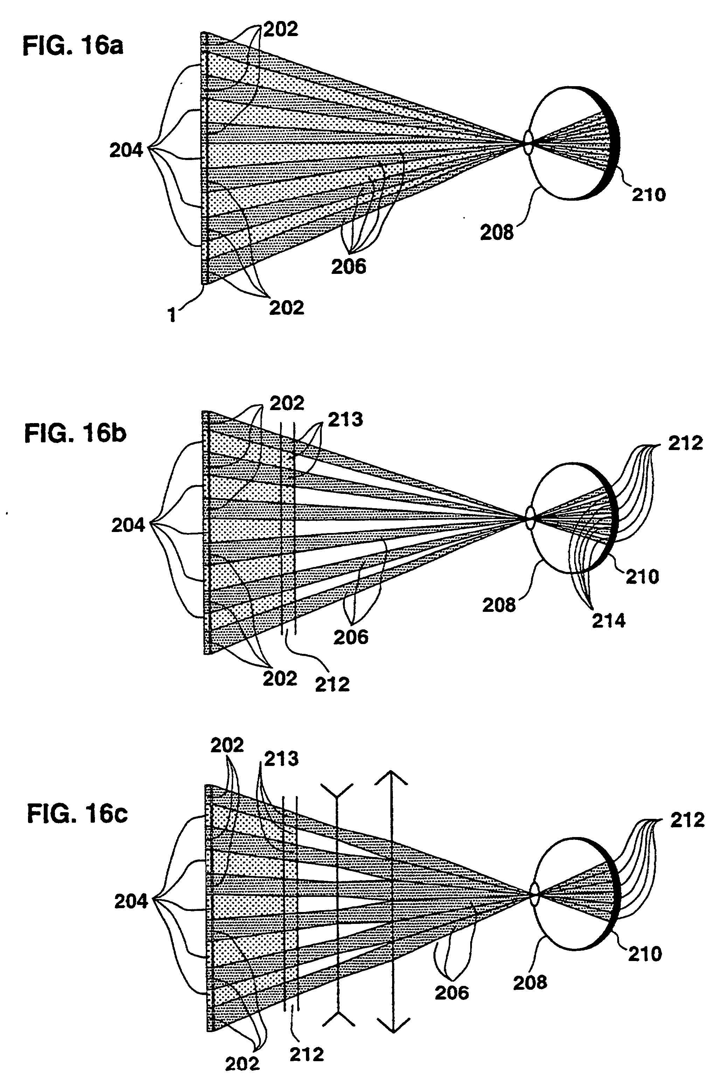

With reference now to Figures 16a-c, presented is a seventh embodiment of the present invention. Several systems described hereinabove, as well as various other systems for creating three-dimensional displays as described in the background section above, accomplish their purpose by hiding certain picture elements of the display from one eye, while allowing them to be seen by the other eye, by a light blocking system (e.g., layer **90** of Figure 14, layers **56** and **57** of Figure 13, etc.), in order to present a left image to the left eye while hiding it from the right eye, and to present a right image to the right eye while hiding it from the left eye, thereby providing the viewer with a perception of depth.

A disadvantage common to such systems is that for any given eye, part of the screen is invisible at any given time, creating a grainy image. That image is improved and the graininess reduced according to the current seventh embodiment, where lenses or arrays of lenticular elements are interposed between the eye and those components of the system which serve to block areas of the display from view.

This use of lenses is described as used in conjunction with the systems described hereinabove, but it can clearly be seen to be equally relevant to other methods which accomplish the same purpose by blocking alternating pixels or small regions of the screen.

Presented in Figure 16a is a display **1** divided into multiple subregions **202** and **204.** The pattern of these subregions, carried by rays of light **206** emanating from display **1** and aimed towards the eye **208,** is reproduced within the eye **208** on the retina **210,** all as well known in the art.

As shown in Figure 16b, a light blocking system **212,** having light blocking elements **213**, has been added for blocking rays of light emanating from subregions **204** of display **1** aimed toward eye **208,** while allowing the passage of rays of light emanating from subregions **202** of display **1** aimed toward eye **208,** and vice versa regarding the other eye (not shown). Various methods for doing this are described hereinabove, a shutter means (e.g., in a form of a layer) is one example. Thus only the rays of light **206** emanating from subregions **202**, but not those emanating from subregions **204**, reach eye **208**. The result on retina **210** is a series of areas **212** reproducing subregions **202** of the display, interspersed with blank areas **214** where the display has been blocked and no part of the image is represented.

As shown in Figure 16c, a diverging lens **216** and a converging lens **218** are placed between blocking system **212** and eye **208**, such that rays of light **206** are made to expand as they pass through diverging lens **216**, and such that at an appropriate distance the expansion is halted by converging lens **218**. When the focal lengths and placements of the lenses **216** and **218** are chosen appropriately, the result is that the rays of light arriving at eye **208** and retina **210** are spread more than they are under the situation described in Figure 16b (i.e., without the intervention of the lenses), such that areas **212** on the retina, which reproduce subregions **202** of display **1**, present a continuous image without the blank areas **214** between areas **212** of the image obtained under the situation of Figure 16b.

Thus in this embodiment, although the pixel resolution of the image on display **1** is half that of what it would have been without the intervention of blocking system **212**, the image displayed is nevertheless smooth and complete and does not present the graininess of the image which would be seen without the intervention of the lens system, i.e., lenses **216** and **218.**

Clearly, lenses **216** and **218** can be a pair of single lenses, or two individual arrays of diverging and converging lenticular elements for each blocking element **213**, or any other combination with the requisite optical characteristics of divergence and convergence.

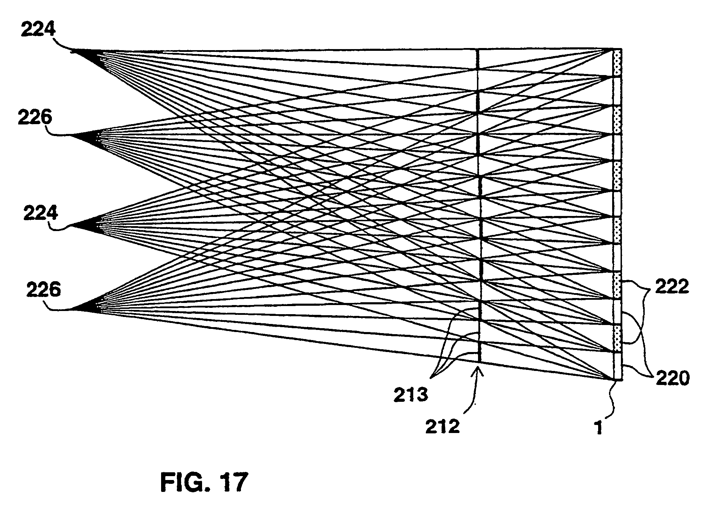

With reference now to Figure 17. The systems according to the embodiments of the present invention described herein in this document are designed to enable multiple viewers to three-dimensionally view a display at the same time.

As shown in Figure 17, a display **1** which is divided into first **220** (in white) and second **222** (in black) subregions, presenting picture elements of left and right images, respectively, can be viewed three-dimensionally by two left eyes **224** and two right eyes **226** of two viewers, provided that a suitable light blocking system, **212** having light blocking elements **213** as for example described above is disposed at a suitable distance between display **1** and the viewers. It is clear that the described system is also suitable for multiple (e.g., more than two) viewers.

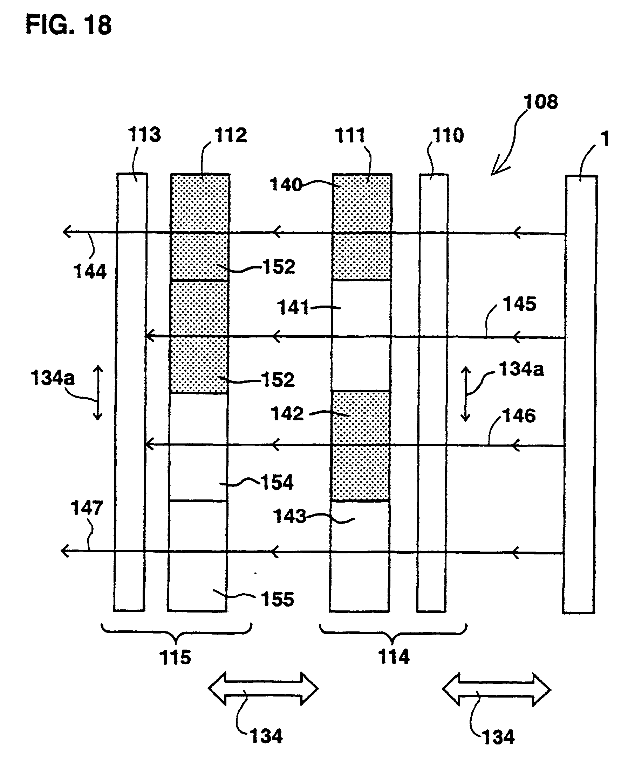

With reference now to Figures 18-20, presented is an eighth embodiment of the present invention. According to the eighth embodiment, systems **50**, **70** and **93** described under the fourth through sixth embodiments above are modified so as to be adjustable and thus capable of accommodating various positions and distances of the viewer from the display.

Thus, the eighth embodiment and ones to follow it hereinbelow, incorporate means for varying the geometry of the subareas of polarizing layers (such as layers **56** and **57** of Figure 6), or of the subareas of shutter layers (such as layer **90** in Figures 14-15), under the control of switching means. Accordingly, each subarea is itself composed of a plurality of elements. Depending on the embodiment in which this variable geometry is implemented, each element is either an independently controllable shutter element (an element of "shutter means" as defined), or an independently controllable subarea of light rotating means capable, when activated, of changing the polarization orientation of polarized light passing through it 90 degrees, or an element composed of a combination of independently controllable light rotating means combined with a polarizing layer.

As shown in Figure 18, the eighth embodiment of the present invention is a modification of system **50** of the fourth embodiment described hereinabove, referred to herein as system **108**. Figure 18 may be considered as a schematic view of parts of display **1** and polarizing layers **57** and **56** of Figure 6, yet in Figure 18 describing the eighth embodiment, polarizing layers **56** and **57** are modified as follows. Former layer **57** is now labeled **114** whereas former layer **56** is now labeled **115**. Layer **114** includes a first and a second sublayers **110** and **111**, respectively, whereas layer **115** includes a third and a fourth sublayers **112** and **113**, respectively.

Sublayers **110** and **113** are of polarizing means, functioning similarly to layers **56** and **57** as described for Figure 6, yet in the example of Figure 18, sublayers **110** and **113** are not themselves divided into subareas with differing polarization orientations, rather both sublayers **110** and **113** pass light polarized in the first orientation throughout the entire sublayer.

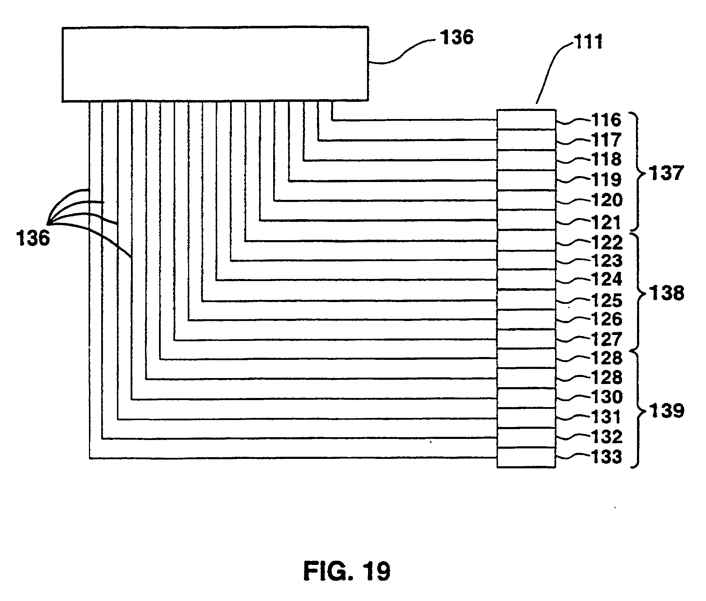

Both sublayers **111** and **112** include switchable light rotating means divided into a plurality of independently switchable elements. Figure 19 presents a detail view of part of one such sublayer **111,** which is divided into a plurality of elements **116-133.** Each element **116-133** is independently connected by connecting means **136** to a multi-line controlling switching means **135,** by which each element **116-133** of layer **111** may be activated or inactivated. Switching means **135** is typically used to activate groups of elements selected from elements **116-133.** In the example given in Figure 18, elements **116-121** are activated as indicated by their dark color, elements **122-127** are inactive as indicated by their light color and elements **128-133,** like elements **116-121** are also activated, etc., creating activated blocks **137** and **139,** and inactive block **138.** Blocks **137-139** of elements **116-133** of layer **111,** both active and inactive, are used in conjunction with polarizing sublayer **110** (Figure 18) to produce the functionality described for layer **57** of Figure 6.

Sublayer **112,** like sublayer **111** is also constructed according to as shown in Figure 19 and described hereinabove for sublayer **111,** and the active and inactive blocks of layer **112,** are similarly used in conjunction with polarizing sublayer **113,** to produce the functionality described for layer **56** of Figure 6.

As shown in Figure 18 and described above, layer **114** is constructed of two sublayers, sublayer **110** of polarizing means, polarizing light in the first orientation, and sublayer **111** of switchable light rotating means constructed as described in Figure 19. Subareas **140** and **142** (each made of a plurality of elements not detailed in Figure 18) are marked dark as being activated (that is, each of the elements of which each of subareas **140** and **142** are composed of is activated), whereas subareas **141** and **143** are marked light as being inactivated.

As further shown, layer **115,** like layer **114** is also constructed of two sublayers, sublayer **113** of polarizing means, polarizing light in the second orientation, and sublayer **112** of switchable light rotating means constructed as described for sublayer **111** in Figure 19. Subareas **152** and **153** (each made of a plurality of elements not detailed in Figure 18) are marked dark as being activated (that is, each of the elements of which each of subareas **152** and **153** are composed is activated), whereas subareas **154** and **155** are marked light as being inactivated.

Lines **144, 145, 146**, and **147** represent four possible combinations of activation/inactivation which can be encountered by rays of light originating from display **1**, traversing layer **114** and then encountering layer **115** while traveling in the direction of the viewer's eyes. Light ray **144** encounters activated regions in both sublayer **111** and **112,** light ray **145** encounters an activated region only in sublayer **112,** light ray **146** encounters an activated region only in sublayer **111,** and light ray **147** encounters no activated regions.

Since in the example of Figure 18, polarizing sublayer **110** polarizes light in the first orientation, it is apparent that for subareas of layer **114** in which layer **111** is not activated (e.g., subareas **141** and **143** in Figure 18), layer **114** as a whole functions just like subareas **58** of layer **57** of Figure 6. Thus, sublayer **110** polarizes light passing through it in the first orientation, and the non-activated subarea (**141** or **143**) of layer **111** makes no changes the polarization of that light. As for rays of light passing through areas of layer **114** for which sublayer **111** is activated (e.g., subareas **140** and **142** in Figure 18), the situation is different. These rays are also polarized in the first orientation by their passage through sublayer **110,** but then they are rotated 90 degrees into the second orientation by the activated subareas **140** or **142** of sublayer **111** through which they pass. Thus, these activated subareas of layer **114** have the same functionality as subareas **59** of layer **57** of Figure 6.

Consideration is now focused on these light rays as they progress to layer **115**. Due to the effect of layer **114**, light ray **144** arrives at layer **115** polarized in the second orientation. There light ray **144** encounters activated subarea **152** of switchable rotating sublayer **112.** Activated sublayer **112** rotates light ray **144** 90 degrees back to the first orientation. Light ray **144** proceeds onto polarizing sublayer **113** having the first orientation, which sublayer **113** consequently passes ray **144** on towards the viewer's eye. Light ray **145,** which is polarized in the first orientation after passing through layer **114,** as described above, encounters activated subarea **153** of sublayer **112,** which rotates it 90 degrees to the second orientation. This light ray then encounters sublayer **113** which has the first orientation, and consequently is blocked and goes no further. Light ray **146** arrives at layer **115** polarized at the second orientation, encounters sublayer **113** and is blocked. Light ray **147** arrives at layer **115** polarized at the first orientation. It's polarization is unchanged by inactivated subarea **155** of sublayer **112,** thus, it is then passed on through sublayer **113** and proceeds onto the viewer's eye. From the above description it is clear that sublayer **113** functions as an analyzing filter for polarized light.

Thus, for subareas of layer **112** which are inactivated at a given time, layer **115** as a whole passes light of the first orientation and blocks light of the second orientation, whereas for subareas of layer **112** which are activated at that time, layer **115** as a whole passes light of the second orientation and blocks light of the first orientation. In other words, for subareas where layer **112** is inactivated, layer **115** behaves like subareas **58** of layer **56** of Figure 6, whereas in subareas where layer **112** is activated, layer **115** behaves like subareas **59** of layer **56** of Figure 6.

Hence, layer **115** of Figure **18** provides the same functionality as that described for layer **56** of Figure 6, whereas layer **114** provides the same functionality as that described for layer **57** of Figure 6.

Yet, in contradistinction to system **50** of the fourth embodiment presented in Figure 6, according to the present eighth embodiment, the sizes and placements of the various subareas are not physically fixed by the material construction, rather these sizes and placements are subject to configuration using multiple switching means **135**, as described in the discussion of Figure 19.

Consequently, the size and placement of activated and inactivated subareas of layers **111** and **112** of Figure 18 can be varied under electronic control. In turn, the various subareas can now be effectively modified in such ways that various aspects of the geometry of the embodiment can be adjusted to the convenience of the viewer, taking into account his position, personal characteristics as the distance between his eyes, the degree to which he tends to move his head while watching the display, and various other considerations of convenience and taste.

It is also clear, that various aspects of the geometry of the embodiment can be adjusted to the convenience of the viewer, if only layer **115** is constructed as described by Figure 18, while layer **114** is made in a fixed geometry as for example described above under the forth embodiment concerning layer **57** of for Example of Figure 6. Similarly, if layer **114** is constructed as described by Figure 18, while layer **115** is made in a fixed geometry as for example described above under the forth embodiment concerning layer **56** of for Example of Figure 6, various aspects of the geometry of the embodiment can be adjusted to the convenience of the viewer.

Finally, it may be noted that even if both layer **114** and layer **115** (or the equivalent, layers **56** and **57** of Figure 6) are constructed of fixed geometry, either or both of the layers may yet be moved sideways with respect to the viewer and to the display using mechanical means, as indicated by arrows **134a** in Figure 18, so as to accommodate the system to the particular position of the viewer at any given time.

A remaining dimension in which one might wish to vary the system presented in Figures 18 and 19 is the distance between layers **114** and **115** (or layers **56** and **57** in Figure 6), and between these layers and display **1.** This can be accomplished in two alternative ways.

Firstly, as indicated by arrows **134** mechanical means may be used to simply slide the layers closer together or further apart from one another and from display **1**. This is also the case for any of the embodiments described in this document, wherein change in position of a viewer may be compensated either electronically or mechanically.

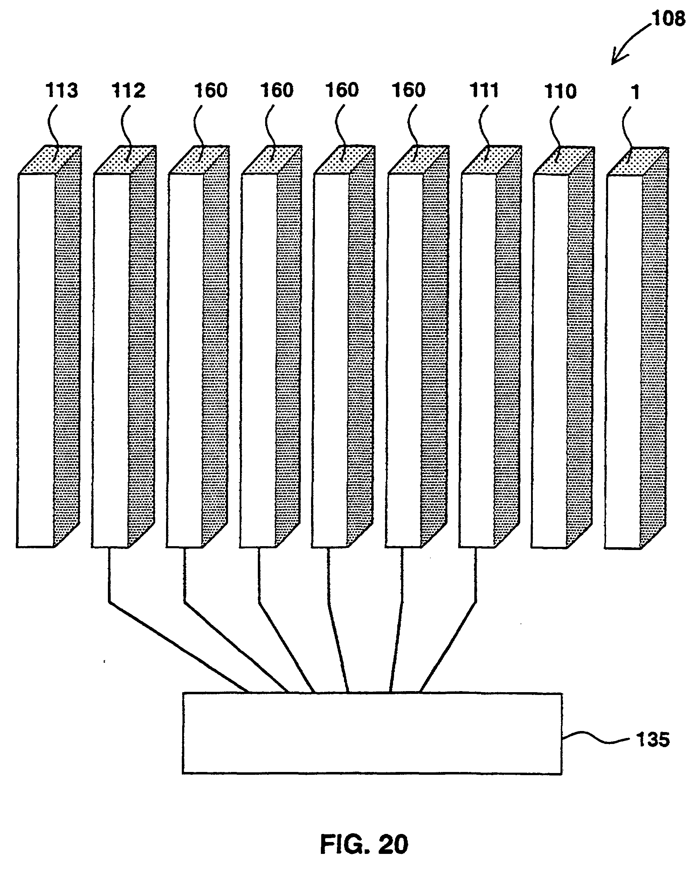

Secondly, with reference now to Figure 20, accomplishing the same purpose under electronic control with no moving parts involved is described. As shown in Figure 20, multiple layers **160** each identical to layer **111** (or **112**) are placed between sublayers **111** and **112.** Since any of sublayers **111, 112** or **160** have no substantial influence on the light unless they are activated, and since each layer by definition can be activated or not activated under control of electronic switching means **135,** any pair from among the sublayers **111, 112** and **160** can be used as described for layers **111** and **112** in Figure 6. Thus, it will be appreciated that not only do layers constructed as in Figure 19 allow for flexibility in the size and placement of subareas along the orientation of their construction, but that an array of such layers along the axis joining the viewer and the display provides for flexibility in fixing the distance of the active layer one from the other and their distance from the display.

Since the construction principles elucidated in Figure 19 can in fact refer to elements (e.g., layers) of arbitrary shape, and in particular to elements which could be organized in a checkerboard pattern rather than in a pattern of strips as described in Figure 19, it is clear that the arrangement gives total flexibility, under electronic control, concerning the placement and spacing of the active layers of the device.

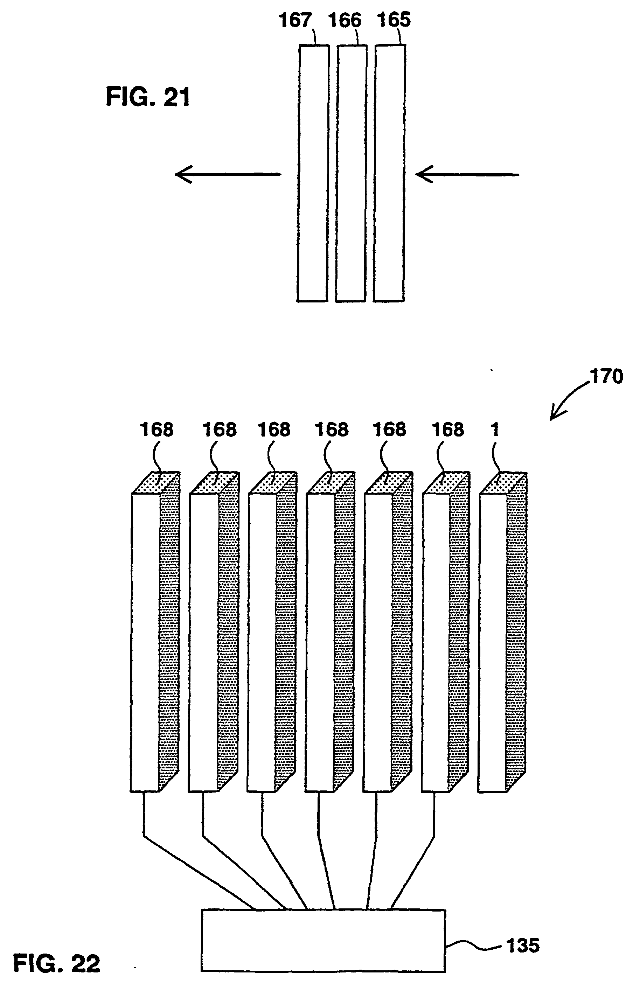

With reference now to Figures 21-22, presented is a ninth embodiment of the present invention. According to the ninth embodiment provided is a system **170** to enable flexibility of the internal geometry of system **93** as described above under the sixth embodiment of the present invention (Figures 14-15). As shown in Figures 14-15, shutter means formed as layer **90** having subareas capable of being turned on/off under electronic control. As shown in Figure 14a and described above, one method for constructing such shutter means is to sandwich a layer of switchable light rotating material (i.e., providing what is known in the art as the Kerr effect) between two light polarizing layers having the same orientation, as now redepicted in Figure 21. Thus, light entering a first polarizing layer **165** having a first orientation traverses a switchable light rotating layer **166.** If layer **166** is inactivated, the light is unaffected and passes freely through a second polarizing layer **167,** itself also oriented in the first orientation. If, on the other hand, layer **166** is activated, then the orientation of the polarized light passing through it is rotated 90 degrees, giving the light the second orientation. This light is then blocked by polarizing layer **167** which has the first orientation.

It will be appreciated that layer **166** can be constructed similar to layer **111** as described in Figure 19, and that consequently it can be divided into subareas as desired, controlling each of the subareas under electronic control. Thus, the size and spacing of the subareas (as used in Figures 14 and 15) can be adjusted according to the convenience, placement, and personal characteristics and preferences of the viewer.

It may be noted that here, as with the preceding eighth embodiment, the flexibility provided in varying over time the choice of elements involved in each subarea provides great versatility in the use of these elements. For example, rather than simply assigning sets. of elements to subareas and then switching the subareas on/off as blocks, as was described in Figures 14 and 15, one might create a light blocking subareas of a particular width, and then add individual elements to one side of the blocking subarea while removing (inactivating) elements from the other side of the blocking subarea, with the effect of causing the light blocking subarea (or block) to be translated along the layer. This effect may be useful, for example, to accommodate viewers whose position is too far from the display to allow the size of blocking blocks to be comparable to the size of pixels on the display.

As for the eighth embodiment, the ninth embodiment too can provide flexibility along the axis stretching between the viewer and the display. As shown in Figure 22, light emanating from display **1** and directed towards the user's eye encounters a plurality of shutter layers **168,** each of which is constructed as described above and depicted in Figure 21. This arrangement provides system **93** of the sixth embodiment (as described by Figures 14-15) flexibility in the placement of the shutter layers along the axis joining the viewer and the display, just as the arrangement shown in Figure 20 provided such flexibility for the fourth embodiment of the present invention.

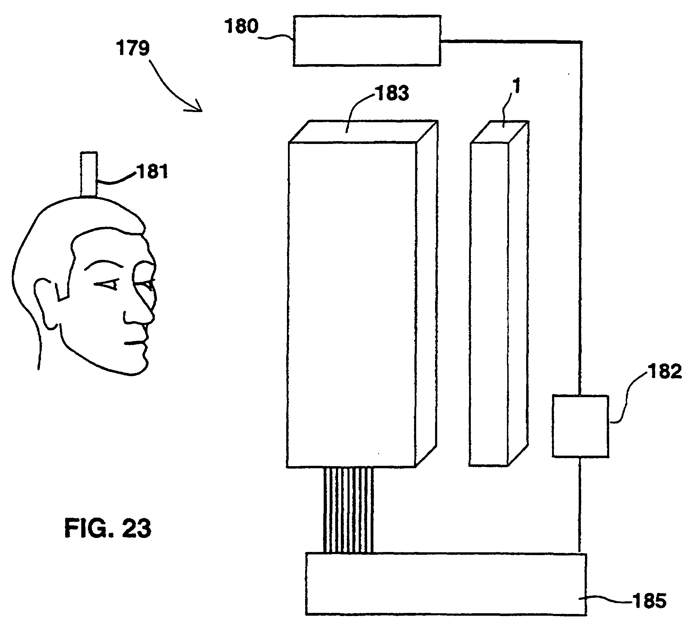

With reference now to Figure 23, presented is a tenth embodiment of the present invention. According to the tenth embodiment, provided is means **179** for sensing the position of the viewer with respect to the display, and using that information, as interpreted by programmed computing means **182**, to control switching means **135**. As is recalled from Figures 19, 20, and 22, switching means **135** is used to modify the size and placement of the various subareas of the various layers (grouped together in Figure 23 under **183**) in order to adapt the system to the position of the viewer with respect to the display.

There are a variety of known techniques whereby the position of the user can be sensed. For one example, a "three-dimensional mouse" **181,** marketed by Pegasus Ltd. corporation of Jerusalem Israel, is capable of reporting its location in three-dimensions with respect to a predefined origin point. If "mouse" **181** was worn by the viewer in a manner which retains a fixed relationship between the position of "mouse" **181** and the position of the viewer's eyes, and the system were then calibrated to take into account the relationship between the position of mouse **181** and the position of the eyes, then by simple calculation the position of the eyes with respect to the system can be determined.

Another technique which might be used would be the wearing of a pin with a pair of emitters of infrared or visible light, coupled with a sensor capable of reporting the angle of the emitter with respect to the system, and the angular distance between the two emitters (from which its distance may be calculated). For a more complex but more convenient example, given a video camera **180** mounted on the system and pointing generally in the direction of the viewer, computing means can be programmed to identify the viewer's face in the received picture, and the eyes within the face. Once calibrated, such a system could report the direction of the eyes with respect to the display, and, by triangulation, their distance.

The information generated by any such system for determining the placement of a viewer with respect to the apparatus can then be used, subsequent to appropriate calculation, to determine which elements are to be activated by switching means **135** to produce the desired configuration.

Figure 24 shows an example of how distance and position information can be used in calculation. The following paragraph refers to the terms of Figures 13-15 and the sixth embodiment, but clearly can be generalized to the other embodiments in obvious manner.

In Figure 24 a representative area from Figure 13 is shown in the context of Cartesian *x*/*y* coordinates. Let *E* be the distance between left eye **54** and right eye **55,** *D* the distance between each of eyes **54** and **55** and display **1,** and *I* the length of segment of image (**63, 64**) on the display, and if the position of left eye **54** is (X_{E}, Y_{E}), and if the height **63** of the start of a given segment on the display is taken to be (Y_{S}), then the following coordinates describe the associated points on the Figure:

| | |
|---|---|
| (X_{E} , Y_{E} + E) | is the position of the right eye **55;** |
| (X_{E} + D, Y_{S}) | is the position of point **190** on the display; |
| (X_{E} + D, Y_{S} + I) | is the position of point **191** on the display; |
| (X_{E} + D, Y_{S} + 2I) | is the position of point **192** on the display; |
| (X_{E} + D, Y_{S} + nI) | is the position for the "n"th succeeding point on the display. |

Simple algebra can now be used to derive equations for each of the lines-of-sight (**195, 196, 197, 198, 199, 200**) appearing in Figure 24, and for any similar lines extending above and below the section of the system depicted.

Solving the simultaneous equations for lines of sight **196** and **198** yields point **193**. Solving the equations for lines of sight **197** and **199** yields point **194**. Points **193** and **194** are the endpoints of shutter segment **72**. Once points **193** and **194** are known, the position and the length of shutter segment **72** has been determined.

In this manner, given information about the position of the eyes with respect to the display, the size of the display, and the number of areas into which the image is to be divided, one can calculate the position of the shutter layer and the appropriate configuration of its internal subdivisions. In similar manner, given information about the position of the eyes, the size and position of the display, and the position and orientation of shutter layer **90,** one can calculate the sizes and positions for the subareas into which shutter layer **90**, and the image being displayed on display **1** must be divided.

As heretofore described, switching means **135** can select elements of rotating means which are activated in the context of the eighth and ninth embodiments, thereby adapting the internal geometry of layers and subareas of those embodiments to the distance and angle of view of the viewer. Since these processes are all controlled at electronic speeds, the internal geometry of the system can adapt to changes in the viewer's position on an ongoing basis.

It will be appreciated by one ordinarily skilled in the art that having layer **57** positioned contiguously with display **1** and ensuring that its subareas coincide with the subregions (e.g., pixels) of display **1**, enables use of layer **56** having subareas of a fixed dimension, while adjusting the system for a viewer positioned at different distances from display **1** simply involves translating layer **56** back or forth relative to display **1**.

It should be noted however, that in some applications mechanical means, being simpler and less expensive, would be preferable.

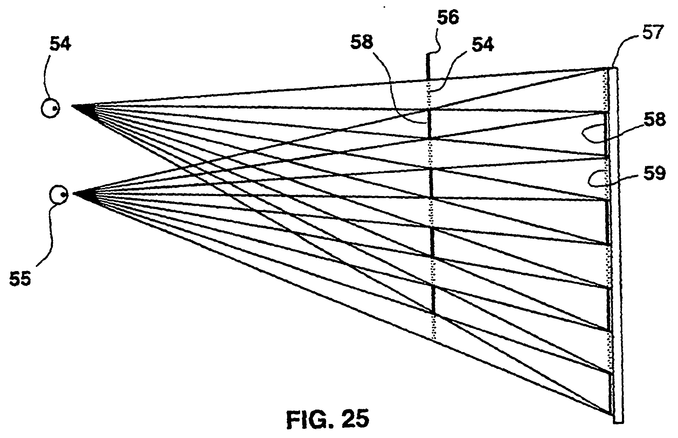

With reference now to Figures 25-30, presented is an eleventh embodiment of the present invention, directed at providing three-dimensional viewing for multiple viewers. The above embodiments of the invention describe various systems for allowing selected regions of a display to be seen by a viewer's left eye while blocking them from the view of his right eye, and at the same time allowing other selected regions of the display to be seen by a viewer's right eye while blocking them from the view of his left eye. It is stated with respect to various embodiments above that the systems described can be used to provide for multiple viewers of the same display. Herein, one such embodiment is described, using a modification of the techniques described under the eighth embodiment above, to provide three-dimensional binocular vision without eyeglasses for multiple viewers of the same display at the same time.

Figure 25 is a reproduction of Figure 11, with the switching layer **80**, shown in Figure 11, removed. As in Figure 11, the polarizing subareas **58** and **59** of layers **56** and **57** are presently arranged so that the left eye **54** sees the entire display **1**, and the right eye **56** is prevented from seeing display **1.**

In the current embodiment, layer **57** is contiguous to display **1** and is preferably constructed according to the description of the construction of the layer **114** (combining sublayers **110** and **111**) as described above under Figure 18, whereas layer **56,** the layer nearest the viewer, is preferably constructed according to the description of the construction of layer **115** (combining sublayers **112** and **113**) as further described under Figure 18 above. Recall that sublayers **111** and **112** are described in greater detail under Figure 19 and include a set of individually switchable Kerr elements capable (when switched on) of rotating the axis of polarization of linearly polarized light by 90 degrees.

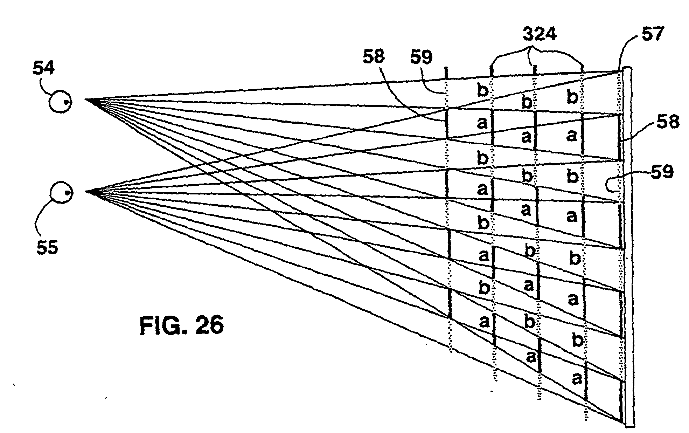

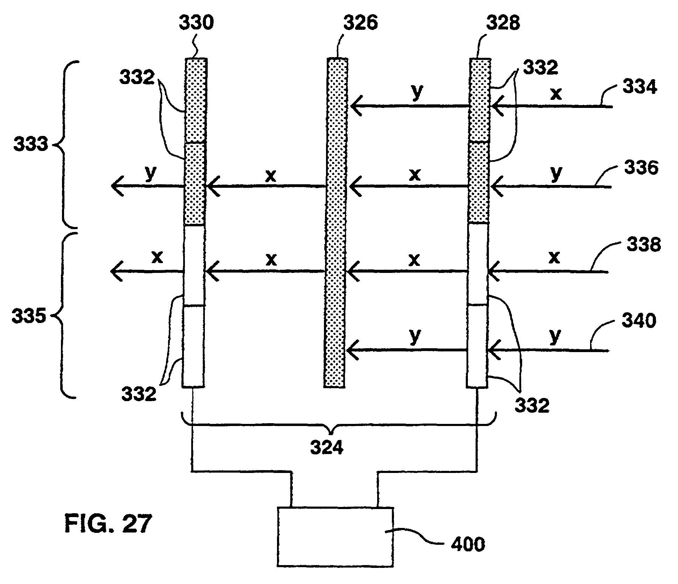

In Figure 26 a set of additional layers **324**, each having at any given time, an arrangement of first **a** and second **b** subunits, as described in detail below, are introduced between layers **56** and **57.** The construction of each of layers **324** of Figure 26 is given in detail in Figure 27. Sublayer **326** of Figure 27 is a light polarizing filter oriented in a particular axis of polarization. Sublayers **328** and **330** are each constructed of a multitude of elements **332** of switchable Kerr cells as described under Figure 19 above (elements **116-133** there). That is, elements **332** of which sublayers **328** and **330** are made, are capable of acting as half-wave retarders, i.e., they are capable of changing the axis of orientation of linearly polarized light passing through them by 90 degrees, and that effect may be turned on or turned off in any desired combination of elements **332,** and hence in any desired area of any of layers **324,** under electronic control. It should be noted that in Figure 27 the distance between the sublayers has been exaggerated to facilitate the explanation, but they may be thought of as being contiguous.

Figure 27 is now used to describe the effect of layer **324** upon beams of polarized light incident from the right. Beams **334** and **338** are taken to be polarized in a first orientation X, and beams **336** and **340** are polarized in a second orientation Y, perpendicular to X. For purposes of the example, filter layer **326** is taken to pass light polarized with the X orientation and block light polarized with the Y orientation. The darkened elements **332** of layers **328** and **330** are taken to be switched so that their half-wave retardant effect as described above is activated. Blank elements **332** of layers **328** and **330** are switched so that their retardant effect is inactivated and they have no significant influence on the light passing through them. Beam **334,** polarized in the X orientation, on passing through activated element **332** of layer **328** is changed to the Y orientation, and is consequently blocked by filter **326** and goes no further. Beam **336** arrives at the activated element **332** of layer **328** having the Y orientation. Element **332** changes that orientation to X. The beam, now having the X orientation, passes through filter **326** and reaches activated element **332** of layer **330,** which changes it back to the Y orientation. Beam **338** having the X orientation is unaffected by the inactive element **332** of layers **328.** It reaches filter **326** with its X orientation unchanged, is passed by filter **326,** reaches inactive area **332** of layer **330,** by which it is also unchanged, and passes on through, unblocked and with the same orientation X which it originally had. Whereas, beam **340** having the Y orientation passes through inactive element **332** of layer **328** unchanged, and reaches filter **326** with the Y orientation. It is consequently blocked and goes no further.

Thus, Figure 27 shows how inactive elements **332** of layer **324** have the effect of passing light polarized with the X orientation and blocking light polarized with the Y orientation, whereas active elements **332** of layer **324** have the effect of blocking light polarized with the X orientation and passing light polarized with the Y orientation. In both cases, the light which does succeed in passing through layer **324** retains its original polarization. In other words, each layer **324** is a combination of sublayers **326, 328,** and **330,** which have elements **332** that can be activated or inactivated for selected blocks or units (i.e., forming first 333 or second **335** types of units) along the length of layer **324.** The activated units **333** behave as linear polarizing filters in the Y orientation, the inactivated units **335** behave as linear polarizing filters in the X orientation. At least one layer **324** of this construction is utilized as shown in Figure 26.

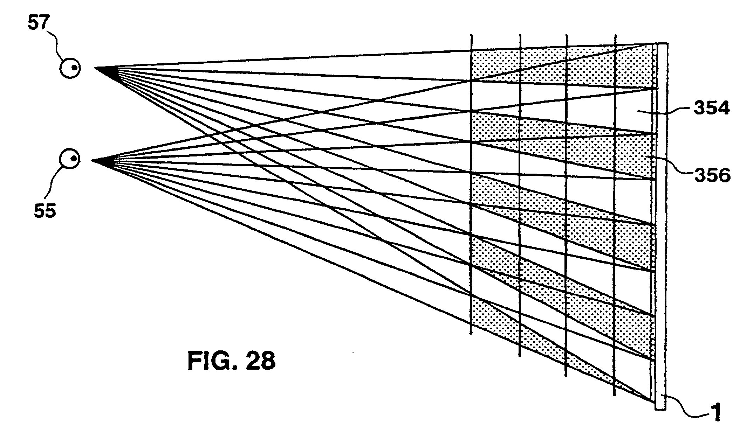

As mentioned previously, subareas **58** and **59** of layers **56** and **57** of Figure 26 are switched so as to have the same polarization orientations as was depicted for layers **56** and **57** of Figure 11 described above. Consequently, at the moment depicted, left eye **54** can see all of display **1**, and right eye **55** can see none of display **1**. Layers **324** of Figure 26, as described individually in Figure 27, can be switched in whole or in part so as to behave as polarizing filters of either orientation. Assume then that each of layers **324** is switched in such a way that any first subunit **a** (corresponding to subunit **335** of Figure 27) situated between X-oriented polarizing subareas **58** of layer **57** and X-oriented polarizing subareas **58** of layer **56** are switched so as to also have the X polarization orientation. Similarly, second subunits **b** (corresponding to subunit **333** of Figure 27) of layers **324** which are between Y-oriented subareas **59** of layers **56** and **57** are switched so as to have the Y orientation. The same situation is depicted in Figure 28, but in this Figure, for the sake of clarity, the polarization orientation of the columns of light has been emphasized in light **354** and dark **356** emphasis. All display **1** is visible to left eye **54** and hidden from right eye **55.**

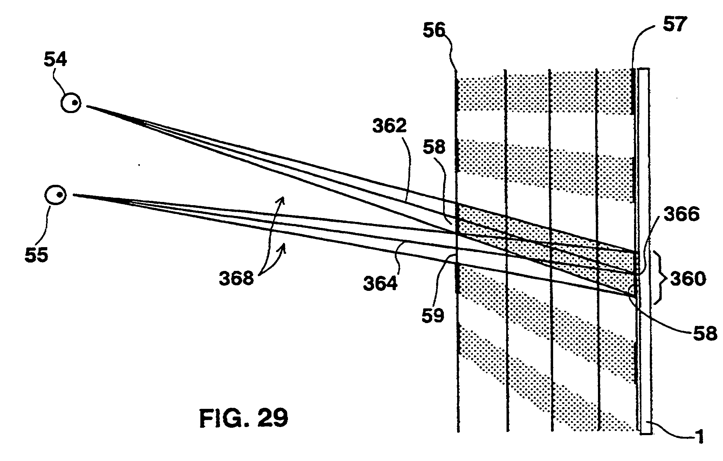

The same situation is reproduced in Figure 29, but for the sake of clarity shown are only lines of sight **368** between each of eyes **54** and **55** and a single particular area **360** of display **1**. In addition, line **362** shows the line of sight from left eye **54** to a particular pixel **366** on display **1**, and line **364** shows the line of sight from right eye **55** to that same pixel **366.** As can be seen from Figure 29, line of sight **362** traverses only through subareas 58 polarized in one same orientation, hence eye **54** can see pixel **366** along that line. Line **364**, on the other hand, crosses a subarea **59** of one orientation in layer **56**, and a subarea **58** of the opposite orientation in layer **57**. Consequently that light is blocked and the pixel cannot be seen from the right eye.

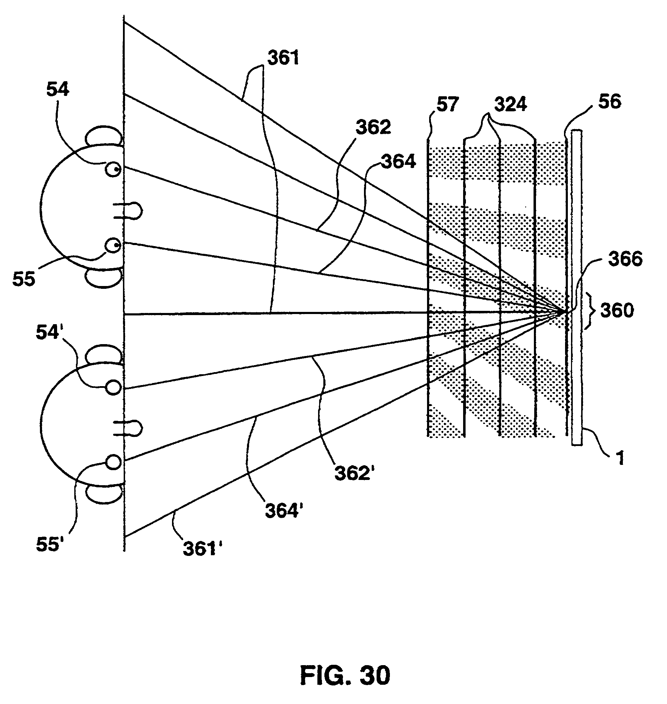

The same arrangement is carried over into Figure 30, which reproduces line of sight **362** between left eye **54** and pixel **366** and line of sight **364** between right eye **55** and pixel **366**. In addition, a plurality of other possible lines of sight (e.g., **362'** and **364')** have been drawn. In particular, the eyes **54'** and **55'** of another possible viewer have been drawn at **362'** and **364'.**

The above description demonstrates that it is possible to arrange subareas **58** and **59** of layers **56** and **57** in such a way as to block all of display **1** from right eye **55** while showing it to left eye **54,** and then by switching orientations where appropriate, it is possible to do the opposite and show all of display **1** to right eye **55** while hiding it from left eye **54.** Inspection of Figure 30, however, will show that layers **56** and **57** alone are not sufficient to hide a given pixel (e.g., pixel **366**) from all other possible lines of sight.

In the absence of layers **324** pixel **366** would be visible to right eye **55'** of the second viewer, because on layers **56** and **57** the polarizing sections (i.e., subareas **58**) are of the same orientation. The presence of layers **324,** however, prevent any such viewing 'from the side'. As seen from inspecting Figure 30, each of the additional potential lines of sight will cut at least one of the layers **324** at a point where the polarization of layer **324** is contrary to that imposed by the polarizing subarea of layer **56** adjacent to pixel **366.** In other words, the first viewer's left eye **54** can see the pixel, but his right eye cannot, and similarly neither eye (**54'** or **55'**) of the second viewer can see the pixel, nor can that pixel be seen from any of the other potential lines of sight, some are shown in the Figure and are collectively indicated by reference sign **361.**

Consequently, the system as described under the present eleventh embodiment has the potential for showing the entire display only to a narrow line of sight. In the situation depicted in Figure 30, only left eye **54** of the first viewer can see the display in the configuration depicted. However, as will be appreciated, the same principles allow for a subsequent configuration of the switchable elements of the system into a configuration which will allow for left eye **54'** of the second viewer, and only the left eye of the second viewer, to see display **1**. At a later time the configuration can be changed so that only right eye **55** of the first viewer sees display **1**, and at a still later time the configuration can be changed so that only right eye **55'** of the second viewer sees the display.

In this manner, the system as a whole can be made to cycle through a set of configurations which make display **1** as a whole, or any selected part thereof, visible to the appropriate eyes of each of the viewers. Similar to the description under the eighth embodiment above, the changes in configuration are timed to coordinate with the presentation of a left image on the portions of the display which are visible to the viewers' left eyes, and with the presentation of a right image on the portions of the display which are visible to the viewers' right eyes. In this manner, a plurality of viewers can see the binocular three-dimensional display. The density of layers **324** (that is, the number of layers **324** interposed between layers **56** and **57**) is determined by the extent to which it is desired to prevent inappropriate vision from extreme sideways angles: if all viewers are at angles nearly perpendicular with the face of the display, a single layer **324** may suffice. On the other hand, if there are viewers viewing the screen substantially from the side, a plurality of layers **324** will be necessary to prevent inappropriate vision.

Note that this embodiment is appropriate for providing viewing for multiple viewers under embodiments, wherein the display system as a whole is sensitive to the position of the viewer (e.g., the tenth embodiment described hereinabove). Under the present embodiment, multiple viewers, whose positions change independently, can be accommodated.

The number of viewers able to view the display according to the described system of the present embodiment is limited by the amount of light generated by the display, since each eye will be seeing the display for only a fraction of the time. It is moreover limited by the speed of the switching mechanisms employed, and by the physiological limitations of the viewers' optical systems for responding to light which is visible for only short periods of time. A control system **400**, shown in Figure 27, aimed at controlling the on or off situation of light rotating means in elements **332** of sublayers **328** and **330** of layer **324,** is used to control the direction of light emanating from the display at any given time.

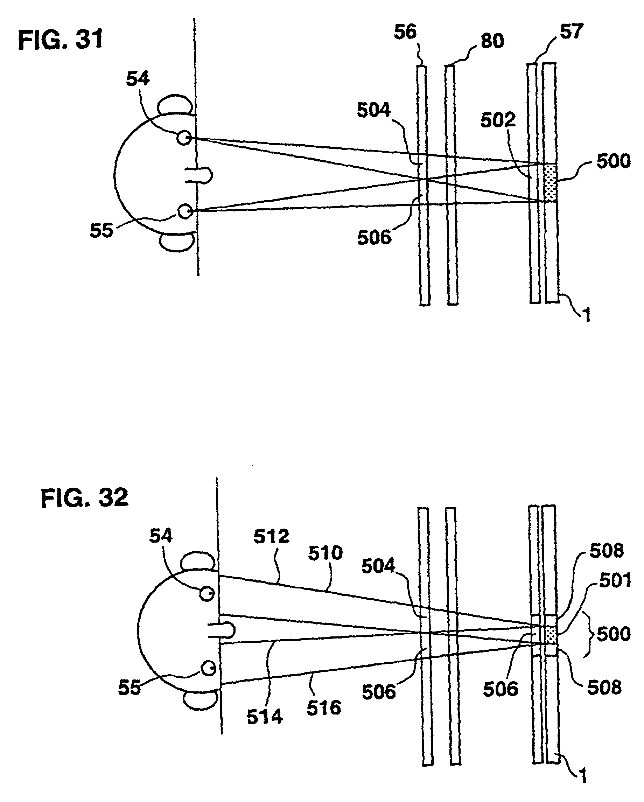

With reference now to Figures 31-33, presented is a twelfth embodiment of the present invention. One of the characteristics of the systems described above for controlling the presentation of the left and the right images to the left and right eyes of the viewer has been the systems' dependence on a specific position of the viewer for their operation. Some of the embodiments provide for the systems' awareness of the position of the viewer's eyes and its adaptation to his movements (see the tenth embodiment above).

The current twelfth embodiment describes a minor change in the system's configuration which renders the exact positioning of the user's head with respect to the display screen less critical than it would otherwise be.

In Figure 31 a few of the components of the system pictured for example in Figure 11 are presented in isolation. Thus, Figure 31 shows a single region **500** from within display **1**, a single polarizing subarea **502** from within first polarizing layer **57** which is contiguous to display **1**, and two polarizing subareas **504** and **506** from second polarizing layer **56.** As has been explained for the various embodiments above, if subarea **504** polarizes in the same orientation as subarea **502** and if subarea **506** polarizes in the perpendicular orientation, then the portion of image presented at region **500** of display **1**, will be seen by left eye **54** and blocked to the vision of right eye **55.** If then switchable half-wave retarding layer **80** is activated, region **500** of display **1** becomes visible to right eye **55** and is blocked from left eye **54.**

The arrangement is clearly sensitive to the position of the eyes. Were the user's head to move slightly to the right or to the left, or if the viewer were to move towards the display or away from it, then part of region **500** would become blocked to the appropriate eye, or visible to the inappropriate eye.

Figure 32 provides a slight modification to the arrangement of Figure 31, which modification makes the system more permissive of head movements. It is well known to those practiced in the art that the human visual system will combine discreet points of light into the appearance of a continuous field, if the individual points are sufficiently close together and sufficiently bright. Close inspection of newspaper photograph reproductions demonstrates this phenomenon, as does the inspection of many television screens under a magnifying glass.

This phenomenon is utilized in Figure 32. Region **500** of display **1** is reproduced in Figure 32, but the part of region **500** actually used to depict region **500'**s section of the image is herein depicted as first subregion **501.** Thus, subregion **501** shows an appropriate pixel from within the image being displayed on this part of the display, and it will be surrounded by small second subregions **508** within which the image is not displayed. In contrast, polarizing subareas **502, 504,** and **506** have the same relative dimensions and placement as they had in Figure 31, and perform the same functions.

Line-of-sight **510** is drawn from the top of subregion **501** through the top of polarizing subarea **504**. Line of sight **512** is drawn from the bottom of subregion **501** through the bottom of polarizing subarea **504**. These lines consequently define the limits of the area through which the viewer's left eye **54** can move, without modifying the image seen by that eye in region **500** of the display.

Similarly, line-of-sight **514** is drawn from the top of subregion **501** through the top of polarizing subarea **506,** and line of sight **516** is drawn from the bottom of subregion **501** through the bottom of polarizing subarea **506**. These lines consequently define the limits of the area through which the viewer's right eye **55** can move, without modifying the image seen by that eye in region **500** of display **1**.

Thus by utilizing small and intensive pixels within subregion **501** of display **1**, and surrounding them with small subregions **508** which do not emit light and are not used to display the image, a situation is created which is relatively tolerant of movements of the viewer's head and eyes while he is watching the image.

It is to be remembered that Figure 32 depicts the arrangement for a single region **500** of display **1**. An arbitrary number of other regions of display **1**, or indeed all the regions of the display, can be arranged in this manner, so that the areas of freedom of motion they enable, overlap. Thus the same display arrangement can be used by different users despite minor differences in the distance between their eyes, and each viewer can move somewhat to the left and to the right while viewing the display, and can move somewhat forward and back while watching the display, without his view of the display being impaired.

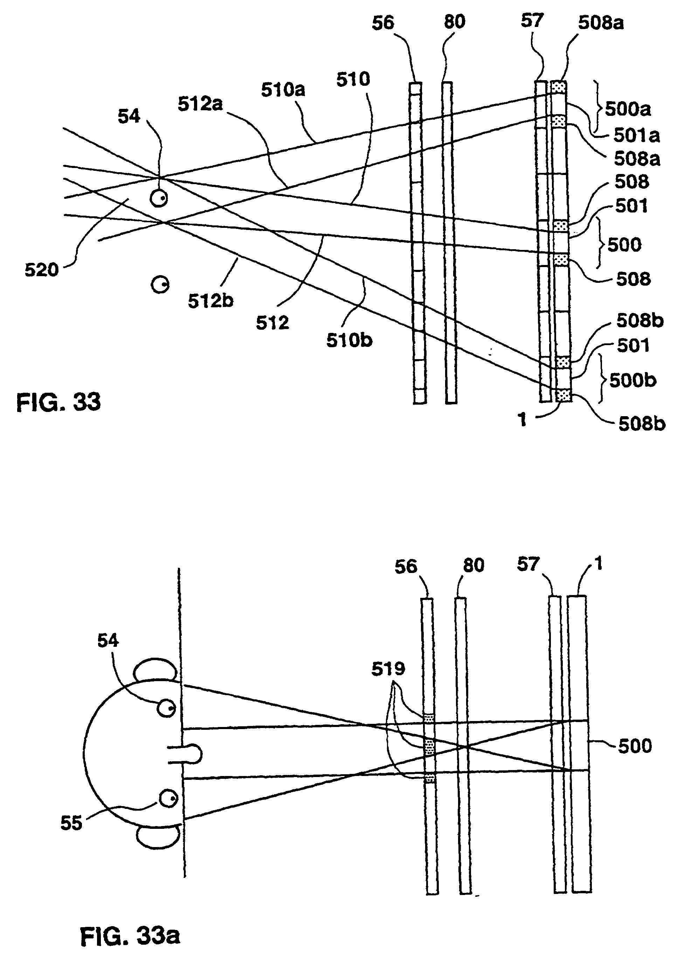

Figure 33 depicts the same arrangement, but includes the details for several regions **500, 500a** and **500b** located at different regions of display **1**. Lines **510, 510a** and **510b** and lines **512, 512a** and **512b,** show the boundaries of permitted movements of left eye **54,** within which all of subregions **501, 501a** and **501b** within each of regions **500, 500a** and **500b,** respectively, will be seen without disturbance. The clear, diamond-shaped area **520** formed around left eye **54,** which is the area formed by intersection of all the lines of sight from all the subregions as described above, constitutes the area around that eye within which the viewer can move without his view of display **1** being affected. It should be noted that the drawing has been made somewhat out of scale as compared to the expected dimensions of the system in actual use. Distance of the user from the display are likely typically to be, say, from two to twenty times greater than the width of the display. Under those circumstances the diamond-shaped area will be considerably elongated, and the consequent freedom of movement of the viewer in the dimension of towards or away from the display may be considerable.

This arrangement may provide an additional advantage in that it may simplify the construction of the various layers **56** and **57**. Depending on the method of construction of layers **56** and **57**, the areas of transition between subregions of polarization of one orientation and subregions of polarization in the second orientation may present problematic optical characteristics. Under the present arrangement those areas of transition are of reduced importance, because they are not actually viewed by the viewer, since they fall in each case on a line between the viewer's eyes and the unused subregions **508**, **508a** and **508b** (in the example of Figure 33) of display **1**. In other words, from the viewer's point of view, the areas of transition on the layers **56** and **57** are "in front of' blank or unused portions of display **1.**

With reference now to Figure 33a, note that an effect identical with the effect achieved using the construction presented in Figure 32 is achieved if, instead of providing subregions **508** of display **1** which do not emit light, one provides small opaque regions on either layer **56**, layer **57**, or **80** in such positions that they hide from the eyes of the viewer any light which might have been emitted by areas **508** of display **1**, should these areas emit light. Both situations are generally referred to herein and in the claims section below as 'a region (or subregion) substantially not emitting light'. Figure 33a demonstrates that opaque elements **519** on layer **56** allow extended eye movement without eyes **54, 55** seeing the inappropriate images, though displayed region **500** is undiminished in size.

Further note that the effect herein described is the same whether the light blocking system in use is based on polarized subareas such as depicted in Figures 31-33 and described under the fourth and fifth embodiments of the invention, or is rather based on a light blocking system including a grid of alternating transparent and opaque elements. In the latter case, making the opaque segments of the grid longer than the transparent segments would have the same effect.

Thus, in the broad sense, the system according to the present embodiment includes a display for displaying small and intensive picture elements of right and left images, at least a fraction of which are adjacent to (e.g., surrounded by) subregions which are substantially not emitting light visible to the viewer (e.g., black subregions); and (b) means for directing light emanating from picture elements of the right image to a right eye of a viewer and light emanating from picture elements of the left image to a left eye of the viewer, such means are for example layers **56**, **57** and **80** of Figure 33. Yet, as will be appreciated by one ordinarily skilled in the art, any other similar means, some of which are described hereinabove under other embodiments of the invention, are also suitable.

According to many of the embodiments described hereinabove, at least one light polarizing layer including alternating stripes or checkerboard patterns of first and second subareas polarizing light in perpendicular orientations is used.

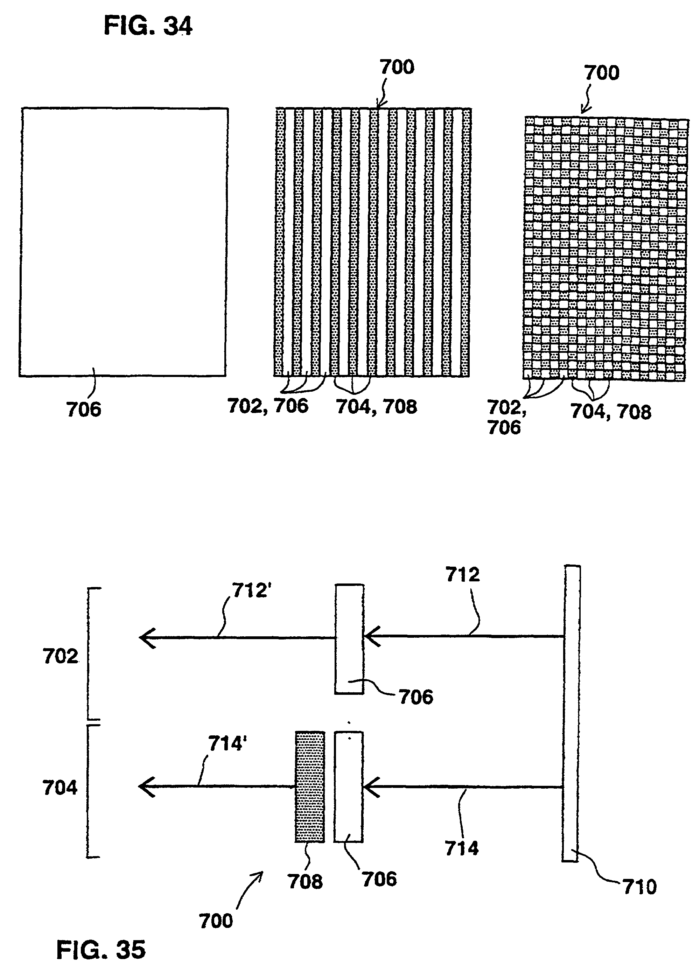

Figures 34 and 35 present such a layer, referred herein as layer **700**. Layer **700** is characterized by first subareas **702** (indicated by white zones in Figure 34) polarizing light in a first orientation and second subareas **704** (indicated by black zones in Figure 34) polarizing light in a second orientation, perpendicular to the first.

Layer **700** includes a first sublayer **706** polarizing light in the first orientation, and a second sublayer of light rotating means **708** which is shaped to solely correspond to second subareas **704.**

The operation of layer **700** in polarizing light is presented in Figure 35. Consider a light source **710** producing a non polarized light, two beams of which, marked **712** and **714**, are shown passing through first **702** and second **704** subareas of layer **700**, respectively. Beam **712**, while passing through first sublayer **706** is polarized in the first orientation and afterwards continues its propagation as indicated by **712'** polarized in the first orientation. Beam **714**, while passing through first sublayer **706** is polarized in the first orientation and afterwards is rotated 90 degrees by second sublayer **708** and continues its propagation as indicated by **714'** polarized in the second orientation.

As further shown in Figure 34, in preferred embodiments first **702** and second **704** subareas are arranged in alternating stripes pattern or alternatively in a checkerboard pattern, dictating the shape of second sublayer **708** to corresponding alternating stripes or checkerboard shapes, respectively.

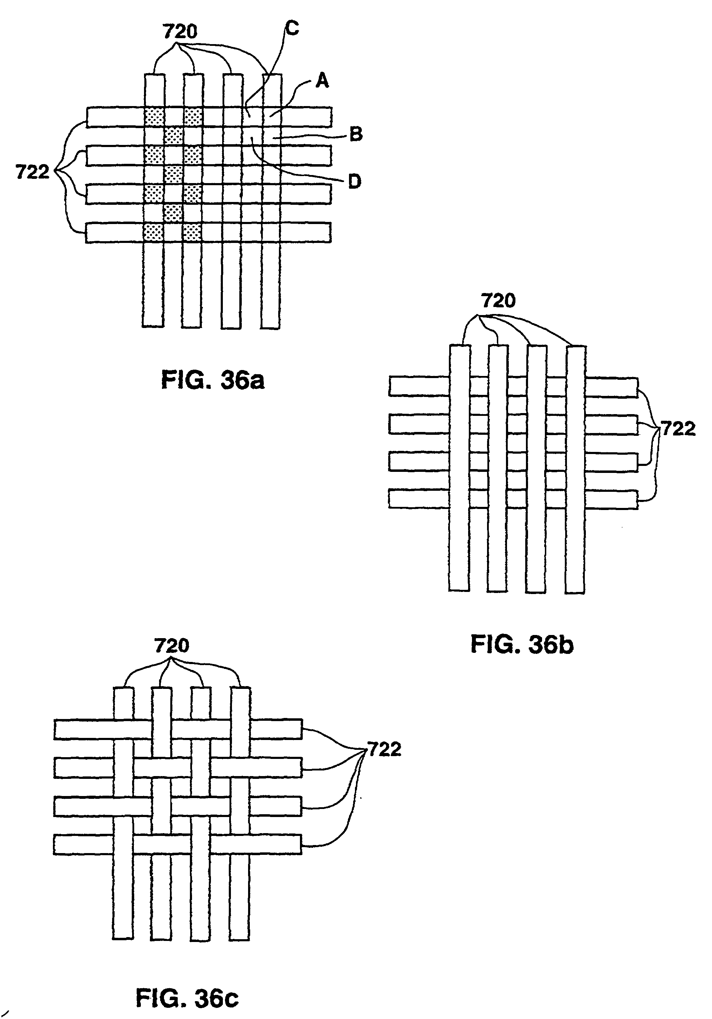

With reference now to Figures 36a-c, in a preferred embodiment a checkerboard shape of second sublayer of light rotating means **708** is obtained by disposing a first set of parallel stripes **720** vertically in relation to a second set of parallel stripes **722,** all stripes have light rotating capabilities. Thus disposing the stripes results in four types of regions indicated **A-D** in Figure 36a. Regions **A** include two layers of light rotating means and therefore have no light rotating effect, so are regions **D,** that have no light rotating layers. On the other hand, regions **B** and **C** have a light rotating effect. On the left side of Figure 36a, regions **A** and **D** are shown dark, whereas regions **B** and **C** are shown light, to highlight the checkerboard pattern obtained. It will be appreciated that disposing first set of parallel stripes **720** vertically in relation to second set of parallel stripes 722 may be achieved in many ways, two of which are shown in Figures 36b-c, wherein in Figure 36b first set of parallel stripes **720** are vertically disposed on top of second set of parallel stripes **722** and in Figure 36c first set of parallel stripes **720** and second set of parallel stripes **722** are arranged in a weaving pattern.

It will be appreciated that thus constructing layer **700** is very simple, all it requires is the preparation of a light polarizing layer polarizing light in a given orientation and a light rotating layer shaped as desired to produce the first and second subareas having perpendicular light polarizing capabilities.

Alternatively, light rotating sublayer **708** may be divided into first and second subareas coinciding with first subareas **702** and second subareas **704**, respectively. As defined in the definitions section above, such first subareas may have certain light rotating capabilities, say m degrees (m may equal zero), in this case the second subareas should have m + 90 degrees light rotating capabilities. Therefore, should light rotation be a function of the thickness of the material of which light rotating layer **708** is made, attributing different thicknesses to the first and second subareas will result in a similar effect

It will be further appreciated that some displays emit polarized light. Examples include but are not limited to flat LCD screens such as those found in "laptop" and "notebook" computers and other portable computing and communication devices. In these cases, only second sublayer of light rotating means **708** is required. Therefore, in cases where the light emanating from the display is polarized, the display is considered as including light source **710** and first sublayer **706.** This situation is true for other embodiments of the invention, wherein a layer of light polarizing means is employed to polarize light emanating from a display.

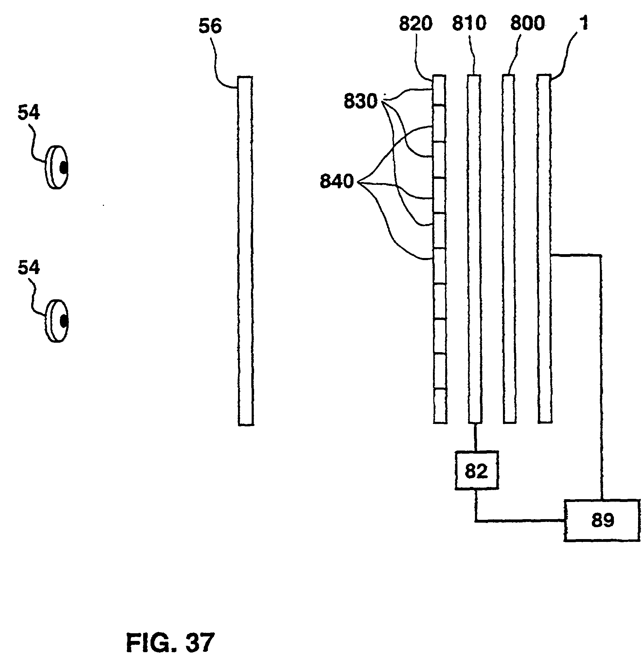

With reference now to Figure 37, presented is a thirteenth embodiment of the present invention. According to several of the embodiments described hereinabove, a switchable light rotating layer is used between two light polarizing layers including alternating first and second subareas polarizing light in perpendicular orientations, such as layers **56** and **57** of Figures 7 and 12. For various reasons, including ease and simplicity of construction, it may in some cases be advantageous to avoid situating a switchable light rotating layer between the two highly subdivided polarizing layers. In particular, if one wishes (e.g. for high resolution displays) to minimize the size of each subarea, the geometry of the apparatus allows and requires one to reduce the distance between layers **56** and **57**.

At extremely small sizes selected for the subareas, layers **56** and **57** may become too close to allow convenient inclusion of layer **80** therebetween. Hence an alternative construction may be desirable, which will produce the functionality described for the fifth embodiment (Figures 7-12) and for other embodiments which teach use of a switchable light rotating layer such as layer **80.**

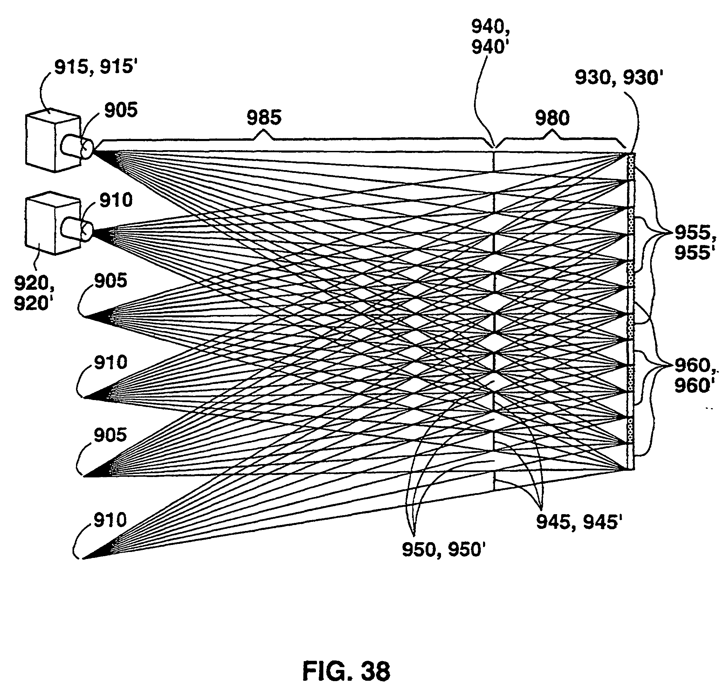

One alternative construction is shown (not drawn in proportion) in Figure 38. Light emanating from display **1** is polarized by a first polarizer **800** in a uniform orientation. A switchable light rotating layer **810,** whose light rotating effect may either be turned on (i.e., active in light rotation) or turned off (i.e., inactive in light rotation, wherein the light is given a K orientation, which may equal its original uniform orientation) by switching element **82** which is in turn controlled (as is display **1**) by coordinating element **89,** either does or does not rotate the orientation of that light into a second orientation 90 degrees from K, which is referred herein as **J**.

Layer **820** is comparable in its geometry to layer **57** of Figure 7, but whereas layer **57** is a polarizing layer divided into subareas of differing polarization orientations, layer **820** is a light retarding (also known in the art as light turning) layer divided into first subareas **830** which rotate the orientation of 6Xalso ensures that if a left projector **915** positioned at one of reas **840** which rotate it 90 degrees more than the amount of rotation of regions **830** (i.e., n + 90 degrees). Since the light arriving at retarding layer **820** is uniformly polarized, the effect is that the light passing through its subareas **830** is polarized in some orientation, and the light passing through its subareas **840** is polarized in another orientation which differs by 90 degrees from the orientation of light passing through areas **830.**

If the light arriving at layer **820** is in the K orientation, and if one designates as "X" (i.e., first) the orientation of K-oriented light after it passes through subareas **830** of layer **820,** then the orientation of K-oriented light after it passes through subareas **840** of layer **820** may be designated "Y" (i.e., second), which is perpendicular to X.

When layer **810** is inactive, light from display **1** arrives at layer **820** polarized in the K orientation, and leaves it polarized in the X orientation if it passed through any of subareas **830,** or polarized in the Y orientation if it passed through any of subareas **840.**

If layer **810** is activated, light from display **1** arrives at layer **820** with the J orientation. Since J-oriented light is 90 degrees from the K orientation, passing J-oriented light through subareas **830** of layer **820** results in Y-oriented light, and passing J-oriented light through subareas **840** of layer **820** results in X-oriented light.

Consequently, if layer **810** is activated, light passing through layer **820** is in the Y orientation if it passed through any of subareas **830,** or the X orientation if it passed through any of subareas **840.** In other words, subareas **830** pass X-oriented light if layer **810** is off, and Y-oriented light if layer **810** is on, and subareas **840** pass Y-oriented light if layer **810** is off and X-oriented light if layer **810** is on.

Layer **820** is placed within the apparatus and is divided into subareas **830** and **840** according to the rules described above for the placement of layer **57** and its division into subareas. If layer **810** is inactive, layers **800** and **820** together function as variously described for layer **57** in the various embodiments above.

Layer **56** in Figure 37 is identical in placement, form, and function to layers **56** of Figures 6, 7, and 12. Used in conjunction with layers **800** and **820,** and assuming appropriate image pixels displayed on display **1**, it enables the viewer whose eyes are at **54** and **55** to see a binocular three dimensional image as variously described above.

When switchable light rotating layer **810** is activated, the effect is the same as when switchable light rotating layer **80** of Figures 7 and 12 is activated. Light traveling from display **1** through a particular subarea of layer **820** towards a particular eye, and which had previously been blocked by a subarea of layer **56,** now becomes visible to that eye, while light traveling from display **1** through a particular subarea of layer **820** towards a particular eye and which had been visible to that eye, is now blocked and therefore becomes invisible to that eye. In other words, pixel areas of display **1** which had been visible to left eye **54** and blocked from the right eye **55** now become visible to right eye **55** and blocked from left eye **54**, while pixels which had been visible to right eye **55** and blocked from left eye **54** become visible to left eye **54** and blocked from right eye **55**.

This is clearly the same effect as that described with respect to the functionality of the switchable light rotating layer **80** of Figures 7, 12, and others, and it produces the same effect. When layer **810** is switched off, each eye of the viewer sees a particular set of pixels on display **1.** When layer **810** is switched on, each eye sees a different set of pixels. Switching element **82** can then be used by coordinating element **89,** as was described with respect to the fifth embodiment, to reduce apparent graininess of the image by showing the left image in a first set of pixels whenever the left eye can see the first set of pixels, and showing the left image in the second set of pixels whenever the left eye can see the second set of pixels, and similarly with the right eye and the right image.

Thus the arrangement of Figure 37 does not interpose a switching layer between the two static highly subdivided layers **56** and **57,** but nevertheless produces the same effect as the arrangement depicted in Figures 7, 12, and others.

One may also note that the same effect could be obtained by reversing the order, placing a polarizing filter divided into subareas (like layer **56** or **57** of Figure 6) as the first layer near display **1**, followed by a subdivided light retarding layer as described for layer **820,** followed by a switchable light retarding layer as described for layer **810,** followed (closest to the viewer) by a uniform polarizing filter such as described above for layer **800.**

With reference now to Figure 38, presented is a fourteenth embodiment of the present invention, in which a light blocking grid is used in conjunction with a pair of image projectors to produce a binocular three-dimensional display which can be viewed without eyeglasses.

Figure 38 is similar to Figure 17, which was previously used to demonstrate that light blocking and polarizing grids as described in the various embodiments permit more than one user to view a binocular display. Figure 38 reproduces Figure 17 while adding an additional pair of positions from which a viewer's left eye and right eye might view their appropriate images.

In Figure 38, **905** stand for left-eye positions, whereas **910** stand for right-eye positions. At one of the left-eye positions, a projector **915** is placed This might be a motion picture projector, a television projector, a computer-driven projection device, a slide projector, or some other equipment of appropriate size capable of focusing an image on a screen. A second projector **920** is at one of the right eye positions **910.** In Figure 38 projectors **915** and **920** are shown placed one next to the other, like a pair of eyes, yet this is not a requirement of the system. Projector **915,** in a left-eye position **905,** projects a left image as previously defined, and it is therefore referred hereinbelow and in the claims section as a "left projector". Projector **920** projects a right image as defined hereinabove, and is therefore referred to hereinbelow and in the claims section as a "right projector".

Both projectors **915** and **920** project images onto a screen **930,** which may be a standard projection screen or any other appropriate surface. A light blocking system, as this term is defined hereinabove, in the form of grid **940** which includes opaque subareas **945** alternating with transparent subareas **950** is placed, and is subdivided into subareas, as has been described with reference to various grid-based embodiments above.

Inspecting the system presented in Figure 38, reveals that the same arrangement which ensured (as mentioned above in reference to Figure 17) that several pairs of right and left eyes could each see the appropriate right and left images, also ensures that if a left projector **915** positioned at one of the left-eye positions **905** projects a left image onto screen **930**, then the projected light will reach only regions **960** of screen **930** which regions **960** are visible to the left eyes of the one or more viewers from positions **905.** Similarly a right projector **920** positioned at one of the right-eye positions **910** can project a right image only to regions **955** of screen **930** which are visible to the right eyes of the one or more viewers from positions **910.**

In other words, regions **955** of screen **930** receive light only from right projector **920,** whereas regions **960** receive light only from left projector **915.** Any viewer's left eye at one of positions **905** sees only regions **955** of the screen, while his right eye at a position **910** sees only regions **960**. Since left projector **915** projects a left image and right projector **920** projects a right image, viewers' left eyes at positions **905** see only the left image and their right eyes at positions **910** see only the right image, thus permitting binocular stereoscopic viewing of a three-dimensional image without eyeglasses.

It may be noted that this embodiment can benefit from various enhancements which were described in the context of previous embodiments. In particular, as described in the context of the sixth embodiment (Figures 14-15), grid **940** may be a moving or vibrating grid, or an LCD grid; in both cases the effect is to vary, over time, the placement of the opaque subareas, and consequently to vary the subregions of display screen **930** which are visible to any particular eye at any particular time. If the variation is sufficiently rapid, the effect may be to reduce the apparent graininess of the observed image.

Also, as described in the context of the twelfth embodiment (Figures 31-33a), providing the opaque subareas **945** of grid **940** larger than transparent subareas **950** results in greater freedom of movement for the viewer by enlarging the space within which each eye may move (both forward and backward and from right to left) without moving into a position from which it can see a screen subregion whose light originated in a projected image inappropriate to it

Still referring to Figure 38, presented now is a fifteenth embodiment of the present invention, in which a light polarizing layer divided into subareas of differing polarizing orientations is used in conjunction with a pair of image projectors to produce a binocular three-dimensional display which can be viewed without glasses by a plurality of viewers.

As in the previous embodiment, left projector **915** projects a left image, whereas right projector **920** projects a right image. In the present embodiment layer **940** is a light polarizing layer with subareas **945** having a particular first axis of polarization, X, and subareas **950** having a second axis of polarization, Y, perpendicular to the first

In this embodiment screen **930** is aluminized, or constructed in one of the other known manners such that screen **930** does not change the polarization orientation of light projected on it and reflected from it, i.e., a light polarization maintaining screen. The placement of layer **940,** and the size and placement of its subareas, are determined in the same manner as were the placement and the subdivisions of the polarizing layer **56** of Figures 6 and 12.

If subareas **945** of layer **940** polarize light from projectors **915** and **920** in the first orientation, say X, and subareas **950** polarize light from the projectors in the second orientation, say Y, 90 degrees from the first, then subregions **955** of screen **930** will receive light from left projector **915** polarized in the first orientation and also light from right projector **920** polarized in the second orientation, while subregions **960** of the screen will receive light from left projector **915** polarized in the second orientation and also light from right projector **920** polarized in the first orientation. Neither X-oriented light from right projector **920** nor Y-oriented light from left projector **915** will reach subregions **955,** nor will Y-oriented light from right projector **920** nor X-oriented light from left projector **915** reach subregions **960.**

Wherever a left eye of a viewer looks from any of positions **905** through one of subareas **945,** it sees light from one of subregions **955** of screen **930,** which subregions, as described above, are illuminated only by light from the left image polarized in the X orientation and light from the right image polarized in Y orientation. Since subareas **945** pass only light polarized in X orientation, only the left-image light is passed onto the viewer's left eye.

Similarly, when the left eye of the viewer looks through one of subareas **950** it sees light from one of subregions **960,** which are illuminated by light from the left image polarized in the Y orientation and light from the right image polarized in the X orientation. Subareas **950** transmit only Y-oriented light, so again only the left image light is passed. Thus, wherever the left eye looks, it sees the left image.

The opposite is true for right eyes. Subregions **955** are illuminated by left image X-polarized light and by right-image Y-polarized light The right eye at **910** can see subregions **955** only by looking through any one of subareas **950** of layer **940,** which passes only Y-oriented light, consequently only right-image light from subregions **955** can be seen by the right eye.

Similarly, light from subregions **960** is either left-image Y-oriented or right-image X-oriented, and to reach a right eye at **910** it must pass a subarea **950** which passes only X-oriented light

In consequence of the above, wherever a left eye at **905** looks on screen **930,** it will see the left image and only the left image, and a right eye at **910** will see the right image and only the right image throughout the screen. If the left projector projects an appropriate left image and the right projector projects an appropriate right image, and the two images are properly aimed to coincide on screen **930,** viewers will see binocular stereoscopic three-dimensional images without needing to use eyeglasses.

One notes that it may be desirable to raise the projectors above the level of the viewers' eyes, or to lower them below that level, to avoid light from the projectors being reflected back directly into viewers' eyes from the surface of layer **940**. Another method for redirecting such reflection might be to incline or curve layer **940**, adjusting the spacing of layer's **940** subareas accordingly, so that subareas of layer **940** are smaller where layer **940** is closer to screen **930**, and larger where layer **940** is further from the screen, thus satisfying the requirements of the system geometry for any given height.

Yet another method might be to place layer **940** vertically within an inclined surface (e.g. plastic), or segments of such a surface, which would then divert the reflection. Additionally, anti-reflective coatings or other known means for preventing or redirecting reflection might be used.

Embodiments fourteen and fifteen enjoy flexibility in setting the viewers'/projectors' distance from screen **930.** In the case of projection from films or slides, where the image is fine-grained, subregions **955** and **960** of the display need not be of a fixed size nor position. For a given size of the subareas of layer **940**, distance **980** between layer **940** and screen **930** stands in constant ratio to distance **985** between layer **940** and the viewers/projectors at positions **905/910**, but the absolute distance of layer **940** from screen **930** and from the viewers/projectors, is indeterminate.

In other words, a viewer at a particular position **905/910,** wishing to move further from the screen, will merely need to move layer **940** proportionally further away as well, whereas no changes in the layer itself would be required. Please note that with respect to the fourth and fifth embodiments, if the position and subarea of layer **57** (Figures 6, 7 and 12) is fixed, layer **56** can be moved in a similar manner.

As stated with respect to the twelfth embodiment (e.g., Figure 33a) and as mentioned in embodiment fourteen above, it is possible to enhance the viewers' freedom of movement, increasing the distance they can move away from the ideal viewing positions **905/910** without thereby causing the eyes to see inappropriate images.

As explained above, the method in general includes surrounding each subregion of the display with an area which displays neither the right image nor the left image. One possible implementation is to place to the left and to the right of each of the polarizing subareas **945** and **950** of layer **940** a short opaque element (in analogy to the opaque element **519** shown in Figure 33a with respect to another embodiment), which will then produce some of the effects described in relation with Figures 31-33a. Such opaque elements on layer **940** will prevent the viewer from seeing inappropriate images if he moves his eyes somewhat away from their ideal position as represented by their position as shown in Figure 38, although their use in the current embodiment will not, beyond a certain point, prevent some diminution of the intensity of the light from the appropriate image, as the eyes are moved away from their ideal position.

A preferred arrangement is to place non-reflective elements on screen **930,** which will not reflect parts of any image, in analogy to subregions **508** of Figure 33. The distance from one element to the next equals the length of subregions **955** and **960** of screen **930** (which length is a function of the length of subareas **945** and **950** of layer **940,** and of the inter-ocular distance of the viewer). This method prevents seeing inappropriate images and also prevents changes in light intensity of the appropriate images, when the eyes are moved somewhat away from their ideal positions. Optimum results are obtained when the non-reflective elements are positioned to correspond to the juncture between subregions **955** and **960** of screen **930**, but so long as the length of each such element, added to the distance between elements, equals the length of each subregion **955** or **960** of screen **930**, substantially good results are obtained even if there is no specific alignment between the position of the non-reflective elements and the position of the subregions.

This may, of course, be combined with a system for maintaining awareness of a viewer's position and automatically adjusting the position of layer **940** accordingly, as is described with respect to Figures 18 and 23. Preferably, means for moving layer **940** are connected to a remote control.

As noted above, the functional relationship of the components depicted in Figure 38 is preserved, for a given size of the subareas of layer **940**, so long as the ratio (along any particular line of sight) of distance 980 (from screen **930** to layer **940**) to distance **985** (from layer **940** to the viewpoints **905/910**) remains constant.

For this reason, the system will function as described even if, say, the viewers and projectors (points **905, 910**) were aligned with the bottom of a tall screen **930**, so that image regions projected to the top of the screen were much further from the viewers than image areas projected to the bottom of the screen. So long as the plane of layer **940** is parallel to the plane of screen **930**, a line of sight from any viewpoint **905** or **910** to any particular region of screen **930** will intersect layer **940** at a point such that the ratio of distance **980** to distance **985** will be preserved.

Thus, the arrangement depicted allows for multiple viewers to three-dimensionally view a pair of images projected onto screen **930,** as long as the projectors and the viewers are all substantially at the same distance from screen **930.**

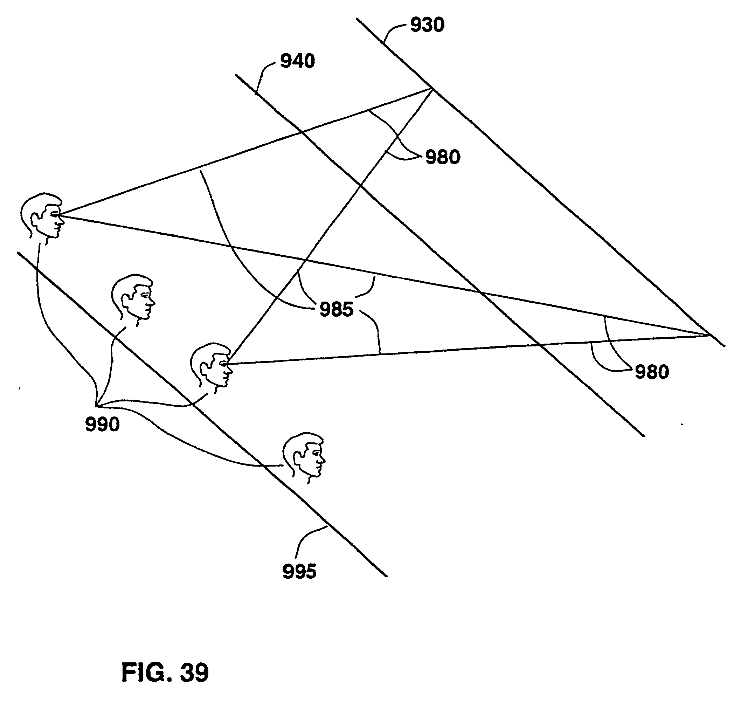

Figure 39 makes explicit an additional advantage implicit in this arrangement. In order to provide seating, e.g., in a movie theater, for a large number of viewers, if one were to use a vertical screen **930** and areas **945** and **950** (shown in Figure 38), which are of constant width irrespective of the height of their placement on layer **940,** then having filled a row of seats facing screen **930,** and wishing to provide additional seating, one would be obliged to seat additional viewers substantially vertically above the first row of seats, in order to fulfill the condition that all viewers be substantially at equal distances from screen **930.**

Figure 39, however, makes it clear that the geometry described above can equally well be applied to a screen **930** which is tilted, in which case the arrangement allows for additional rows of seating both above and behind initial rows, as is convenient and conventional in theater arrangements. While Figure 38 depicts a row of viewers (with eye positions **905** and **910**) as seen from above, Figure 39 depicts several rows of viewers **990** as seen from the side, that is, as seen from beyond the end of the rows. As shown in Figure 39, on condition that plane **995** on which rows **990** are situated is parallel to the plane of the screen **930,** there is preserved a constant ratio of distance **980** to distance **985,** as measured along any viewer's line of sight to any particular point on screen **930.** Thus in a projection theater arrangement as described, multiple rows of seating may be accommodated.

Referring to the geometry which has been previously described in particular by reference to Figures 6, 24, 38, and 31-33a (ignoring the presence of the light-rotating layer **80** in the latter) it may be noted a similar result (e.g., stereoscopic vision, freedom of head movement) may be achieved if areas and subareas of color filters are substituted for the areas previously identified as polarizing filters in the above descriptions of various embodiments. With particular reference to Figure 6, one observes that if subareas **58** of layers **56** and **57** were to be constituted by a color filter transparent only to light of a particular color range (i.e., a wavelength range) and blocking light outside that range, and if subareas **59** of layers **56** and **57** were similarly constituted by a filter of a different color (i.e., transmitting light of a different wavelength range), with little or no substantial overlap between the color ranges transmitted by subareas **58** and **59,** then the effect of the arrangement would be similar to the effect described above with reference to system **50.** Light from display **1** passing through a subarea **58** of layer **57** and then a subarea **58** of layer **56** would be filtered to the particular color range of subarea **58,** but within that color range would not be substantially blocked. Light from display **1** passing through a subarea **59** of layer **57** and then a subarea **59** of layer **56** would similarly be filtered to the color range of subareas **59**, but within that color range would not be substantially blocked.

On the other hand, light emanating from display **1** and passing through a subarea **58** of layer **57** and then a subarea **59** of layer **56**, would be substantially blocked and would not reach the viewer's eyes. Similarly, light emanating from display **1** and passing through a subarea **59** of layer **57** and then a subarea **58** of layer **56**, would be substantially blocked and would not reach the viewer's eyes.

The use of color filters in the form of "anaglyph" eye glasses is well known in the art of stereoscopy. Two images are typically combined into a single image, one of the images usually being red in color, the other usually being blue or green.

Filter eyeglasses are then worn by the viewer, with the result that one eye will see the red image and the other the blue/green image. If these images are appropriate right and left images, as defined above, three-dimensional stereoscopic vision results. This traditional arrangement, however, has the usual disadvantage of dependence on eyeglasses, and the additional disadvantage that the use of a single filter color for each eye results in the fact that the perceived image, although three-dimensional, has very little, if any, residual color information. It is occasionally possible to see some color on traditional anaglyph images, but the amount of color is severely limited and the perceived images are essentially largely seen as being colorless.

The arrangement now described with reference to the geometry described in Figure 6 and various other Figures above, but with reference to the use of color filters rather than polarizing filters in the various layers e.g., layer **56** and layer **57** of Figure 6, has several advantages over the traditional anaglyph method of stereoscopic viewing. First, no eyeglasses are needed. Second, although color filtration is used to control the passage of light from each of the left and right images to the appropriate eye, each eye is not limited to only one of the filtration color ranges. Referring again to Figure 6, it will be appreciated that left eye **54** is enabled to view a region of left image **52** while being prevented from viewing a region of right image **53**. Within region **52**, picture elements of a first color filtration subarea **58** alternate with color elements of a second color filtration subarea **59**, so that although in each particular zone (e.g., **61b**) only light of a limited range is transmitted, throughout region **52**, as a whole, light of both color ranges is transmitted. As is well known in the art, when picture elements of different colors and of sufficiently small size are juxtaposed, the visual effect is that of a combining of the colors. In other words, the arrangement described, while using color filtration to control the passage of light from each image to the appropriate eye, largely avoids the disadvantage of traditional anaglyph viewing, because it does not limit each image, as a whole, to a particular range of color. Thus, three-dimensional viewing of colored images results.

It is additionally noted that the above observations apply equally well to the geometry described with respect to projection systems and described in detail in Figures 38 and 39. Here too, color filtration can replace polarization filtration in the construction of layer **940**. As described above with respect to Figure 6, this substitution does not affect the geometry of the system nor the logic of its operation.

Figure 38 is hereinbelow used to describe a system in accordance with the above idea. The system of Figure 38, includes a screen **930'** for displaying the projected display; a left projector **915'** projecting left picture elements of the display onto screen **930';** a right projector **920',** projecting right picture elements of the display onto screen **930'**; and a color filter layer **940'** divided into first subareas **945'** and second subareas **950'**. Layer **940'** is positioned between projectors **915'** and **920'** and screen **930'**. First subareas **945'** transmit light in a first wavelength range (e.g., 350-400 nm) and second subareas transmit light in a second wavelength range (e.g., 400-750 nm). The first and second wavelength range are substantially different ranges, said filter layer being between said projectors and said screen.

Light emanating from left projector **915'** and passing through first subareas **945'** is filtered to consist wavelengths restricted to the first range, reaches first subregions **955'** on screen **930'** and is then reflected from screen **930'.** Light emanating from left projector **915'** and passing through second subareas **950'** is filtered to consist wavelengths restricted to the second range, reaches second subregions **960'** on screen **930'** and is then reflected from screen **930'.** Light emanating from right projector **920'** and passing through first subareas **945'** is filtered to consist wavelengths restricted to the first range, reaches said second subregions **960'** on screen **930'** and is then reflected from screen **930'.** Whereas, light emanating from right projector **920'** and passing through second subareas **950'** is filtered to consist wavelengths restricted to the second range, reaches first subregions **955'** on screen **930'** and is then reflected from screen **930'.**

The positioning of screen **930',** layer **940'** and projectors **915'** and **920'** are selected such that a viewer's left eye, as indicated by **905,** receives light originating from left projector **915',** reflected from first **955'** and second **960'** subregions of screen **930',** passing through first **945'** and second **950'** subareas of filter layer **940',** respectively, while the viewer's right eye, as indicated by **910,** receives light originating from right projector **920',** reflected from first **955'** and second **960'** subregions of screen **930',** passing through second **950'** and first **945'** subareas of filter layer **940',** respectively.

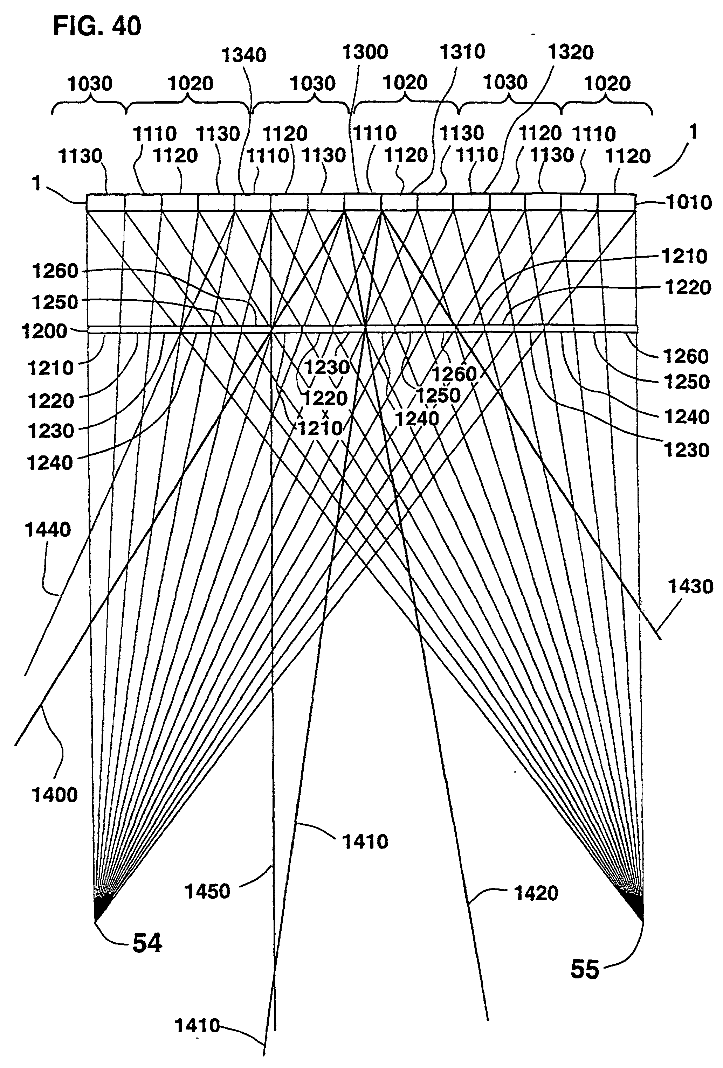

Many display systems currently in use, for example many television displays and CRT color monitors, produce color by juxtaposing discrete individual color elements each of which provides one of the basic colors, these color elements often being aligned side by side on the monitor. Figure 40 describes a further use of color filters in conjunction with such displays, in order to achieve stereoscopic vision without eyeglasses. The system described in Figure 40 has the additional benefit of allowing for relatively free local movement of the eyes of viewer without that movement preventing each eye from seeing all parts of its appropriate image, and without causing either eye to see any part of its inappropriate image. Thus the system described in Figure 40 presents the advantages previously described with reference to Figures 31-33a, but the present system has the additional advantage that, whereas the system of figures 31-33a requires certain subregions of the display either not to emit light from either image or to be hidden from both eyes of the viewer, the current system achieves the effect of permitting similar freedom of movement of the viewer's head, while yet allowing substantially all of the display area to be used to emit light and to display images.

In Figure 40 a display **1** presents a frame **1010** divided into a plurality of first regions **1020** presenting at least a part of a left image and a plurality of second regions **1030** presenting at least a part of a right image. Each of first **1020** and second **1030** regions is divided into a first subregion **1110** presenting a first base color characterized by a first spectral range, a second subregion **1120** presenting a second base color characterized by a second spectral range and a third subregion **1130** presenting a third base color characterized by a third spectral range. The spectral ranges are selected such that by displaying each of in selected intensities, each of first **1020** and second **1030** regions is perceived by a viewer as having a desired color. Typically the base colors would be red, green and blue in what is known in the art as an RGB display.

Further shown in Figure 40 is a light filtering layer **1200** which is divided into first subareas **1210** for blocking light of the first spectral range, second subareas **1220** for blocking light of both of the first and the second spectral ranges, third subareas **1230** for blocking light of all three spectral ranges, fourth subareas **1240** for blocking light of the second and third spectral ranges, fifth subareas **1250** for blocking light of the third spectral range, and sixth subareas **1260** which transmit light of all the spectral ranges.

The position of layer **1200** and the size and position of the first to sixth subareas **1210, 1220, 1230, 1240, 1250, 1260** are determined in a manner similar to that described above with reference to the various Figures and the various embodiments, and in particular with reference to Figure 24.

The functionality of the system will now be described with reference to randomly chosen subregion **1300**, which is one of subregions **1110**, by way of example. Subregion **1300** is part of a first region **1020** presenting a part of the first image emitting light of the first base color characterized by the first spectral range.

Left eye **54** cannot see light from subregion **1300**, since subregion **1300** emits only light within the first spectral range, and such light is blocked by subarea **1220** which is positioned between left eye **54** and subregion **1300.** Light from subregion **1300** is also blocked by subareas **1210** and **1230.** Consequently line of sight **1400** represents the limit of movement of left eye **54** through which eye **54** can move to the left without being in a position from which it is able to see any part of subregion **1300.** Similarly, line of sight **1410** represents the limit to which eye **54** can move to the right without being in a position from which it is able to see any part of subregion **1300**.

Right eye **55**, however, is able to see subregion **1300,** because subarea **1250*,** which is between right eye **55** and subregion **1300** does not block light of the first spectral range. Subareas **1240** and **1260** also do not block light of the first spectral range, consequently line of sight **1420** marks the limit to which eye **55** can move to the left without losing its ability to see all of subregion **1300**, and line of sight **1430** shows the limit to which right eye **55** can move to the right without losing its ability to see all of subregion **1300.** Thus the viewer's head may move nearly half the inter-ocular distance to the left, and nearly half the inter-ocular distance to the right, without the left eye seeing any part of subregion **1300** and without the right eye losing its ability to see all of subregion **1300**.

Inspection of the system presented in Figure 40 will show similar effects with respect to each of the subregions of frame **1010.** Another randomly selected subregion **1320,** for example, emits light of the first spectral range which is a part of a second image. That subregion is visible to left eye **54** because subareas **1240**, **1250,** and **1260** permit passage of light of the first spectral range. However, subregion **1320** is blocked from right eye **55** because subareas **1210, 1220,** and **1230** block passage of light of the first spectral range. As another random example, consider subregion **1310** which emits light of the second spectral range belonging to the first image. It is blocked from left eye **54** because subareas **1220,** **1230**, and **1240** block light of the second spectral range, while light from subregion **1310** reaches right eye **55** because subareas **1250**, **1260**, and **1210** permit its passage.

Moreover it may be seen with respect to each subregion of frame **1010** that the positions through which each eye can move without light from that subregion being hidden from the appropriate eye, or seen by the inappropriate eye, is similarly broad. For example, lines of sight **1440** and **1450** show the limitation of positions within which left eye **54** may move without losing its ability to see all of the light from another subregion **1340**, selected at random.

Thus the system of Figure 40 provides an arrangement whereby right eye **55** sees all of the light from each of first regions **1020** presenting all or part of the right image, and left eye **54** sees all of the light from each of second regions **1030** presenting all or part of the left image, while neither eye sees any light from an inappropriate image. Moreover, Figure 40 shows that each eye may move substantially both left and right and towards and away from the display without preventing that eye from seeing the appropriate image and without permitting that eye to see the inappropriate image. Thus the system of Figure 40 makes possible binocular stereoscopic vision of the left and right images without need of eyeglasses, and permits some freedom of movement of the eyes without interfering with the quality of the image, while yet using all of the display surface to display the images.

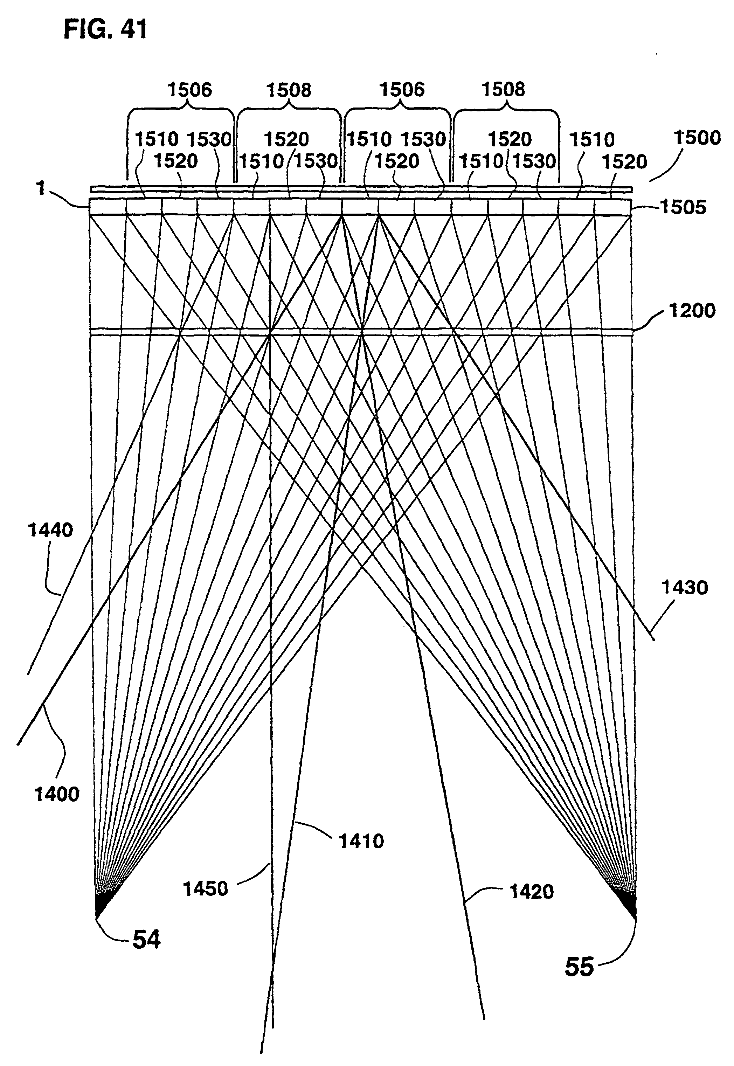

Figure 41 demonstrates that the system of color filtration described with respect to Figure 40 can also be used to provide stereoscopic vision without eyeglasses, and permit some movement of the viewers' eyes, for displays which do not emit light of discrete colors in an ordered pattern.

In this case display **1500,** is of a type in which each picture element may potentially emit light of any spectral characteristics (e.g., a screen projected from behind). Display **1500** includes a frame **1505** divided into first regions **1506** presenting at least a part of a left image and second regions **1508** presenting at least a part of a right image. The system of Figure 41 further includes a filter layer **1550,** which is divided into subareas **1510** allowing the passage of light substantially only within a first spectral range, subareas 1520 allowing the passage of light within substantially only a second spectral range, and subareas **1530** allowing the passage of light substantially only within a third spectral range.

The combined effect of display **1500** together with filter layer **1550** is to provide a system which is characterized and subdivided exactly as described with respect to the light emanating from display **1** of Figure 40. Therefore, when the term 'display' is used in the claims with respect to these embodiments of the invention, it refers to both options. In other words, a display in this context may be either display **1** of Figure 40, or the combination of display **1500** and filter layer **1550** of Figure 41.

The subdivisions and the functionality of light filtering layer **1200**, shown in Figure 41, are as described for the system of Figure 40, and the significance of lines of sight **1400, 1410, 1420, 1430, 1440** and **1450** is the same as described above with respect to Figure 40.

Thus Figure 41 describes a system with the functionality and advantages of the system described by Figure 40, yet whose display apparatus may be any display emitting light of any colors at any particular point of the display surface.

Hence, the invention described by way of example hereinabove is directed toward systems for three-dimensional viewing and projection aimed at providing means for flatscreen fullcolor stereoscopic vision without eyeglasses or other optical means engaged close to the eyes of the viewer or viewers. Furthermore, some of the systems for three-dimensional viewing according to the present invention do not restrict the viewer to specific position and distance relative to the display, which viewer is thus free to move his head while viewing the display. Yet furthermore, the more advanced systems of the present invention are highly suitable for three-dimensional viewing both for still and motion pictures, yet in contrast with prior art systems do not involve moving parts, some may even be installed using existing hardware such as computers, television sets and projectors.

While the invention has been described with respect to a limited number of embodiments, it will be appreciated that many variations, modifications and other applications of the invention may be made.

## Claims

1. A system for enabling a first eye (54,55) of a viewer to view a first stereoscopic image selected from a pair of stereoscopic images while preventing a second eye (55,54) of said viewer from viewing said first image, which system is adaptable to varying positions of said viewer, comprising
a) an image generator (1,57,114) operable to present said first image in alternatingly polarized format, said format comprises first image subareas (58,141,143) of said first image polarized in a first orientation and second image subareas (59,140,142) of said first image polarized in a second orientation orthogonal to said first orientation, said first image subareas (58,141,143) alternating with said second image subareas (59,140,142) across said presented first image, and
b) a selective image blocker (56,115) positioned between said viewer and said image generator (1,57,114) and closer to said image generator (1,57,114) than to said viewer, said image blocker (56,115) operable to present first selective blocking subareas (59,152,153) alternating with second selective blocking subareas (58,154,155) across said image blocker (56,115), said first selective blocking subareas (59,152,153) blocking light polarized in said first orientation and passing light polarized in said second orientation, said second selective blocking subareas (58,154,155) blocking light polarized in said second orientation and passing light polarized in said first orientation, said first and second blocking subareas (58,59,152,153,154,155) alternating across said image blocker (56, 115),
c) an eyetracking controller (135,179) operable to detect distances and positions of said eyes (54,55) of said viewer with respect to said generator (1,57,114) and said Mocker (56,115), further operable to calculate appropriate sizes and positions of said first and second image subareas (58,59,140,141,142,143) to be presented by said generator (1,57,114) and to command said generator (1,57,114) to present said first and second image subareas (58,59,140,141,142,143) at said calculated positions, and further operable to calculate appropriate sizes and positions of said first and second blocking subareas (58,59,152,153,154,155) to be presented by said image blocker (56,115) and to command said blocker (56,115) to present said first and second blocking subareas (58,59,152,153,154,155) at said calculated positions, said calculations being based on said eye positions detected by an eyetracking module (180,181), such that when said generator (1,57,114) presents said first and second image subareas (58,59,140,141,142,143) in said appropriate sizes and positions and said image blocker (56,115) presents said first and second blocking subareas (58,59,152,153,154,155) in said appropriate sizes and positions, said viewer's first eye (54,55) is enabled to view said first image and said viewer's second eye (55,54) is blocked from viewing said first image, for a variety of positions of said eyes (54,55) of said viewer.

2. The system of claim 1, wherein said first and second image subareas (58,59,140,141,142,143) and said first and second blocking subareas (58,59,152,153,154,155) are formed as stripes.

3. The system of claim 2, wherein said stripes are formed as vertical stripes.

4. The system of claim 1, wherein said image generator (1,57,114) comprises a display (1) operable to display said first image in unpolarized format, and further comprises a light polarizing module (114) operable to polarize light of said first image in said alternatingly polarized format, said first and second regions of said generated image being of variable sizes and positions commandable by said controller (135,179).

5. The system of claim 4, wherein said light polarizing module (114) comprises a uniform polarizer (110) and a first light turning module (111), which light turning module (111) comprises switchable light rotating means divided into a plurality of independently switchable elements (116-133), said uniform polarizer (110) being positioned between said first light turning module (111) and said display (1), said first light turning module (111) being operable to present first (140,142,137,139) and second (141,143,138) light-turning subareas, said first (140,142,137,139) and second (141,143,138) light-turning subareas being of variable size and position commandable by said controller (135,179), such that uniformly polarized light emanating from said uniform polarizer (110), having traversed said first light turning module (111), is of said alternatingly polarized format.

6. The system of claim 5, wherein said display (1) is a CRT.

7. The system of claim 5, operable to present said first image simultaneously on all pixels of said display (1).

8. The system of claim 1, wherein said image generator (1,114) comprises a display (1) operable to display said first image in uniformly polarized format, and further comprises a first light turning module (111), which light turning module (111) comprises switchable light rotating means divided into a plurality of independently switchable elements (116-133), said light turning module (111) being operable to selectively turn light traversing a first set of turning subareas (137,139,140,142) and to pass unturned light of a second set of turning subareas (138,141,143), said first and second light-turning subareas (137,138,139,140,141,142,143) being of variable size and position commandable by said controller (135,179), such that uniformly polarized light emanating from said first display (1), having traversed said first light turning module (111), is of said alternatingly polarized format.

9. The system of claim 8, wherein said first light turning module (111) is operable to generate first light-turning subareas (137,139,140,142) turning light N degrees and second light-turning subareas (138,141,143) turning light M degrees, N being substantially 90° from M, said first subareas (137,139,140,142) alternating with said second (138,141,143) subareas across said light turning module (111), said light turning module (111) being operable to size and position said subareas (137,138,139,140,141,142,143) under command of said controller (135,179).

10. The system of claim 9, wherein said display (1) is a liquid crystal display.

11. The system of claim 8, operable to present said first image simultaneously and all pixels of said display (1).

12. The system of claim 1, wherein said selective light-blocking layer (115) comprises a second uniform polarizing filter (113) and a second light turning module (112), said second light turning module (112) being positioned between said second uniform polarizing filter (113) and said image generator (1,114), said second light turning module (112) being operable to generate third light-turning subareas (152,153) turning light P degrees and fourth light-turning subareas (154,155) turning light Q degrees, P being substantially 90° from Q, said third subareas (152,153) alternating with said fourth subareas (154,155) across said second light turning module (112), said second light turning module (112) being operable to size and position said subareas (152,153,154,155) under command of said controller (135, 179).

13. The system of claim 1, wherein said image subareas (58,59,140,141,142,143) are of fixed size and position and said blocker subareas (58,59,152,153,154,155) are of variable size and position.

14. The system of claim 1, wherein said image subareas (58,59,140,141,142,143) are of variable size and position and said blocker subareas (58,59,152,153,154,155) are of fixed size and position.

15. The system of claim 1, wherein said image subareas (58,59,140,141,142,143) are of variable size and position and said blocker subareas (58,59,152,153,154,155) are of variable size and position.

16. The system of claim 1, wherein said image generator (1,57,114) is operable to alternate generation of said first image of said stereoscopic image pair with generation of a second image of said stereoscopic image pair.

17. The system of claim 1, further comprising a uniform light turning module (80) positioned between said image generator (1,57,114) and said blocker (56,115), operable to switch between a first mode wherein a viewer's left eye (54,55) is said first eye (54,55), and a second mode wherein a viewer's right eye (55,54) is said first eye (54,55), for a given set of positions of said first image subareas (58,59,140,141,142,143) and of said blocker subareas (58,59,152,153,154,155).

## Patentansprüche

1. System, um einem ersten Auge (54, 55) eines Betrachters zu ermöglichen ein erstes stereoskopisches Bild, welches aus einem Paar von stereoskopischen Bildern gewählt ist, zu betrachten, während ein zweites Auge (55, 54) des Betrachters davon abgehalten wird, das erste Bild zu betrachten, wobei das System an sich verändernde Positionen des Betrachters anpassbar ist, umfassend:
a) einen Bildgenerator (1, 57, 114), der betreibbar ist, um das erste Bild in einem alternierend polarisierten Format darzubieten, wobei das Format erste Bilduntergebiete (58, 141, 143) des ersten Bilds polarisiert in einer ersten Orientierung und zweite Bilduntergebiete (59, 140, 142) des ersten Bild polarisiert in einer zweiten Orientierung orthogonal zu der ersten Orientierung umfasst, wobei sich die ersten Bilduntergebiete (58, 141, 143) mit den zweiten Bilduntergebieten (59, 140, 142) über dem dargebotenen ersten Bild abwechseln, und
b) eine selektive Bildabblockeinheit (56, 115), die zwischen dem Betrachter und dem Bildgenerator (1, 57, 114) und näher zu dem Bildgenerator (1, 57, 114) als zu dem Betrachter positioniert ist, wobei die Bildabblockungseinheit (56, 155) betreibbar ist, um erste selektive Abblockungsuntergebiete (59, 152, 153) alternierend mit zweiten selektiven Abblockungsuntergebieten (58, 154, 155) über der Bildabblockungseinheit (56, 115) darzubieten, wobei die ersten selektiven Abblockungsuntergebiete (59, 152, 153) Licht, welches in der ersten Orientierung polarisiert ist, abblocken und Licht, welches in der zweiten Orientierung polarisiert ist, durchlassen, wobei die zweiten selektiven Abblockungsuntergebiete (58, 154, 155) Licht, das in der zweiten Orientierung polarisiert ist, abblocken, und Licht, welches in der ersten Orientierung polarisiert ist, durchlassen, wobei sich die ersten und zweiten Abblockungsuntergebiete (58, 59, 152, 153, 154, 155) über der Bildabblockungseinheit (56, 115) abwechseln,
c) einen Augennachverfolgungs-Controller (135, 179), der betreibbar ist, um Abstände und Positionen der Augen (54, 55) des Betrachters in Bezug auf den Generator (1, 57, 114) zu erfassen, und wobei die Abblockungseinheit (56, 115) weiter betreibbar ist, um geeignete Größen und Positionen der ersten und zweiten Bilduntergebiete (58, 59, 140, 141, 142, 143), die durch den Generator (1, 57, 114) dargeboten werden sollen, zu berechnen und um dem Generator (1, 57, 114) zu befehlen, die ersten und zweiten Bilduntergebiete (58, 59, 140, 141, 142, 143) an den berechneten Positionen darzubieten, und ferner betreibbar ist, um geeignete Größen und Positionen der ersten und zweiten Abblockungsuntergebiete (58, 59, 152, 153, 154, 155) zu berechnen, die durch die Bildabblockungseinheit (56, 115) dargeboten werden sollen, und um der Abblockungseinheit (56, 115) zu befehlen, die ersten und zweiten Abblockungsuntergebiete (58, 59, 152, 153, 154, 155) an den berechneten Positionen darzubieten, wobei die Berechnungen auf den Augenpositionen basieren, die durch ein Augennachverfolgungsmodul (180, 181) erfasst werden, so dass dann, wenn der Generator (1, 57, 114) die ersten und zweiten Bilduntergebiete (58, 59, 140, 141, 142, 143) in den geeigneten Größen und Positionen darbietet und die Bildabblockungseinheit (56, 115) die ersten und zweiten Abblockungsuntergebiete (58, 59, 152, 153, 154, 155) in den geeigneten Größen und Positionen darbietet, dem ersten Auge (54, 55) des Betrachters ermöglicht wird das erste Bild zu betrachten und das zweite Auge (55, 54) des Betrachters von einer Betrachtung des ersten Bilds abgeblockt wird, für eine Vielfalt von Positionen der Augen (54, 55) des Betrachters.

2. System nach Anspruch 1, wobei die ersten und zweiten Bilduntergebiete (58, 59, 140, 141, 142, 143) und die ersten und zweiten Abblockungsuntergebiete (58, 59, 152, 153, 154, 155) als Streifen gebildet sind.

3. System nach Anspruch 2, wobei die Streifen als vertikale Streifen gebildet sind.

4. System nach Anspruch 1, wobei der Bildgenerator (1, 57, 114) eine Anzeige (1) umfasst, die betreibbar ist, um das erste Bild in einem nicht polarisierten Format anzuzeigen, und ferner ein Lichtpolarisationsmodul (114) umfasst, das betreibbar ist, um Licht des ersten Bilds in dem alternierend polarisierten Format zu polarisieren, wobei die ersten und zweiten Bereiche des erzeugten Bilds verschiedene Größen und Positionen, die durch den Controller (135, 179) befohlen werden können, aufweisen.

5. System nach Anspruch 4, wobei das Lichtpolarisationsmodul (114) einen gleichförmigen Polarisator (110) und ein erstes Lichtdrehungsmodul (111) umfasst, wobei das Lichtdrehungsmodul (111) eine schaltbare Lichtrotationseinrichtung, aufgeteilt in eine Vielzahl von unabhängig schaltbaren Elementen (116-133), umfasst, wobei der gleichförmige Polarisator (110) zwischen dem ersten Lichtdrehungsmodul (111) und der Anzeige (1) positioniert ist, wobei das erste Lichtdrehungsmodul (111) betreibbar ist, um erste (140, 142, 137, 139) und zweite (141, 143, 138) Lichtdrehungsuntergebiete darzubieten, wobei die ersten (140, 142, 137, 139) und zweiten (141, 143, 138) Lichtdrehungsuntergebiete eine variable Größe und Position, die durch den Controller (135, 179) befohlen werden können, aufweisen, so dass von dem gleichförmigen Polarisator (110) ausgehendes gleichförmig polarisiertes Licht, das das erste Lichtdrehungsmodul (111) durchquert hat, das alternierend polarisierte Format aufweist.

6. System nach Anspruch 5, wobei die Anzeige (1) eine Kathodenstrahlröhre ist.

7. System nach Anspruch 5, welches betreibbar ist, um das erste Bild gleichzeitig auf sämtlichen Pixeln der Anzeige (1) darzubieten.

8. System nach Anspruch 1, wobei der Bildgenerator (1, 114) eine Anzeige (1) umfasst, die betreibbar ist, um das erste Bild in einem gleichförmig polarisierten Format anzuzeigen, und ferner ein erstes Lichtdrehungsmodul (111) umfasst, wobei das Lichtdrehungsmodul (111) eine schaltbare Lichtrotationseinrichtung, aufgeteilt in eine Vielzahl von unabhängig schaltbaren Elementen (116-133), umfasst, wobei das Lichtdrehungsmodul (111) betreibbar ist, um Licht, welches durch einen ersten Satz von Drehungsuntergebieten (137, 139, 140, 142) geht, selektiv zu drehen und nicht-gedrehtes Licht eines zweiten Satzes von Drehungsuntergebieten (138, 141, 143) durchzulassen, wobei die ersten und zweiten Lichtdrehungsuntergebiete (137, 138, 139, 140, 141, 142, 143) eine variable Größe und Position, die durch den Controller (135, 179) befohlen werden können, aufweisen, so dass von der Anzeige (1) ausgehendes gleichförmig polarisiertes Licht, nachdem es durch das erste Lichtdrehungsmodul (111) gegangen ist, das alternierend polarisierte Format aufweist.

9. System nach Anspruch 8, wobei das erste Lichtdrehungsmodul (111) betreibbar ist, um erste Lichtdrehungsuntergebiete (137, 139, 140, 142), die Licht um N Grad drehen, und zweite Lichtdrehungsuntergebiete (138, 141, 143), die Licht um M Grad drehen, wobei N im wesentlichen 90° von M ist, zu erzeugen, wobei sich die ersten Untergebiete (137, 139, 140, 142) mit den zweiten (138, 141, 143) Untergebieten über dem Lichtdrehungsmodul (111) abwechseln, wobei das Lichtdrehungsmodul (111) betreibbar ist, um Größe und Position der Untergebiete (137, 138, 139, 140, 141, 142, 143) unter dem Befehl des Controllers (135, 179) einzustellen.

10. System nach Anspruch 9, wobei die Anzeige (1) eine Flüssigkristallanzeige ist.

11. System nach Anspruch 8, welches betreibbar ist, um das erste Bild gleichzeitig auf sämtlichen Pixeln der Anzeige (1) darzubieten.

12. System nach Anspruch 1, wobei die selektive Lichtabblockungsschicht (115) ein zweites gleichförmiges Polarisationsfilter (113) und ein zweites Lichtdrehungsmodul (112) umfasst, wobei das zweite Lichtdrehungsmodul (112) zwischen dem zweiten gleichförmigen Polarisationsfilter (113) und dem Bildgenerator (1, 114) positioniert ist, wobei das zweite Lichtdrehungsmodul (112) betreibbar ist, um dritte Lichtdrehungsuntergebiete (152, 153), die Licht um P Grad drehen, und vierte Lichtdrehungsuntergebiete (154, 155), die Licht um Q Grad drehen, wobei P im wesentlichen 90° von Q ist, zu erzeugen, wobei sich die dritten Untergebiete (152, 153) mit den vierten Untergebieten (154, 155) über das zweite Lichtdrehungsmodul (112) abwechseln, wobei das zweite Lichtdrehungsmodul (112) betreibbar ist, um die Größe und Position der Untergebiete (152, 153, 154, 155) unter dem Befehl des Controllers (135, 179) einzustellen.

13. System nach Anspruch 1, wobei die Bilduntergebiete (58, 59, 140, 141, 142, 143) von fester Größe und Position sind und die Abblockungseinheit-Untergehiete (58, 59, 152, 153, 154, 155) von variabler Größe und Position sind.

14. System nach Anspruch 1, wobei die Bild-Untergebiete (58, 59, 140, 141, 142, 143) von variabler Größe und Position sind und die Abblockungseinheit-Untergebiete (58, 59, 152, 153, 154, 155) von fester Größe und Position sind.

15. System nach Anspruch 1, wobei die Bild-Untergebiete (58, 59, 140, 141, 142, 143) von variabler Größe und Position sind und die Abblockungseinheit-Untergebiete (58, 59, 152, 153, 154, 155) von variabler Größe und Position sind.

16. System nach Anspruch 1, wobei der Bildgenerator (1, 57, 114) betreibbar ist, um eine Erzeugung des ersten Bilds des stereoskopischen Bildpaars mit einer Erzeugung eines zweiten Bilds des stereoskopischen Bildpaars abzuwechseln.

17. System nach Anspruch 1, ferner umfassend ein gleichförmiges Lichtdrehungsmodul (80), welches zwischen dem Bildgenerator (1, 57, 114) und der Abblockungseinheit (56, 115) positioniert ist, betreibbar, um zwischen einem ersten Modus, bei dem das linke Auge (54, 55) des Betrachters das erste Auge (54, 55) ist, und einem zweiten Modus, bei dem das rechte Auge (55, 54) des Betrachters das erste Auge (54, 55) ist, umzuschalten, für einen gegebenen Satz von Positionen der ersten Bilduntergebiete (58, 59, 140, 141, 142, 143) und der Abblockungseinheit-Untergebiete (58, 59, 152, 153, 154, 155).

## Revendications

1. Système pour permettre qu'un premier oeil (54, 55) d'un observateur visualise une première image stéréoscopique qui est sélectionnée à partir d'une paire d'images stéréoscopiques tout en empêchant qu'un second oeil (55, 54) dudit observateur ne visualise ladite première image, lequel système peut être adapté vis-à-vis de positions qui varient dudit observateur, comprenant:
a) un générateur d'image (1, 57, 114) pouvant fonctionner pour présenter ladite première image selon un format polarisé en alternance, ledit format comprenant des premières sous-zones d'image (58, 141, 143) de ladite première image polarisée selon une première orientation et des secondes sous-zones d'image (59, 140, 142) de ladite première image polarisée selon une seconde orientation qui est orthogonale à ladite première orientation, lesdites premières sous-zones d'image (58, 141, 143) étant en alternance avec lesdites secondes sous-zones d'image (59, 140, 142) à travers ladite première image présentée;
b) un dispositif de blocage d'image sélectif (56, 115), qui est positionné entre ledit observateur et ledit générateur d'image (1, 57, 114) et plus près dudit générateur d'image (1, 57, 114) que dudit observateur, ledit dispositif de blocage d'image (56, 115) pouvant fonctionner pour présenter des premières sous-zones de blocage sélectif (59, 152, 153) en alternance avec des secondes sous-zones de blocage sélectif (58, 154, 155) sur ledit dispositif de blocage d'image (56, 115), lesdites premières sous-zones de blocage sélectif (59, 152, 153) bloquant une lumière qui est polarisée suivant ladite première orientation et laissant passer une lumière qui est polarisée suivant ladite seconde orientation, lesdites secondes sous-zones de blocage sélectif (58, 154, 155) bloquant une lumière polarisée selon ladite seconde orientation et laissant passer une lumière polarisée selon ladite première orientation, lesdites premières et secondes sous-zones de blocage (58, 59, 152, 153, 154, 155) étant en alternance sur ledit dispositif de blocage d'image (56, 115); et
c) un contrôleur de suivi d'oeil (135, 179) pouvant fonctionner pour détecter des distances et des positions desdits yeux (54, 55) dudit observateur par rapport audit générateur (1, 57, 114) et audit dispositif de blocage (56, 115), pouvant en outre fonctionner pour calculer des dimensions et des positions appropriées desdites premières et secondes sous-zones d'image (58, 59, 140, 141, 142, 143) destinées à être présentées par ledit générateur (1, 57, 114) et pour commander ledit générateur (1, 57, 114) pour présenter lesdites premières et secondes sous-zones d'image (58, 59, 140, 141, 142, 143) au niveau desdites positions calculées, et pouvant en outre fonctionner pour calculer des dimensions et des positions appropriées desdites premières et secondes sous-zones de blocage (58, 59, 152, 153, 154, 155) destinées à être présentées par ledit dispositif de blocage d'image (56, 115) et pour commander ledit dispositif de blocage d'image (56, 115) pour présenter lesdites premières et secondes sous-zones de blocage (58, 59, 152, 153, 154, 155) auxdites positions calculées, lesdits calculs étant basés sur lesdites positions d'oeil détectées par un module de suivi d'oeil (180, 181) de telle sorte que lorsque ledit générateur (1, 57, 114) présente lesdites premières et secondes sous-zones d'image (58, 59, 140, 141, 142, 143) selon lesdites dimensions et positions appropriées et que ledit dispositif de blocage d'image (56, 115) présente lesdites premières et secondes sous-zones de blocage (58, 59, 152, 153, 154, 155) selon lesdites dimensions et positions appropriées, ledit premier oeil d'observateur (54, 55) puisse visualiser ladite première image et ledit second oeil d'observateur (55, 54) soit empêché par blocage de visualiser ladite première image pour une certaine variété de positions desdits yeux (54, 55) dudit observateur.

2. Système selon la revendication 1, dans lequel lesdites premières et secondes sous-zones d'image (58, 59, 140, 141, 142, 143) et lesdites premières et secondes sous-zones de blocage (58, 59, 152, 153, 154, 155) sont formées en tant que bandes.

3. Système selon la revendication 2, dans lequel lesdites bandes sont formées en tant que bandes verticales.

4. Système selon la revendication 1, dans lequel ledit générateur d'image (1, 57, 114) comprend un affichage (1) pouvant fonctionner pour afficher ladite première image selon un format non polarisé et comprend en outre un module de polarisation de lumière (114) pouvant fonctionner pour polariser une lumière de ladite première image selon ledit format polarisé en alternance, lesdites première et seconde régions de ladite image générée étant de dimensions et de positions variables pouvant être commandées par ledit contrôleur (135, 179).

5. Système selon la revendication 4, dans lequel ledit module de polarisation de lumière (114) comprend un polariseur uniforme (110) et un premier module de rotation de lumière (111), lequel module de rotation de lumière (111) comprend un moyen de rotation de lumière commutable qui est divisé selon une pluralité d'éléments commutables de façon indépendante (116-133), ledit polariseur uniforme (110) étant positionné entre ledit premier module de rotation de lumière (111) et ledit affichage (1), ledit premier module de rotation de lumière (111) pouvant fonctionner pour présenter des premières (140, 142, 137, 139) et secondes (141, 143, 138) sous-zones de rotation de lumière, lesdites premières (140, 142, 137, 139) et secondes (141, 143, 138) sous-zones de rotation de lumière étant d'une dimension et d'une position variables pouvant être commandées par ledit contrôleur (135, 179) de telle sorte qu'une lumière polarisée de façon uniforme qui émane dudit polariseur uniforme (110), laquelle lumière a traversé ledit premier module de rotation de lumière (111), soit dudit format polarisé en alternance.

6. Système selon la revendication 5, dans lequel ledit affichage (1) est un CRT.

7. Système selon la revendication 5, pouvant fonctionner pour présenter ladite première image simultanément sur tous les pixels dudit affichage (1).

8. Système selon la revendication 1, dans lequel ledit générateur d'image (1, 114) comprend un affichage (1) pouvant fonctionner pour afficher ladite première image selon un format polarisé de façon uniforme et comprend en outre un premier module de rotation de lumière (111), lequel module de rotation de lumière (111) comprend un moyen de rotation de lumière commutable qui est divisé selon une pluralité d'éléments commutables de façon indépendante (116-133), ledit module de rotation de lumière (111) pouvant fonctionner pour tourner de façon sélective une lumière qui traverse un premier jeu de sous-zones de rotation (137, 139, 140, 142) et de manière à laisser passer une lumière non tournée d'un second jeu de sous-zones de rotation (138, 141, 143), lesdites premières et secondes sous-zones de rotation de lumière (137, 138, 139, 140, 141, 142, 143) étant d'une dimension et d'une position variables pouvant être commandées par ledit contrôleur (135, 179) de telle sorte qu'une lumière polarisée de façon uniforme qui émane dudit premier affichage (1), laquelle lumière a traversé ledit premier module de rotation de lumière (111), soit dudit format polarisé en alternance.

9. Système selon la revendication 8, dans lequel ledit premier module de rotation de lumière (111) peut fonctionner pour générer des premières sous-zones de rotation de lumière (137, 139, 140, 142) qui tournent une lumière de N degrés et des secondes sous-zones de rotation de lumière (138, 141, 143) qui tournent une lumière de M degrés, N étant sensiblement à 90° par rapport à M, lesdites premières sous-zones (137, 139, 140, 142) étant en alternance avec lesdites secondes sous-zones (138, 141, 143) sur ledit module de rotation de lumière (111), ledit module de rotation de lumière (111) pouvant fonctionner pour dimensionner et positionner lesdites sous-zones (137, 138, 139, 140, 141, 142, 143) sous la commande dudit contrôleur (135, 179).

10. Système selon la revendication 9, dans lequel ledit affichage (1) est un affichage à cristaux liquides.

11. Système selon la revendication 8, pouvant fonctionner pour présenter ladite première image simultanément sur tous les pixels dudit affichage (1).

12. Système selon la revendication 1, dans lequel ladite couche de blocage de lumière sélectif (115) comprend un second filtre de polarisation uniforme (113) et un second module de rotation de lumière (112), ledit second module de rotation de lumière (112) étant positionné entre ledit second filtre de polarisation uniforme (113) et ledit générateur d'image (1, 114), ledit second module de rotation de lumière (112) pouvant fonctionner pour générer des troisièmes sous-zones de rotation de lumière (152, 153) en tournant la lumière de P degrés et des quatrièmes sous-zones de rotation de lumière (154, 155) en tournant la lumière de Q degrés, P étant sensiblement à 90° par rapport à Q, lesdites troisièmes sous-zones (152, 153) étant en alternance avec lesdites quatrièmes sous-zones (154, 155) sur ledit second module de rotation de lumière (112), ledit second module de rotation de lumière (112) pouvant fonctionner pour dimensionner et positionner lesdites sous-zones (152, 153, 154, 155) sous la commande dudit contrôleur (135,179).

13. Système selon la revendication 1, dans lequel lesdites sous-zones d'image (58, 59, 140, 141, 142, 143) sont d'une dimension et d'une position fixes et lesdites sous-zones de dispositif de blocage (58, 59, 152, 153, 154, 155) sont d'une dimension et d'une position variables.

14. Système selon la revendication 1, dans lesquels lesdites sous-zones d'image (58, 59, 140, 141, 142, 143) sont d'une dimension et d'une position variables et lesdites sous-zones de dispositif de blocage (58, 59, 152, 153, 154, 155) sont d'une dimension et d'une position fixes.

15. Système selon la revendication 1, dans lequel lesdites sous-zones d'image (58, 59, 140, 141, 142, 143) sont d'une dimension et d'une position variables et lesdites sous-zones de dispositif de blocage (58, 59, 152, 153, 154, 155) sont d'une dimension et d'une position variables.

16. Système selon la revendication 1, dans lequel ledit générateur d'image (1, 57, 114) peut fonctionner pour alterner une génération de ladite première image de ladite paire d'images stéréoscopiques avec la génération d'une seconde image de ladite paire d'images stéréoscopiques.

17. Système selon la revendication 1, comprenant en outre un module de rotation de lumière uniforme (80) qui est positionné entre ledit générateur d'image (1, 57, 114) et ledit dispositif de blocage (56, 115), pouvant fonctionner pour réaliser une commutation entre un premier mode dans lequel un oeil gauche d'observateur (54, 55) est ledit premier oeil (54, 55) et un second mode dans lequel un oeil droit d'observateur (55, 54) est ledit premier oeil (54, 55) pour un jeu donné de positions desdites premières sous-zones d'image (58, 59, 140, 141, 142, 143) et desdites sous-zones de dispositif de blocage (58, 59, 152, 153, 154, 155).
